(19) Europäisches Patentamt / European Patent Office / Office européen des brevets

(11) **EP 3 672 088 B1**

(12) **FASCICULE DE BREVET EUROPEEN**

(45) Date de publication et mention
de la délivrance du brevet:
**19.10.2022 Bulletin 2022/42**

(21) Numéro de dépôt: **19218096.6**

(22) Date de dépôt: **19.12.2019**

(51) Classification Internationale des Brevets (IPC):
***H04B 1/12*** *(2006.01)*

(52) Classification Coopérative des Brevets (CPC):
**H04B 1/12**

(54) **INTERFÉROMÈTRE BIPOLARISATION NUMÉRIQUE À SOUS-ÉCHANTILLONNAGE**

BIPOLARISIERTES DIGITALES INTERFEROMETER MIT UNTERABTASTUNG

DIGITAL BI-POLARISATION INTERFEROMETER WITH SUB-SAMPLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873917**

(43) Date de publication de la demande:
**24.06.2020 Bulletin 2020/26**

(73) Titulaire: **Thales**
**92400 Courbevoie (FR)**

(72) Inventeur: **LE MEUR, Anne**
**78851 ELANCOURT (FR)**

(74) Mandataire: **Lavoix**
**2, place d'Estienne d'Orves**
**75441 Paris Cedex 09 (FR)**

(56) Documents cités:
**EP-A2- 2 280 497    US-A1- 2006 017 604**

• **GAO ZHEN ET AL: "Compressive Sensing Techniques for Next-Generation Wireless Communications", TECHNICAL REPORT OF WIRELESS NETWORKING GROUP, COORDINATED SCIENCE LABORATORY; DEPT. ELECTRICAL AND COMPUTER ENGINEERING; UNIVERSITY OF ILLINOIS AT URBANA-CHAMPAIGN, US, vol. 25, no. 3, 1 juin 2018 (2018-06-01), pages 144-153, XP011686656, ISSN: 1536-1284, DOI: 10.1109/MWC.2017.1700147 [extrait le 2018-07-04]**

**Description**

DOMAINE DE L'INVENTION

La présente invention concerne un procédé de détermination de la situation de parasitage d'un signal dans un interféromètre bipolarisation à réception numérique sous-échantillonnée. La présente invention se rapporte également à un produit programme d'ordinateur, un support d'informations et un interféromètre associés.

ARRIÈRE-PLAN TECHNOLOGIQUE

L'invention concerne le domaine de la réception large bande de signaux électromagnétiques. Plus précisément, la présente invention se rapporte à un récepteur bipolarisation à réception numérique sous-échantillonnée.

Ces dispositifs sont des interféromètres, c'est-à-dire des goniomètres basés sur la perception d'un signal radioélectrique incident par un ensemble d'antennes à diversité d'espace.

Les signaux d'intérêt pour ces dispositifs se trouvant à des fréquences porteuses très variées, la bande de fréquence à recevoir est très élevée.

Echantillonner cette bande en respectant le critère de Shannon s'avère difficile car cela implique des composants de conversion analogiques numériques ultra rapides, qui ne satisfont pas les contraintes de poids / volume / consommation, quand lesdits composants ne sont pas complètement inaccessibles avec les technologies actuelles pour les largeurs de bande que l'on cherche à traiter. De plus, si de tels composants existaient, ils généreraient un flux de données numériques qui serait incompatible avec les débits des bus de transfert de données et avec les capacités de traitement des calculateurs actuels utilisés pour réaliser les modules de traitement numérique du signal.

Pour résoudre ce problème, on utilise un récepteur numérique d'un genre nouveau effectuant plusieurs échantillonnages à des fréquences d'échantillonnage très inférieures à la fréquence de Nyquist (égale au double de la bande de fréquence pour des signaux réels).

Ce sous-échantillonnage a l'avantage de lever les contraintes sur la conversion analogique numérique, mais provoque le repliement de la bande de réception dans la bande de Nyquist de travail. Une fréquence mesurée dans cette zone de Nyquist est donc ambiguë : un choix judicieux du nombre et des valeurs des fréquences d'échantillonnage permet de lever ces ambiguïtés.

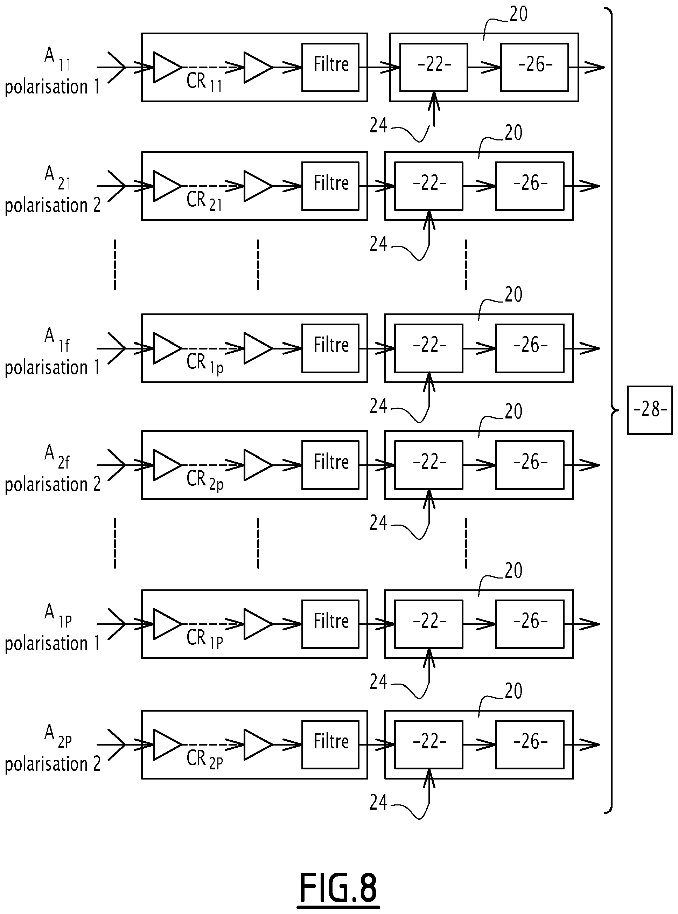

Une autre conséquence du repliement est que deux (ou plus) signaux présents en même temps à des fréquences différentes dans la bande de réception peuvent se retrouver à des fréquences identiques ou proches dans la zone de Nyquist de travail. Cette situation de mélange est appelée parasitage. La figure 8 illustre ce problème. Cela se produit lorsque deux signaux simultanés ont des fréquences porteuses dont la différence ou la somme est un multiple d'une des fréquences d'échantillonnage.

Dans la suite, lorsqu'on examinera une fréquence donnée dans la bande de réception, un signal d'intérêt présent à cette fréquence sera appelé signal utile. Un éventuel signal simultané présent à une fréquence dont la somme ou la différence avec la fréquence du signal utile est un multiple d'une des fréquences d'échantillonnage sera appelé signal parasite. Lorsque la fréquence du signal parasite sera examinée à son tour, le signal parasite deviendra signal utile, et le signal précédemment appelé signal utile sera considéré comme un signal parasite.

Ces mélanges dus au repliement spectral rendent difficiles l'élaboration d'un test de détection (présence ou absence de signal utile), dont la fausse alarme doit être maîtrisée. De plus, le signal résultant du mélange d'un signal utile avec un parasite non détecté sera mal caractérisé, ce qui peut fausser les pistes attendues, voire créer de fausses pistes. Ces mélanges ne peuvent pas être négligés, d'autant plus qu'ils sont beaucoup plus fréquents que les vrais mélanges dans la bande de réception.

Il est également connu un procédé de traitement de signaux du document EP 2 280 497 A2.

RESUME DE L'INVENTION

Il existe donc un besoin pour un procédé permettant de détecter les situations de parasitage dans un récepteur numérique à sous-échantillonnage.

À cet effet, la présente description porte sur un procédé de détermination selon la revendication 1.

Selon des modes de réalisation particuliers, le procédé présente une ou plusieurs des caractéristiques des revendications 2 à 6, prise(s) isolément ou selon toutes les combinaisons techniquement possibles.

La présente description porte aussi sur un produit programme d'ordinateur selon la revendication 7.

La présente description concerne également un support lisible d'informations selon la revendication 8.

La présente description concerne également un réseau interférométrique selon la revendication 9.

BRÈVE DESCRIPTION DES DESSINS

Des caractéristiques et avantages de l'invention apparaîtront à la lecture de la description qui va suivre, donnée uniquement à titre d'exemple non limitatif, et faite en référence aux dessins annexés, pour lesquels :

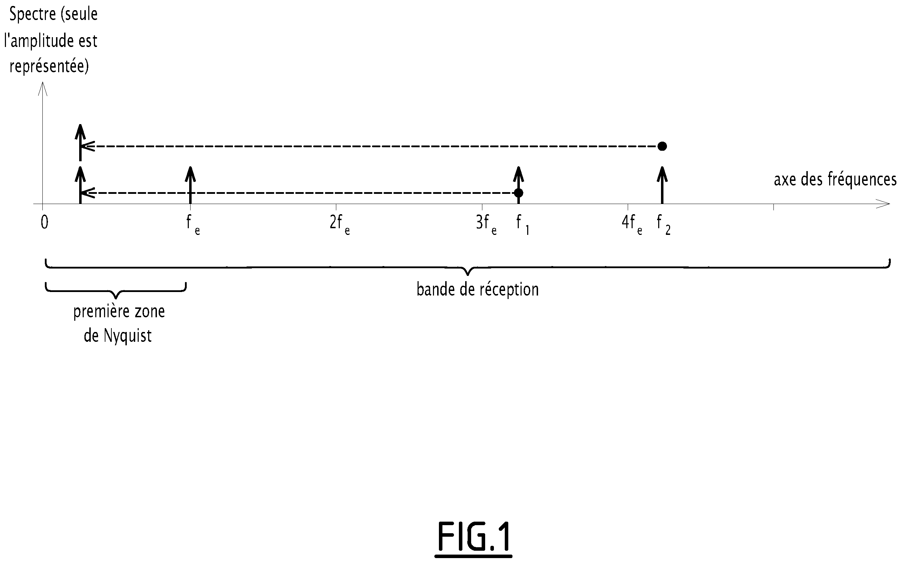

- [Fig 1] la figure 1 est une illustration du problème du parasitage posé ;
- [Fig 2] la figure 2 est une vue schématique d'un exemple d'interféromètre comportant un calculateur ;
- [Fig 3] la figure 3 est une représentation graphique d'un exemple de grille temps/fréquence ;
- [Fig 4] la figure 4 est une représentation du signal utile dans une grille temps/fréquence ;
- [Fig 5] la figure 5 est une représentation schématique de deux grilles temps/fréquence associées à deux fréquences d'échantillonnage différentes, et contenant un même signal incident ;

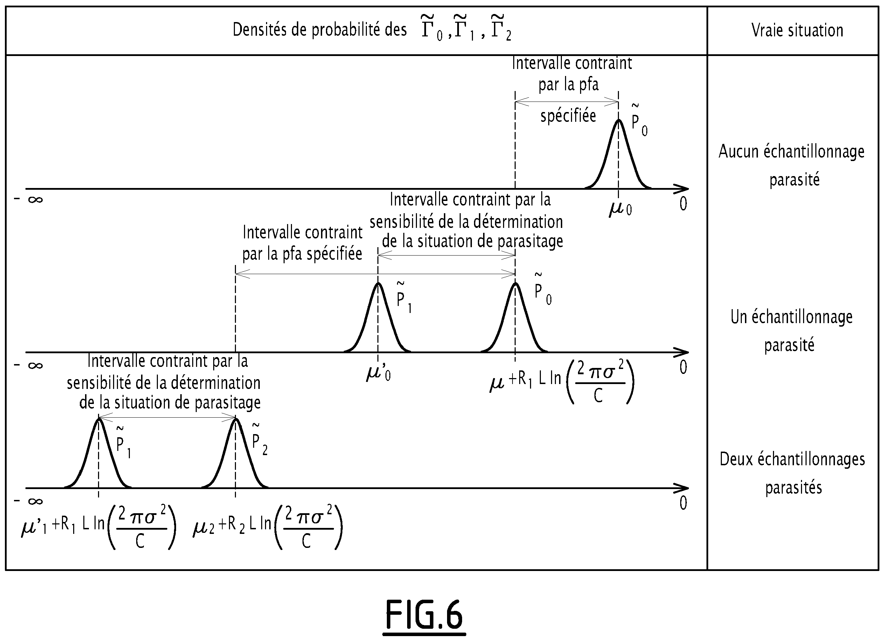

- [Fig 6] la figure 6 est une illustration d'un exemple de mise en œuvre d'une des étapes du procédé de détermination de la situation de parasitage,

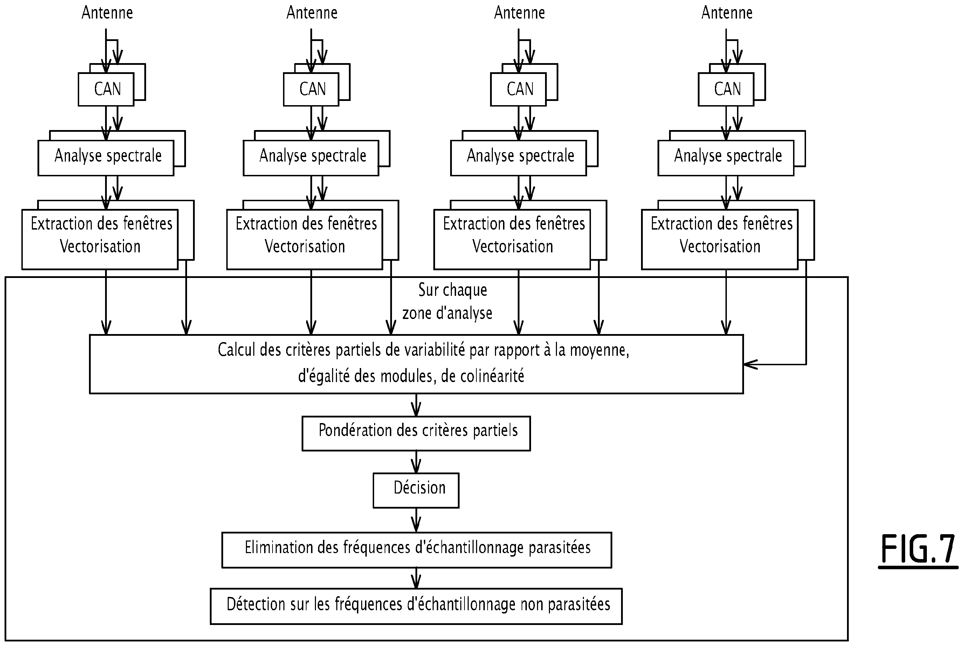

- [Fig 7] la figure 7 est une illustration d'un exemple de mise en œuvre des étapes du procédé,
- [Fig 8] la figure 8 est une vue schématique d'un interféromètre bipolarisation comportant un calculateur ;
- [Fig 9] la figure 9 est une représentation graphique des deux grilles temps/fréquence associées à l'antenne $p$ dans les deux sous-réseaux et à la fréquence d'échantillonnage $fe_m$ ;
- [Fig 10] la figure 10 est une représentation d'un signal utile dans les deux grilles temps/fréquence associées à l'antenne $p$ dans les deux sous-réseaux et à la fréquence d'échantillonnage $fe_m$ ;
- [Fig 11] la figure 11 est une représentation schématique des quatre grilles temps/fréquence associées à l'antenne $p$ dans les deux sous-réseaux et aux deux fréquences d'échantillonnages $fe_{m_1}$ et $fe_{m_2}$ , contenant un même signal incident, et

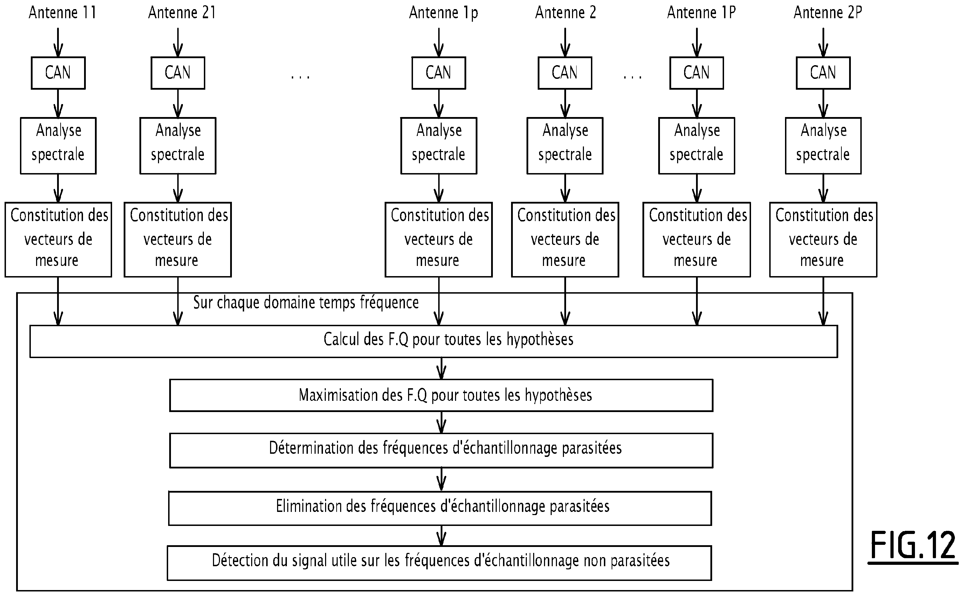

- [Fig 12] la figure 12 est une illustration d'un exemple de mise en œuvre des étapes du procédé pour le cas de l'interféromètre bipolarisation de la figure 8.

DESCRIPTION DE MODES DE RÉALISATION DE L'INVENTION

Les modes de réalisation vont être décrits selon deux modalités qui sont détaillées dans ce qui suit, à savoir un cas monopolarisation et un cas bipolarisation. Bien que de nombreuses similitudes existent entre les deux cas, pour simplifier la lecture, les deux cas seront traités de manière largement indépendante.

DESCRIPTION DE MODES DE RÉALISATION DE L'INVENTION

Les modes de réalisation vont être décrits selon deux modalités qui sont détaillées dans ce qui suit, à savoir un cas monopolarisation et un cas bipolarisation. Bien que de nombreuses similitudes existent entre les deux cas, pour simplifier la lecture, les deux cas seront traités de manière largement indépendante.

CAS MONOPOLARISATION

Avant de décrire plus précisément plusieurs modes de réalisation de manière détaillée, il est expliqué rapidement la démarche inventive suivie par le demandeur en partant d'abord du besoin.

Un besoin est de disposer d'une fonction de détection enrichie, permettant de déterminer non seulement s'il y a présence ou absence de signal utile à une fréquence donnée, mais aussi dans quelle situation de parasitage on se trouve (absence de parasites, ou présence de parasites, et quelles sont les fréquences d'échantillonnages), avec le moins d'erreur possible. Dans le cas où le nombre de fréquences d'échantillonnages parasitées est égal à $M$, et le nombre de fréquences d'échantillonnage est strictement supérieur à $M$-2, on cherchera seulement à savoir qu'on se trouve dans cette situation (sans chercher à savoir quelles sont les voies parasitées), également avec le moins d'erreur possible.

Cela permettra d'améliorer les performances de la détection elle-même, mais aussi des autres fonctions de la chaîne de traitement (estimation de la direction d'arrivée, caractérisation du signal). Un autre avantage est que cela permettra d'utiliser des composants de conversion analogique-numérique fonctionnant à des fréquences plus faibles que la fréquence de Nyquist, tout en minimisant les effets du repliement spectral.

La littérature qui traite de la détection suppose en général que le signal reçu est seul dans son environnement, et n'aborde pas la problématique du parasitage, c'est-à-dire des interférences entre signaux dues au repliement spectral.

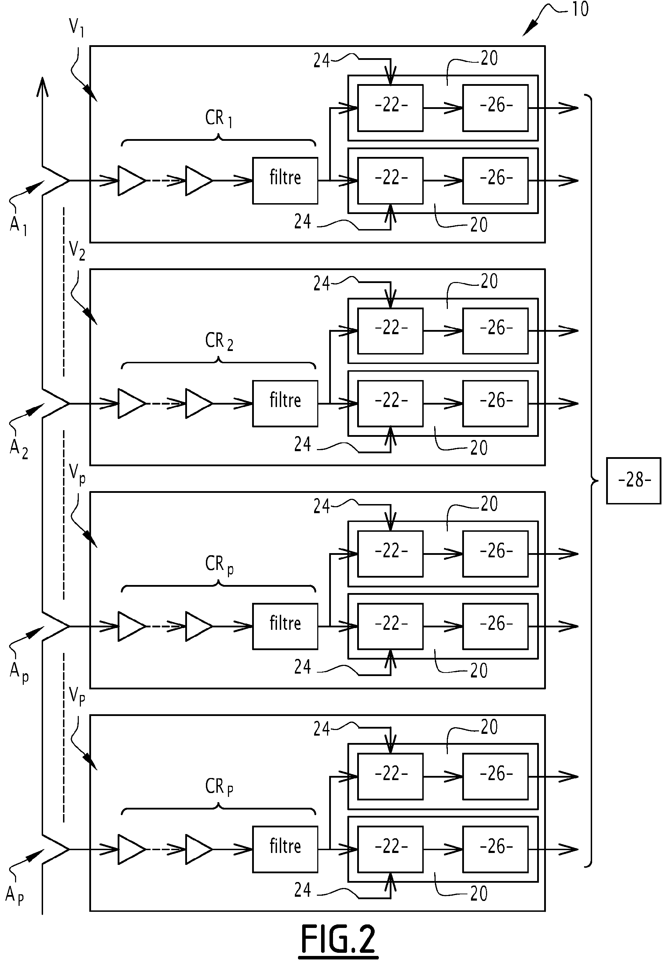

Il est proposé d'utiliser l'architecture du récepteur présenté à la figure 2, dans le cas général de plusieurs fréquences d'échantillonnage par antenne.

Cette architecture est celle d'un interféromètre à large bande instantanée, à réception numérique à sous-échantillonnage. L'interféromètre est constitué de $P$ antennes très large bande ; chacune de ces antennes est connectée à l'entrée d'une chaîne de réception large bande instantanée, réalisée de manière analogique. Chaque chaîne de réception analogique délivre en sortie son signal à au moins un module de réception numérique, constitué d'un module de conversion analogique-numérique suivi d'un module de traitement numérique du signal apte à effectuer une analyse spectrale. L'ensemble des modules de conversion analogique-numérique utilise un ensemble de $M$ fréquences d'échantillonnage différentes et inférieures à la fréquence de Nyquist. Une même fréquence d'échantillonnage peut être utilisée plusieurs fois, mais nécessairement en association avec des modules de conversion analogique-numérique correspondant à des antennes différentes.

Il est appelé voie de réception l'ensemble formé par un module de réception numérique et la chaîne de réception analogique à laquelle il est associé.

Comme expliqué précédemment, le problème rencontré avec le sous-échantillonnage est que deux signaux superposés temporellement peuvent également, par repliement spectral, se superposer fréquentiellement dans la zone de Nyquist de travail, bien que cette superposition n'existe pas dans la bande de réception. S'intéressant à l'un des deux signaux, le terme de « parasitage dudit signal dû au repliement spectral » peut être utilisé. Le problème touche les deux signaux par réciprocité.

Il n'est pas proposé de traiter le cas des signaux de fréquences suffisamment voisines à l'origine dans la bande de réception, qui y sont donc non résolus en fréquence (*cf.* vrais mélanges). Ce cas est toutefois de probabilité bien plus faible que celle des cas traités.

Le procédé proposé a pour but de déterminer, en fonction des mesures, la situation de parasitage dû au repliement spectral (absence ou présence de parasités, et, en cas de présence de parasites quelles sont les fréquences d'échantillonnage parasitées).

Dans la mesure où l'on admet qu'il n'y a pas plus de deux fréquences d'échantillonnage parmi $M$ affectées par un parasitage du signal, le nombre de situations de parasitage possibles vaut $\frac{M^2+M+2}{2}$ (1 pour aucune fréquence parasitée, $M$ pour une seule fréquence parasitée et $\frac{M(M-1)}{2}$ pour deux fréquences parasitées).

Le demandeur propose d'exploiter le fait que les signaux d'intérêt sont généralement étalés dans plusieurs canaux d'analyse spectrale adjacents et présents dans plusieurs analyses spectrales successives, et modélise les mesures extraites sur plusieurs canaux adjacents et plusieurs analyses successives sous forme vectorielle.

Une idée du demandeur est notamment d'approximer, pour chaque situation de parasitage possible, la vraisemblance des vecteurs de mesures par un majorant calculable uniquement au moyen de modules carrés, de produits scalaires et de filtrage des vecteurs de mesures prélevées sur l'ensemble des voies de réception, et interprétable comme la somme de trois critères traduisant respectivement leur variabilité, l'égalité de leur module et leur colinéarité.

Le procédé proposé détermine la situation de parasitage (absence ou présence de parasites, et en cas de parasitage, les fréquences d'échantillonnage affectées), en maximisant, sur toutes les situations de parasitage possible, l'approximation préalablement obtenue, ou en maximisant son adéquation à sa loi supposée gaussienne.

La situation de parasitage étant connue, le procédé élimine ensuite les voies parasitées et exploite uniquement les voies non parasitées pour décider s'il y a présence ou absence de signal utile en mettant en œuvre une méthode de détection conventionnelle sur bruit thermique.

De manière synthétique, il est possible d'exprimer l'invention comme un procédé de détermination des situations de parasitage dues au repliement spectral et procédé de détection de signaux électromagnétiques mis en œuvre au moyen d'un réseau, à $P$ antennes à bande large, $P$ étant un entier supérieur ou égal à 1, chaque antenne étant suivie d'une chaîne de réception analogique et d'un ou plusieurs modules de réception numérique, le nombre de modules de réception numérique étant $R$ au total, ledit procédé comprenant :

- une étape d'échantillonnage des signaux délivrés par l'ensemble des chaînes de réception, à l'aide de $M$ fréquences d'échantillonnage $\textbf{fe}_m$ différentes, inférieures à la fréquence de Nyquist-Shannon, $m$ allant de 1 à $M$, et $M$ étant un entier supérieur ou égal à 4, le nombre de modules de réception numérique fonctionnant avec une fréquence d'échantillonnage $\textbf{fe}_m$ étant égal à $R_m$, et le nombre de modules de réception numérique pour une antenne p étant $Q_p$, avec $R = \sum_{m=1}^{N} R_m = \sum_{p=1}^{P} Q_p$.

- sur chaque module de réception numérique, une étape d'analyse spectrale par des transformées de Fourier discrètes successives, et synchrones sur tous les modules de réception numérique, des $N_m$ échantillons procurés par l'échantillonnage à la fréquence $\textbf{fe}_m$ pendant des intervalles de temps de durée $\Delta T$ éventuellement recouvrants, permettant d'obtenir, sur chacun des $R$ modules de réception numérique, une représentation temps/fréquence appelée grille, de résolution temporelle $\Delta T$ commune à tous les modules de réception numérique, et de résolution fréquentielle $\Delta F$ commune à tous les modules de réception numérique, chaque élément de la grille étant appelé case temps/fréquence et contenant une grandeur complexe appelée mesure,

- une étape, réalisable hors ligne, de mise en correspondance des fréquences dans la bande de réception à la résolution $\Delta F$ avec les fréquences de la bande de Nyquist de chacun des R modules de réception numérique,
- une étape de découpage de l'espace temps/fréquence (dans la bande de réception) en un ensemble de domaines temps/fréquence éventuellement recouvrants, perçus dans les R modules de réception numérique comme R fenêtres superposables, chacune des fenêtres étant composée de L cases temps/fréquence connexes.
- pour chaque domaine temps/fréquence, une étape de transformation des mesures prélevées dans chacune des R fenêtres sous forme de R vecteurs de dimension $L \times 1$ notés $Y_{pm}$, où $p$ est l'indice du capteur et $m$ l'indice de l'échantillonnage,
- pour chaque domaine temps/fréquence, une étape de détermination de la présence de parasites éventuels consistant à choisir, parmi les hypothèses suivantes :

  - $H_0$ : absence de parasite,
  - $H_{m_0}$ : présence de un parasite (ou plus) sur l'échantillonnage $m_0$, avec $m_0 \in [1, M]$ (soit $M$ hypothèses),
  - $H_{m_0,m_1}$ : présence de un parasite (ou plus) sur l'échantillonnages $m_0$ et de un parasite (ou plus) sur l'échantillonnage $m_1$, avec $m_0 \in [1, M]$, $m_1 \in [1, M]$, $m_0 \neq m_1$ (soit $M(M - 1)/2$ hypothèses),

  celle maximisant une approximation de la densité de probabilité des R vecteurs de mesures $Y_{pm}$ calculable uniquement à l'aide de modules carrés, de produits scalaires et de moyennes des mesures, cette approximation résultant :

  - d'une modélisation des vecteurs de mesures $Y_{pm}$ supposés non parasités par des échantillons indépendants d'une variable aléatoire vectorielle complexe de dimension $L$, de densité de probabilité gaussienne de moyenne $Ae^{i\varphi p}$ et de covariance $2\sigma^2 I_L$, où $A$ est le vecteur complexe de dimension $L$ représentant le signal utile, $\varphi_p$ le déphasage interférométrique, $2\sigma^2$ la puissance du bruit dans une case temps/fréquence, et $I_L$ la matrice identité de dimension $L \times L$,
  - d'une modélisation des vecteurs de mesures $Y_{pm}$ supposés parasités par des vecteurs complexes de dimension $L$, où les composantes de ces vecteurs sont des échantillons indépendants d'une variable aléatoire complexe centrée à composantes réelle et imaginaire indépendantes et uniformément distribuées sur un intervalle de largeur $\sqrt{C}$ de telle sorte que la densité de probabilité des vecteurs de mesures sera $(1/C)^L$, puis
  - d'une majoration de la densité de probabilité des R vecteurs de mesures $Y_{pm}$,

  l'approximation ainsi obtenue étant égale à la somme d'un terme jouant le rôle de pénalité pour les $Y_{pm}$ supposés parasitées, et d'un terme provenant de la densité de probabilité des $Y_{pm}$ supposés non parasités, lui-même décomposable en trois critères partiels :

  - un critère de non-variabilité des $Y_{pm}$ par rapport à leur valeur filtrée sur les différentes fréquences d'échantillonnage fonctionnant avec l'antenne p (hormis la ou les fréquences d'échantillonnage supposées parasitées dans l'hypothèse considérée),
  - un critère d'égalité des modules des $Y_{pm}$ filtrés sur les différentes fréquences d'échantillonnage fonctionnant avec l'antenne $p$ (hormis la ou les fréquences d'échantillonnage supposées parasitées dans l'hypothèse considérée), et
  - un critère de colinéarité des $Y_{pm}$ filtrés sur les différentes fréquences d'échantillonnage fonctionnant avec l'antenne $p$ (hormis la ou les fréquences d'échantillonnage supposées parasitées dans l'hypothèse considérée),

- sur chaque domaine temps/fréquence, une étape de détection de la présence de signal utile, les mesures contenant des parasites ayant été éliminées.

Suivant des modes de réalisations spécifiques, le procédé comporte l'une des caractéristiques suivantes prises isolément ou en combinaison :

- à l'étape de détermination de la situation de parasitage, les approximations à calculer sont les suivantes, pour les différentes hypothèses :

  Pour l'hypothèse $H_0$ (aucun parasite présent), la grandeur $\hat{\Gamma}_0$, notée aussi $\hat{\Gamma}_0$ :

$$\hat{\Gamma}_0 = \frac{1}{2\sigma^2} \gamma_0^{var} + \frac{R}{2\sigma^2}\left(\gamma_0^{mod} + \gamma_0^{col}\right),$$

où :

$$\gamma_0^{var} = -\sum_{p,m}\left\|\tilde{Y}_{pm}\right\|^2, \gamma_0^{mod} = \left(\sum_p \alpha_p \left\|Z_p\right\|\right)^2 - \sum_p \alpha_p \left\|Z_p\right\|^2, \gamma_0^{col} = 2\sum_{p<q} \alpha_p \alpha_q \left(\left|Z_p^* Z_q\right| - \left\|Z_p\right\|\left\|Z_q\right\|\right),$$

où $\alpha_p = \dfrac{Q_p}{R}$ ,

où $Z_p$ est la moyenne des vecteurs $Y_{pm}$ sur les modules de réception associées à une même antenne $p : Z_p = \dfrac{1}{Q_p}\sum_m Y_{pm}$ ,

où $\tilde{Y}_{pm}$ est l'écart d'un vecteur $Y_{pm}$ par rapport à la moyenne $Z_p$.

Pour les hypothèses $H_{m_0}$ (un parasite ou plus présent sur la fréquence d'échantillonnage $m_0$) , les grandeurs $\hat{\Gamma}_{m_0}$ :

$$\hat{\Gamma}_{m_0} = R_{m_0} L \ln\left(\frac{2\pi\sigma^2}{C}\right) + \tilde{\Gamma}_{m_0}$$ , où $\tilde{\Gamma}_{m0}$ est défini par :

$$\tilde{\Gamma}_{m_0} = \frac{1}{2\sigma^2}\gamma_{m_0}^{var} + \frac{R}{2\sigma^2}\left(\gamma_{m_0}^{mod} + \gamma_{m_0}^{col}\right),$$

où :

$$\gamma_{m_0}^{var} = -\sum_{\substack{p,m\\m\neq m_0}}\left\|\tilde{Y}_{pm}\right\|^2, \gamma_{m_0}^{mod} = \left(\sum_p \alpha_{pm_0}\left\|Z_{pm_0}\right\|\right)^2 - \sum_p \alpha_{pm_0}\left\|Z_{pm_0}\right\|^2,$$

$$\gamma_{m_0}^{col} = 2\sum_{p<q}\alpha_{pm_0}\alpha_{qm_0}\left(\left|Z_{pm_0}^* Z_{qm_0}\right| - \left\|Z_{pm_0}\right\|\left\|Z_{qm_0}\right\|\right)$$ ,où $R_{m_0}$ le nombre de modules de réception fonctionnant avec la fréquence $f_{m_0}$
où

$$\alpha_{pm_0} = \frac{Q_{pm_0}}{R-R_{m_0}}$$

où $Q_{pm_0}$ est le nombre de modules de réception de l'antenne $p$, qui ne fonctionnent pas avec la fréquence d'échantillonnage $fe_{m_0}$
où

$$Z_{pm_0} = \frac{1}{Q_{pm_0}}\sum_{m\neq m_0} Y_{pm}$$

où $\tilde{Y}_{pm}$ est l'écart d'un vecteur $Y_{pm}$ par rapport à la moyenne $Z_{pm_0}$.

Pour les hypothèses $H_{m_0,m_1}$ (un parasite ou plus présent sur la fréquence d'échantillonnage $m_0$ et un parasite (ou plus) présent sur la fréquence d'échantillonnage $m_1$), les grandeurs $\hat{\Gamma}_{m_0m_1}$ :

$$\hat{\Gamma}_{m_0m_1} = R_{m_0m_1} L \ln\left(\frac{2\pi\sigma^2}{C}\right) + \tilde{\Gamma}_{m_0m_1}$$ où $\tilde{\Gamma}_{m_0m_1}$ est défini par :

$$\tilde{\Gamma}_{m_0m_1} = \frac{1}{2\sigma^2}\gamma_{m_0m_1}^{var} + \frac{R}{2\sigma^2}\left(\gamma_{m_0m_1}^{mod} + \gamma_{m_0m_1}^{col}\right),$$

où :

$$\gamma_{m_0 m_1}^{var} = -\sum_{\substack{p,m \\ m \neq m_0, m_1}} \left\| \tilde{Y}_{pm} \right\|^2, \gamma_{m_0 m_1}^{mod} = \left( \sum_p \alpha_{pm_0 m_1} \left\| Z_{pm_0 m_1} \right\| \right)^2 - \sum_p \alpha_{pm_0 m_1} \left\| Z_{pm_0 m_1} \right\|^2,$$

$$\gamma_{m_0 m_1}^{col} = 2 \sum_{p<q} \alpha_{pm_0 m_1} \alpha_{qm_0 m_1} \left( \left| Z_{pm_0 m_1}^* Z_{qm_0 m_1} \right| - \left\| Z_{pm_0 m_1} \right\| \left\| Z_{qm_0 m_1} \right\| \right),$$

où $R_{m_0 m_1}$ est le nombre de modules de réception fonctionnant avec la fréquence $fe_{m_0}$ ou avec la fréquence $fe_{m_1}$ où

$$\alpha_{pm_0 m_1} = \frac{Q_{pm_0 m_1}}{R - R_{m_0, m_1}},$$

où

$$Z_{pm_0 m_1} = \frac{1}{Q_{pm_0 m_1}} \sum_{m \neq m_0, m_1} Y_{pm},$$

où $Q_{pm_0 m_1}$ est le nombre de modules de réception numérique rattachés à l'antenne d'indice p qui ne fonctionnent ni avec la fréquence d'échantillonnage $fe_{m_0}$, ni avec la fréquence d'échantillonnage $fe_{m_1}$, où $\tilde{Y}_{pm}$ est l'écart d'un vecteur $Y_{pm}$ par rapport à la moyenne $Z_{pm_0 m_1}$.

- dans un premier mode de réalisation, le procédé comporte les déductions suivantes :

si $\hat{\Gamma}_0 = \max(\hat{\Gamma}_0, \hat{\Gamma}_{m_0}, \hat{\Gamma}_{m_0, m_1})$, alors il y a absence de parasite (hypothèse $H_0$).
S'il existe $\hat{m}_0$ tel que $\hat{\Gamma}_0 = \max(\hat{\Gamma}_0, \hat{\Gamma}_{m_0}, \hat{\Gamma}_{m_0, m_1})$, alors il y a une seule fréquence d'échantillonnage parasitée, et cette fréquence d'échantillonnage est $\hat{m}_0$ (hypothèse $H_{\hat{m}_0}$).
s'il existe un couple $\hat{m}_0, \hat{m}_1$ tel que $\hat{\Gamma}_{\hat{m}_0, \hat{m}_1} = \max(\hat{\Gamma}_0, \hat{\Gamma}_{m_0}, \hat{\Gamma}_{m_0, m_1})$, alors il y a deux fréquences d'échantillonnage parasitées, et ces fréquences sont $\hat{m}_0$ et $\hat{m}_1$ (hypothèse $H_{\hat{m}_0 \hat{m}_1}$).

- dans un deuxième mode de réalisation, le procédé comporte une étape de calcul de :

$$\tilde{\boldsymbol{\Gamma}}_0 = \tilde{\Gamma}_0$$

$$\tilde{\boldsymbol{\Gamma}}_1 = \max_{m_0 = 1, \ldots, M} \left( \tilde{\Gamma}_{m_0} \right)$$

$$\tilde{\boldsymbol{\Gamma}}_2 = \max_{\substack{m_0 = 1, \ldots, M \\ m_1 = 1, \ldots, M \\ m_0 \neq m_1}} \left( \tilde{\Gamma}_{m_0 m_1} \right)$$

où :

- $\tilde{\Gamma}_0$ représente l'hypothèse « absence de parasite ». Cette hypothèse est appelée $H_0$ ;
- $\tilde{\Gamma}_1$ représente la meilleure des hypothèses à une fréquence d'échantillonnage parasitée $H_{m_0}$, appelée $H_1$, et
- $\tilde{\Gamma}_2$ représente la meilleure des hypothèses à deux fréquences d'échantillonnage parasitées $H_{m_0, m_1}$, appelée $H_2$.

dans ce deuxième mode de réalisation, le procédé comporte aussi la détermination de la meilleure hypothèse parmi $H_0, H_1, H_2$, celle choisie étant:

$H_0$, si sa log-densité approchée $\tilde{\Gamma}_0$ satisfait le test d'adéquation à sa loi supposée gaussienne (voir cas mono-polarisation),
Sinon, $H_1$, si sa log-densité approchée restreinte aux voies non parasitées $\tilde{\Gamma}_1$ satisfait le test d'adéquation à sa loi supposée gaussienne (voir cas monopolarisation),

Sinon, $H_2$, si la log-densité approchée restreinte aux voies non parasitées $\tilde{I}_2$ satisfait le test d'adéquation à sa loi supposé gaussienne (voir cas monopolorisation),

Sinon, il y a plus que deux fréquences d'échantillonnage qui sont parasitées.

- les calculs sont limités aux domaines temps/fréquence présumés ne pas contenir que du bruit, par application d'un algorithme de pré-détection consistant à comparer la somme quadratique des modules des $R$ vecteurs de mesures de chaque domaine temps/fréquence, à un seuil prédéfini, réglé pour une probabilité de fausse alarme assez forte.
- le nombre de fréquences d'échantillonnages total $M$ est supérieur ou égal à 3, et le procédé détermine la situation de parasitage parmi toutes les hypothèses : aucune fréquence d'échantillonnage parasitée, une fréquence d'échantillonnage parasitées et ainsi de suite jusqu'à $M$ - 2 fréquences d'échantillonnage parasitées.
- le procédé utilise la totalité des critères partiels, ou uniquement un ou deux des critères partiels, ou une pondération quelconque des critères partiels.
- les signaux traités sont réels ou complexes.
- le procédé fonctionne en mode dégradé si la résolution $\Delta F$ n'est pas identique pour toutes les grilles.

Il est maintenant décrit un exemple de mise en œuvre plus détaillée.

La figure 2 illustre l'architecture générale d'un interféromètre 10 pour lequel l'invention s'applique.

L'interféromètre comprend $P$ antennes $A_1$, ... , $A_P$ très large bande, a priori identiques, suivies chacune d'une chaîne de réception $CR_1$, ... , $CR_P$. Dans le cas général $P$ est un nombre entier supérieur ou égal à 2. L'invention s'applique aussi lorsque $P$ = 1.

Pour la suite, l'indice $p$ de chaque antenne est un nombre entier compris entre 1 et $P$, servant également de référence à tous les éléments qui lui sont rattachés, moyens matériels, mesures et grandeurs diverses calculées.

Les centres de phase des antennes peuvent être répartis dans l'espace. La répartition spatiale des antennes $A_1$, ... , $A_P$ , est définie pour assurer une précision et un taux d'ambiguïtés angulaire spécifiés.

Derrière chaque antenne, un filtre analogique sélectionne une très large bande $[f_{min}, f_{max}]$.

Pour un signal bande étroite émis par une source à l'infini, le signal délivré par l'antenne d'indice $p$ possède l'expression suivante :

$$s_p(t) = \rho_p a(t) \cos\left(2\pi f t + \Phi(t) + \varphi_p(\theta, \lambda)\right) + b_p(t)$$

où :

- $f$ est la fréquence porteuse du signal incident comprise dans la bande de réception ; f=c/$\lambda$ où $c$ est la vitesse de la lumière et $\lambda$ la longueur d'onde.
- $a(t)$ et $\Phi(t)$ sont les modulations du signal incident ;
- $\rho_p$ est le module du gain de l'antenne $p$ ; pour un interféromètre on peut supposer que $\rho_p$ = 1 ;
- $\varphi_p(\theta, \lambda)$ est la somme du déphasage interférométrique du signal incident au centre de phase $M_p$ de l'antenne considéré relativement à un point de référence $0$, $\frac{2\pi}{\lambda}\overrightarrow{OM_p} \cdot \vec{u}(\theta)$ où $\vec{u}(\theta)$ est le vecteur unitaire dirigé dans la direction d'arrivée du signal incident $\theta$, objet principal de l'interféromètre, et de la phase du gain complexe de l'antenne dans la direction d'incidence du signal utile ; si le goniomètre est un interféromètre, ce deuxième terme peut être considéré comme nul. Dans la suite ce terme $\varphi_p(\theta, \lambda)$ sera appelé plus simplement déphasage interférométrique.
- $b_p(t)$ est le bruit thermique des chaînes de réception, supposé gaussien et indépendant entre chaînes de réception, et de densité spectrale uniforme et identique pour toutes les chaînes de réception.

Chaque chaîne de réception $CR_1$, ..., $CR_P$ est une partie strictement analogique qui est suivie d'au moins un module de réception numérique 20 comprenant un module de conversion analogique-numérique 22 associé à une fréquence d'échantillonnage 24 suivi d'un module de traitement numérique du signal 26.

Un module de conversion analogique-numérique 22 est propre à effectuer un échantillonnage du signal à la fréquence d'échantillonnage 24.

La fréquence d'échantillonnage 24 est telle que la bande de réception du signal analogique n'est pas contenue dans une seule zone de Nyquist. La fréquence d'échantillonnage 24 est inférieure voire très inférieure à la fréquence de Nyquist, mais elle reste bien supérieure à l'étalement spectral des signaux d'intérêt. Ainsi le spectre des signaux d'intérêt est préservé, mais il est translaté d'une éventuelle quantité qui dépend de la fréquence d'échantillonnage.

Un module de traitement numérique du signal 26 est propre à effectuer une analyse spectrale du signal converti en numérique, avec une transformée de Fourier discrète (TFD) pondérée.

L'interféromètre 10 comporte également un calculateur 28 récoltant les mesures obtenues en sortie de chaque module de traitement numérique du signal 26, et propre à obtenir la direction d'arrivée du signal incident sur l'ensemble des antennes $A_1, ..., A_P$. Ce calculateur 28 est également propre à mettre en œuvre un procédé de détermination de situations de parasitage du signal dans la zone de Nyquist analysée par TFD.

L'interféromètre 10 dispose au total de $M$ valeurs de fréquences d'échantillonnage 24 différentes de façon à lever les ambiguïtés en fréquence quand on passe de la fréquence mesurée dans la zone de Nyquist utilisée (a priori la première) par la TFD, à la fréquence dans la bande de réception, $M$ étant un nombre entier supérieur ou égal à 3.

Une des caractéristiques de l'invention est de minimiser les effets de parasitage dus au repliement spectral sur les performances de la détection, et d'améliorer les performances des autres fonctions de la chaîne de traitement (estimation de la direction d'arrivée, caractérisation du signal) lorsque :

- 1 fréquence d'échantillonnage est parasitée, si $M$ vaut 3
- 1 *ou* 2 fréquences d'échantillonnage sont parasitées, si $M$ vaut 4
- 1,2, ... $M$ - 2 fréquences d'échantillonnage sont parasitées, si $M > 4$.

Ces $M$ valeurs de fréquences d'échantillonnage 24 sont affectées aux modules de conversion analogique-numérique 22 échantillonnant le signal fourni par les chaînes de réception respectivement en amont, à la fréquence d'échantillonnage $fe_m$, $m$ étant un nombre entier compris entre 1 et $M$.

Si une fréquence d'échantillonnage donnée est affectée à un module de conversion analogique-numérique associé à une antenne donnée, elle ne l'est qu'une seule fois.

Le nombre de modules de réception numérique $R$ est au plus égal à $P \cdot M$. En pratique, pour des raisons matérielles, on cherche à minimiser $R$ tout en conservant les performances du réseau.

$R_m$ est le nombre de modules de réception numérique fonctionnant avec la fréquence d'échantillonnage $e_m$.

C'est aussi le nombre d'antennes associées à cette fréquence d'échantillonnage. On note que $R = \sum_{m=1}^{M} R_m$, que toutes les valeurs de $R_m$ ne sont pas nécessairement identiques et que $R_m \leq P$.

$Q_p$ est le nombre de modules de réception numérique fonctionnant avec l'antenne d'indice $p$, $\alpha_p = \dfrac{Q_p}{R}$ est la proportion de ces modules de réception numérique. On note que $Q_p \leq M$, que $R = \sum_{p=1}^{P} Q_p$ et que toutes les valeurs de $Q_p$ ne sont pas nécessairement identiques.

$Q_{p,m_0}$ est le nombre de modules de réception numérique rattachés à l'antenne d'indice p, qui ne fonctionnent pas avec la fréquence $fe_{m_0}$, $\alpha_{p,m_0} = \dfrac{Q_{p,m_0}}{R-R_{m_0}}$ est la proportion de ces modules de réception numérique.

$Q_{p,m_0,m_1}$ est le nombre de modules de réception numérique rattachés à l'antenne d'indice p qui ne fonctionnent ni avec la fréquence d'échantillonnage $fe_{m_0}$, ni avec la fréquence d'échantillonnage $fe_{m_1}$, $\alpha_{p,m_0,m_1} = \dfrac{Q_{p,m_0,m_1}}{R-R_{m_0}-R_{m_1}}$ est la proportion de ces modules de réception numérique.

Les modules de traitement numérique du signal 26 effectuent tous une analyse spectrale par TFD glissante du signal qui leur est présenté, afin d'en obtenir une représentation temps/fréquence réalisant une adaptation moyenne à la bande des signaux d'intérêt.

La TFD d'un module de réception numérique travaillant avec la fréquence d'échantillonnage $fe_m$ s'effectue sur une durée de signal $\Delta T_m$ avec un nombre d'échantillons $N_m = \Delta T_m.fe_m$.

Afin d'obtenir des informations synchrones et de même résolution spectrale sur toutes les voies de réception, on impose un début et une fin d'acquisition communes aux TFD de chaque voie de réception. Ainsi pour toutes les valeurs de $m$ :

$$\frac{N_m}{fe_m} = \Delta T_m = \Delta T = \frac{1}{\Delta F}$$

Les intervalles de temps successivement analysés par TFD peuvent être contigus ou à recouvrement. Si r est le taux de recouvrement, les intervalles de temps sont $[i(1 - r)\Delta T, i(2 - r)\Delta T[$ où $i$ est l'indice courant du temps de l'intervalle.

Par exemple avec un recouvrement de 50%, ces intervalles de temps sont $\left[i\frac{\Delta T}{2}, i\frac{\Delta T}{2} + \Delta T\right[$.

Si le signal d'entrée d'une TFD est réel sur $N_m$ points, la sortie est en conséquence un spectre utile complexe, discret sur $N_m$ points indicés par $j$ allant de 0 à $N_m$ - 1, au pas de $\Delta F$. Si le signal d'entrée est un signal complexe obtenu après double démodulation en quadrature, alors on obtient directement le spectre du signal analytique par une transformé de Fourier à $N_m$ points.

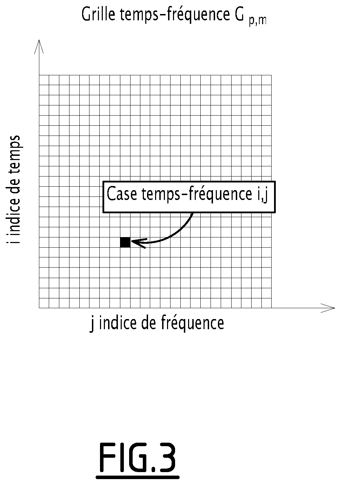

Chaque TFD délivre ainsi dans le temps une grille temps/fréquence. Chaque case d'une grille contient un complexe $y_{p,m,i,j}$ indicé par $j$ en fréquence avec un pas $\Delta F$, par $i$ en temps avec un pas $(1 - r)\Delta T$, par $p$, indice du capteur, et par $m$, indice de fréquence d'échantillonnage. La figure 3 en donne une illustration.

Finalement, l'ensemble des $R$ TFD des $R$ modules de réception numérique délivrent $R$ grilles temps/fréquence de même résolution temporelle et fréquentielle. Chaque grille temps/fréquence est indicée par $p$, et par $m$ et notée $G_{p,m}$.

La bande de réception est supposée découpée en $K$ intervalles fréquentiels de largeur égale à la résolution commune des TFD, $\Delta F$. Chaque intervalle est identifié par un indice $k$. Le traitement élabore, hors ligne, une table de correspondance qui fournit l'indice $j$ de la fréquence dans la bande de Nyquist en fonction de l'indice $k$ de la fréquence dans la bande de réception et de l'indice $m$ de la fréquence d'échantillonnage, $j = j(k, m)$.

La durée de la tranche de temps $\Delta T$ est en général plus courte que celle des signaux d'intérêt, et donc un signal utile apparaît sur plusieurs analyses spectrales successives dans le temps.

Il apparaît aussi dans plusieurs canaux fréquentiels adjacents car son spectre n'est pas nécessairement centré dans un des canaux de la TFD, sa largeur spectrale peut être supérieure à $\Delta F$.

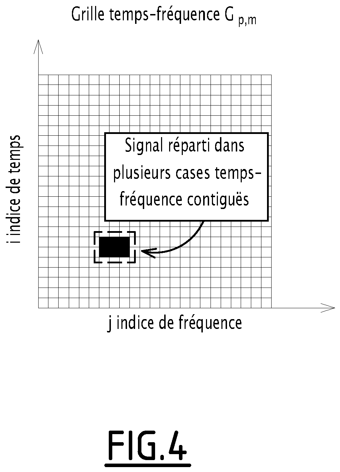

Le résultat est qu'un signal utile est généralement perçu, par les analyses spectrales successives dans le temps, sous la forme d'un ensemble connexe de plusieurs cases temps/fréquences. La figure 4 en donne une illustration.

La présente invention propose de modéliser et de traiter le signal reçu sur des domaines temps/fréquence correspondant chacun à un intervalle limité en temps (typiquement la durée de quelques TFD) et en fréquence (typiquement quelques canaux).

La bande $[f_{min}, f_{max}[$ est découpée en intervalles fréquentiels, recouvrants ou non, de largeur $L_2\Delta F$, $L_2$ étant un entier naturel. De même, l'axe temporel est découpé en intervalles, recouvrants ou non, de durée $L_1(1 - r)\Delta T$, $L_1$ étant un entier naturel. Pour chaque domaine temps/fréquence ainsi obtenu, la table de correspondance permet de prélever un ensemble de $L = L_1 \times L_2$ cases temps/fréquences connexes, appelé fenêtre, pour chacune des $R$ voies de réception.

Le traitement analyse ensuite tous les domaines temps/fréquence indépendamment les uns des autres.

Un ordre de lecture des cases est choisi arbitrairement et identiquement pour toutes les fenêtres, par exemple, d'abord dans l'axe des fréquences, puis dans l'axe du temps. L'ensemble des $L$ mesures de chaque fenêtre forme un vecteur, appelé vecteur de mesures, qui peut être indicé par $p$, le numéro de capteur, $m$, le numéro de la fréquence d'échantillonnage, $i'$ et $j'$ où $i'$ et $j'$ sont choisis parmi les indices $i$ et $j$ des cases de la fenêtre, de manière arbitraire mais identique pour toutes les fenêtres. Par exemple, $i'$ et $j'$ peuvent être choisis égaux à l'indice $i$ et à l'indice $j$ de la case supérieure gauche.

Avec les conventions prises en exemple, et avec, par exemple, $L_1$ = 2 et $L_2$ = 3 le vecteur $Y_{pmi'j'}$ est égal à :

$$Y_{p,m,i',j'} = \left( y_{p,m,i',j'} \; y_{p,m,i',j'+1} \; y_{p,m,i',j'+2} \; y_{p,m,i'+1,j'} \; y_{p,m,i'+1,j'+1} \; y_{p,m,i'+1,j'+2} \right)^T$$

Où $^T$ désigne l'opérateur de transposition.

Pour simplifier les écritures, un vecteur $Y_{pmi'j'}$ sera par la suite simplement noté $Y_{pm}$, étant entendu que les fenêtres intervenant dans le traitement correspondent toutes à un même domaine temps/fréquence, et que tous les domaines temps/fréquence sont traités de manière identique et indépendamment les uns des autres.

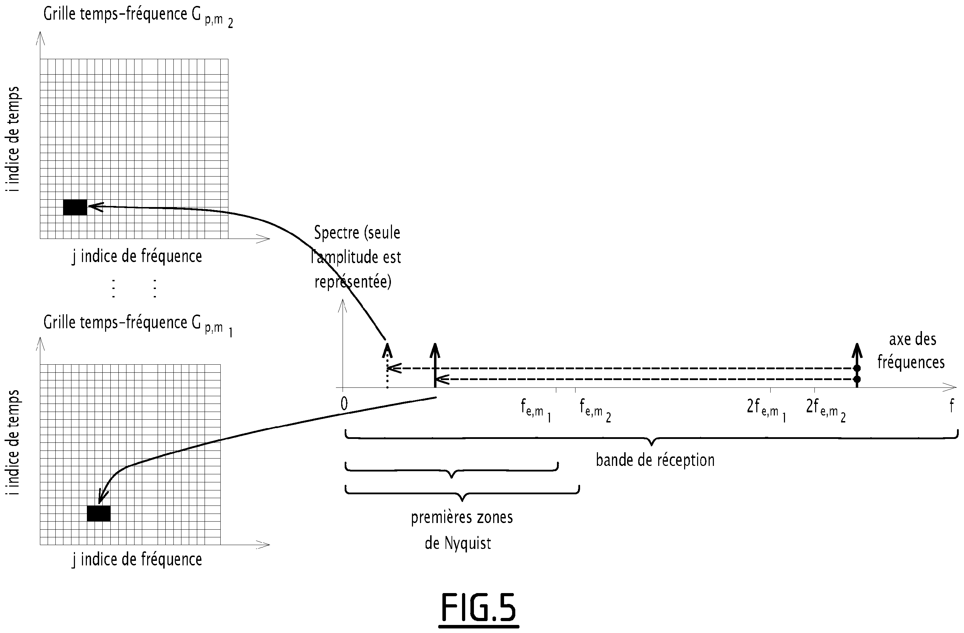

Pour deux fréquences d'échantillonnage différentes, les valeurs de $i'$ sont différentes, et les positions en fréquence des fenêtres sont donc différentes. La figure 5 en donne l'illustration.

Dans une variante du traitement, une étape de prédétection permet de diminuer la quantité de calculs, en éliminant les domaines temps/fréquence ne contenant pas de signal utile. Ce traitement de prédétection consiste, par exemple, à calculer pour chaque domaine temps/fréquence, la somme quadratique des modules des $R$ vecteurs correspondant à ce domaine temps/fréquence, $\sum_{p,m}\left\|Y_{pm}\right\|^2$, puis à comparer la valeur obtenue à un seuil prédéfini. Le seuil en question est réglé pour un taux de fausse alarme assez élevé, de façon à garantir qu'aucun domaine temps/fréquence contenant du signal utile soit éliminé à tort, la probabilité de fausse alarme finale étant assurée par l'étape de détection proprement dite.

Dans le cadre du dispositif de réception radioélectrique précédemment décrit, le procédé comporte une fonction de détermination, pour un vecteur de mesures donné, de la situation de parasitage (absence de parasites, ou présence de parasites, et quelles sont les fréquences d'échantillonnages parasités) :

Cette fonction de détermination considère les cas de parasitage suivants :

Aucune fréquence d'échantillonnage n'est parasitée, hypothèse désignée par $H_0$ ;
Présence d'un parasite (ou plus) sur une des fréquences d'échantillonnage $m_0(m_0 \in [1, M])$, soit $M$ hypothèses désignées par $H_{m_0}$ ($m_0 \in [1, M]$);
Présence d'un parasite (ou plus) sur une deuxième fréquence d'échantillonnage $m_1$, différente de $m_0$, soit $M(M - 1)/2$ hypothèses désignées par :

$$H_{m_0 m_1} \ (m_0 \in [1, M], m_1 \in [1, M], m_0 \neq m_1).$$

Il est proposé de modéliser les vecteurs de mesures de la façon suivante dans $H_0$ :

$$Y_{pm} = Ae^{i\varphi_p} + V_{pm}$$

Où:

- $\varphi_p$ est le déphasage interférométrique du signal reçu par une antenne, par rapport à une référence,
- $A$ un vecteur complexe représentant le signal utile,
- $V_{pm}$ est le vecteur du bruit thermique. Les $V_{pm}$ sont des échantillons d'une variable aléatoire vectorielle gaussienne complexe. Ces échantillons sont indépendants d'un $p$ à l'autre et ont pour covariance supposée commune et environ égale à $2\sigma^2 I_L$, où $I_L$ est la matrice identité de taille $L \times L$. Pour un même $p$ et pour deux $m$ différents on peut aussi supposer qu'il y a indépendance des $V_{pm}$ car seul le bruit prélevé dans la largeur du filtre de la TFD au voisinage de la vraie fréquence du signal est commun.

Ce modèle est valable pour une onde plane (source supposée à l'infini) et pour un signal utile à bande étroite.
Les vecteurs de mesures sont donc considérées, sous l'hypothèse $H_0$, comme des variables aléatoires complexes indépendantes vectorielles gaussiennes de moyenne $Ae^{i\varphi_p}$ et de covariance $2\sigma^2 I_L$. Ce modèle est indépendant de la forme d'onde des signaux.
Sur certains échantillonnages, il se peut qu'on mesure, en plus du signal utile, un ou plusieurs signaux parasites présents pendant la même tranche de temps d'analyse spectrale, mais dont la somme ou la différence des fréquences ont des valeurs dans la bande de réception différent de des valeurs multiples de la fréquence d'échantillonnage.
Lorsqu'il y a présence d'un parasite à une fréquence d'échantillonnage indicée par $m_0$ (i.e. quand on est dans une des hypothèses $H_{m_0}$), le vecteur de mesures $Y_{pm_0}$ s'écrit alors, en généralisant le modèle précédent :

$$Y_{pm_0} = Ae^{i\varphi_p} + B_1 e^{i\psi_{1p}} + V_{pm}$$

où $B_1$ est un vecteur complexe de dimension $L$ représentant le parasite, et $\psi_{1p}$ le déphasage interférométrique de ce parasite pour l'antenne $p$.
Si deux parasites sont présents à deux fréquences d'échantillonnage $m_0$ et $m_1$ différentes (i.e. quand on est dans une des hypothèses $H_{m_0 m_1}$), on généralise encore :

$$\begin{cases} Y_{pm_0} = Ae^{i\varphi_p} + B_1 e^{i\psi_{1p}} + V_{pm_0} \\ Y_{pm_1} = Ae^{i\varphi_p} + B_1 e^{i\psi_{2p}} + V_{pm_1} \end{cases}$$

Selon la théorie de la décision, il convient de calculer la valeur prise par les densités de probabilité représentant chacune des hypothèses pour les mesures observées, puis choisir l'hypothèse qui maximise cette valeur. Cette stratégie minimise la probabilité d'erreur dans l'hypothèse où toutes les situations sont équiprobables.
Les difficultés sont le nombre de paramètres inconnus ($A$, $B_1$, $B_2$, les $\varphi_p, \psi_{1p}, \psi_{2p}$), et la complexité des calculs qui en découle si on veut appliquer la méthode classique, qui consiste à remplacer les paramètres inconnus par leur estimée au sens du maximum de vraisemblance (Maximum de Vraisemblance Généralisé).
Pour diminuer le nombre de paramètres inconnus du modèle physique ci-dessus, il est proposé d'utiliser, pour décrire les vecteurs de mesures parasités, un modèle statistique simplifié. Dans ce modèle, les vecteurs de mesures parasités sont représentées par des vecteurs complexes de dimension $L$. Les parties réelle et imaginaire des composantes de ces vecteurs sont des échantillons indépendants d'une variable aléatoire réelle centrée et uniformément distribuée sur un intervalle de largeur $\sqrt{C}$ de telle sorte que la densité de probabilité des vecteurs de mesures sera $(1/C)^L$. Ce modèle s'applique pour un nombre quelconque de parasites par fréquence d'échantillonnage. La détermination du coefficient $C$ est expliquée en annexe.

A l'issue de cette simplification, dans l'hypothèse où un seul échantillonnage est parasité (on appellera $m_0$ cet échantillonnage et $H_{m_0}$ cette hypothèse), on peut écrire la densité de probabilité comme le produit des densités de probabilité des vecteurs de mesures sur l'ensemble des capteurs et des échantillonnages :

$$p_{m_0}\left(les\,Y_{pm}, A, les\varphi_p, C\right) = \frac{1}{(2\pi\sigma^2)^{RL}}\left(\frac{2\pi\sigma^2}{C}\right)^{R_{m_0}L} exp\left\{-\frac{1}{2\sigma^2}\sum_{p,m,m\neq m_0}\left\|Y_{pm} - Ae^{i\varphi_p}\right\|^2\right\}$$

La technique habituelle consiste à remplacer les paramètres inconnus ($A$ et les $\varphi_p$) par leur estimée au sens du maximum de vraisemblance dans chaque hypothèse. Les calculs étant trop compliqués en ce qui concerne les $\varphi_p$, le demandeur propose de remplacer la densité de probabilité par un majorant.

Le procédé propose ainsi de sélectionner l'hypothèse dont le majorant de la densité de probabilité est maximum. Après application de la fonction logarithme, puis suppression du terme $RL\,ln(2\pi\sigma^2)$ qui est commun à toutes les hypothèses, on obtient le critère à maximiser :

$$\hat{\Gamma}_{m_0} = R_{m_0}L\,ln\left(\frac{2\pi\sigma^2}{C}\right) + \tilde{\Gamma}_{m_0}$$

$$où\ \tilde{\Gamma}_{m_0} \quad = \quad -\frac{1}{2\sigma^2}\sum_{p,m,m\neq m_0}\left\|\tilde{Y}_{pm}\right\|^2 (\text{terme } \gamma_{m_0}^{\text{var}})$$

$$+\frac{(R-R_{m_0})}{2\sigma^2}\left[\left(\sum_p \alpha_{pm_0}\left\|Z_{pm_0}\right\|\right)^2 - \sum_p \alpha_{pm_0}\left\|Z_{pm_0}\right\|^2\right](\text{terme } \gamma_{m_0}^{\text{mod}})$$

$$+\frac{(R-R_{m_0})}{2\sigma^2}\left[2\sum_{p<q}\alpha_{pm_0}\alpha_{qm_0}\left(\left|Z_{pm_0}^*Z_{qm_0}\right| - \left\|Z_{pm_0}\right\|\left\|Z_{qm_0}\right\|\right)\right](\text{terme } \gamma_{m_0}^{col})$$

où $Z_{pm_0}$ représente la moyenne des $Y_{pm}$, sur tous les échantillonnages de l'antenne p, sauf sur l'échantillonnage supposé parasité $m_0$ : $Z_{pm_0} = \frac{1}{Q_{pm_0}}\sum_{m\neq m_0}Y_{pm}$,

et où $\tilde{Y}_{pm}$ est l'écart du vecteur $Y_{pm}$ par rapport à sa moyenne $Z_{pm_0}$ : $Y_{pm} = Z_{pm_0} + \tilde{Y}_{pm}$.

Le terme $\Gamma_{m_0}$, qui provient des voies supposées non parasitées, et qui est croissant en fonction de $R_{m_0}$, favorise l'élimination d'un maximum de voies de réception. C'est pourquoi le terme $R_{m_0}L\,ln\left(\frac{2\pi\sigma^2}{C}\right)$, qui provient des voies parasitées, et qui est négatif ou nul dès que $2\pi\sigma^2 < C$, est nécessaire pour choisir la bonne hypothèse. Ce terme joue le rôle d'une pénalité pour les hypothèses où l'on élimine des voies de réception.

Dans la suite, le terme $\Gamma_{m_0}$ est appelé log-densité approchée restreinte (i.e. restreinte aux voies de réception supposées non parasitées). Le terme $\tilde{\Gamma}_{m_0}$ s'interprète comme la somme de trois termes ou critères partiels :

Le terme $\gamma_{m_0}^{var}$ ce terme est inférieur ou égal à zéro, avec égalité si pour tout $m \neq m_0$, $Y_{pm} = Z_{pm_0}$. Ce terme constitue un critère de non-variabilité des $Y_{pm}$ par rapport à leur valeur filtrée sur les différentes fréquences d'échantillonnage de l'antenne p (hormis la ou les fréquences d'échantillonnage supposées parasitées dans l'hypothèse considérée)

Le terme $\gamma_{m_0}^{mod}$ ; ce terme est inférieur ou égal à zéro, avec égalité si $\|Z_{pm_0}\|$ est indépendant de $p$. Ce terme constitue un critère d'égalité des modules des $Y_{pm}$ filtrés sur les différentes fréquences d'échantillonnage de l'antenne p (hormis la ou les fréquences d'échantillonnage supposées parasitées dans l'hypothèse considérée)

Le terme $\gamma_{m_0}^{col}$ ; ce terme est inférieur ou égal à zéro, avec égalité si pour tout $p < q$, $Z_{pm_0}$ est colinéaire à $Z_{qm_0}$. Ce

terme constitue un critère de colinéarité des $Y_{pm}$ et des $Y_{qm}$ filtrés sur les différentes fréquences d'échantillonnage de l'antenne $p$ et de l'antenne $q$ (hormis la ou les fréquences d'échantillonnage supposées parasitées dans l'hypothèse considérée)

Dans le cas des hypothèses de type $H_{m_0,m_1}$ (un parasite ou plus présent sur la fréquence d'échantillonnage $m_0$ et un parasite (ou plus) présent sur la fréquence d'échantillonnage $m_1$), le critère devient :

$$\hat{\Gamma}_{m_0 m_1} = R_{m_0,m_1} L \ln\left(\frac{2\pi\sigma^2}{C}\right) + \tilde{\Gamma}_{m_0 m_1}$$

où :

- $R_{m_0 m_1}$ est le nombre de modules de réception fonctionnant avec la fréquence $fe_{m_0}$ ou avec la fréquence $fe_{m_1}$ : $R_{m_0,m_1} = R_{m_0} + R_{m_1}$

- $\hat{\Gamma}_{m_0 m_1} = \frac{1}{2\sigma^2}\gamma_{m_0 m_1}^{var} + \frac{R - R_{m_0 m_1}}{2\sigma^2}\gamma_{m_0 m_1}^{mod} + \frac{R - R_{m_0 m_1}}{2\sigma^2}\gamma_{m_0 m_1}^{col}$ ,

- $\gamma_{m_0,m_1}^{var} = -\sum_{p,m,m \neq m_0,m_1}\left\|\tilde{Y}_{pm}\right\|^2$ où pour tout $p$, $m$ tel que $m \neq m_0,m_1$, $\tilde{Y}_{pm}$ est la différence du vecteur $Y_{pm}$ par rapport à la moyenne $Z_{pm_0 m_1}$ (critère de non variabilité par rapport à la moyenne),

- $\gamma_{m_0,m_1}^{mod} = \left(\sum_p \alpha_{pm_0 m_1}\left\|Z_{pm_0 m_1}\right\|\right)^2 - \sum_p \alpha_{pm_0 m_1}\left\|Z_{pm_0 m_1}\right\|^2$ (critère d'égalité des modules),

- $\gamma_{m_0,m_1}^{col} = 2\sum_{p<q} \alpha_{pm_0 m_1}\alpha_{qm_0 m_1}\left(\left|Z^*_{pm_0 m_1}Z_{qm_0 m_1}\right| - \left\|Z_{pm_0 m_1}\right\|\left\|Z_{qm_0 m_1}\right\|\right)$ (critère de colinéarité).

Dans ce mode de réalisation, on examine successivement $\tilde{\Gamma}_k$, $k = 0,1,2$, et on sélectionne le premier $\tilde{\Gamma}_k$, $k = 0,1,2$ dont l'adéquation à sa loi supposée gaussienne (de moyenne et de variance $\mu_k$, $\sigma_k^2$, $k = 0,1,2$) est supérieure à un seuil $S$ choisi pour respecter un taux d'erreur fixé. Les $\mu_k$ et $\sigma_k$ peuvent être calculés hors ligne par simulation.

L'adéquation est définie comme :

$$P\left(\tilde{\Gamma}_k, \mu_k, \sigma_k\right) = \frac{1}{\sqrt{2\pi}\sigma_k}\exp\left(-\frac{\left(\tilde{\Gamma}_k - \mu_k\right)^2}{2\sigma_k^2}\right)$$

$H_0$ est décidée si $P(\tilde{\Gamma}_0, \mu_0, \sigma_0)$ est supérieure à $S$.
Si $P(\tilde{\Gamma}_0, \mu_0, \sigma_0)$ n'est pas supérieure au seuil $S$, $H_1$ est décidée si $P(\tilde{\Gamma}_1, \mu_1, \sigma_1)$ est supérieure au seuil $S$.
Si $P(\tilde{\Gamma}_1, \mu_1, \sigma_1)$ n'est pas supérieure au seuil $S$, $H_2$ est décidée si $P(\tilde{\Gamma}_2, \mu_2, \sigma_2)$ est supérieure au seuil $S$.
Si $P(\tilde{\Gamma}_2, \mu_2, \sigma_2)$ n'est pas supérieure au seuil $S$, cela signifie qu'il y a plus de deux fréquences d'échantillonnage occasionnant un parasitage du signal considéré.

Pour des raisons pratiques il est possible de travailler avec l'opposé du logarithme de l'adéquation :

$$-\ln P\left(\tilde{\Gamma}_k, \mu_k, \sigma_k\right) = \frac{\left(\tilde{\Gamma}_k - \mu_k\right)^2}{2\sigma_k^2} + \ln\sqrt{2\pi}\sigma_k$$

Dans ces conditions, les tests de supériorité de $P(\tilde{\Gamma}_k, \mu_k, \sigma_k)$ par rapport à $S$ se transforment en tests d'infériorité de $-lnP(\tilde{\Gamma}_k, \mu_k, \sigma_k)$ par rapport à $-lnS$.

Pour les hypothèses $H_1$ et $H_2$ , les fréquences d'échantillonnage occasionnant le parasitage sont déterminées respectivement par :

$$\hat{m}_0 = \underset{m_0 = 1,...,M}{\mathrm{Argmax}}\left(\tilde{\Gamma}_{m_0} + R_{m_0}L\cdot\ln\left(\frac{2\pi\sigma^2}{C}\right)\right)$$

et

$$(\hat{m}_0, \hat{m}_1) = \operatorname*{Argmax}_{\substack{m_0=1,\dots,M \\ m_1=1,\dots,M \\ m_0 \neq m_1}} \left( \tilde{\Gamma}_{m_0,m_1} + R_{m_0,m_1} L \cdot \ln\left(\frac{2\pi\sigma^2}{C}\right) \right)$$

Dans ce mode de réalisation, le procédé s'affranchit de la dépendance en C pour sélectionner la meilleure hypothèse.

Dans le cas de l'hypothèse $H_0$ (aucun parasite présent), le critère devient :

$$\hat{\Gamma}_0 = \tilde{\Gamma}_0 = \frac{1}{2\sigma^2} \gamma^{\mathrm{var}} + \frac{R}{2\sigma^2} \gamma^{\mathrm{mod}} + \frac{R}{2\sigma^2} \gamma^{col}$$

Où :

- $\gamma^{var} = -\Sigma_{p,m}\|\tilde{Y}_{pm}\|^2$ où $\tilde{Y}_{pm}$ est la différence de chaque vecteur $Y_{pm}$ par rapport à sa moyenne $Z_p$ (critère de non variabilité par rapport à la moyenne),
- $\gamma^{mod} = (\Sigma_p \alpha_p \|Z_p\|^2 - \Sigma_p \alpha_p \|Z_p\|^2$ (critère d'égalité des modules), et
- $\gamma^{col} = 2\Sigma_{p<q}(|Z^*_p Z_q| - \|Z_p\|\|Z_q\|)$ (critère de colinéarité).

Dans un premier mode de réalisation, on recherche le maximum de $\hat{\Gamma}_0$, $\hat{\Gamma}_{m_0,m_0\in[1,M]}$, $\hat{\Gamma}_{m_0,m1,m0\in[1,M]m1\in[1,M],m0\neq m1}$.

Si $\hat{\Gamma}_0 = \max \Gamma_{m0,m1,m0\in[1,M]m1\in[1,M],m0\neq m1})$, alors il y a absence de parasite (hypothèse $H_0$ ).

Si il existe $\hat{m}_0$ tel que $\hat{\Gamma}_{\hat{m}0} = \max (\hat{\Gamma}_0, \hat{\Gamma}_{m_0,m_0\in[1,M]}, \hat{\Gamma}_{m_0,m_1,m_0\in[1,M]m_1\in[1,M],m_0\neq m_1})$, alors il y a une seule fréquence d'échantillonnage parasitée, et cette fréquence d'échantillonnage est $\hat{m}_0$ (hypothèse $H_{m_0}$).

Si il existe un couple $\hat{m}_0, \hat{m}_1$ tel que $\hat{\Gamma}_{\hat{m}0\hat{m}1} = \max(\hat{\Gamma}_0, \hat{\Gamma}_{m0,m0\in[1,M]}, \hat{\Gamma}_{m0,m1,m0\in[1,M],m1\in[1,M],m0\neq m1})$,

alors il y a deux fréquences d'échantillonnage parasitées, et ces fréquences sont $\hat{m}_0$ et $\hat{m}_1$ (hypothèse $H_{m_0 m_1}$).

Dans un deuxième mode de réalisation, le procédé comporte le calcul des trois grandeurs suivantes. Ces calculs ne nécessitent pas la connaissance de C.

$$\tilde{\Gamma}_0 = \tilde{\Gamma}_0$$

$$\tilde{\Gamma}_1 = \max_{m_0=1,\dots,M} \left( \tilde{\Gamma}_{m_0} \right)$$

$$\tilde{\Gamma}_2 = \max_{\substack{m_0=1,\dots,M \\ m_1=1,\dots,M \\ m_0\neq m_1}} \left( \tilde{\Gamma}_{m_0 m_1} \right)$$

Où :

- $\tilde{\Gamma}_0$ représente l'hypothèse « absence de parasite ». Cette hypothèse est appelée $\boldsymbol{H}_0$.
- $\tilde{\Gamma}_1$ représente la meilleure des hypothèses à une fréquence d'échantillonnage parasitée $H_{m_0}$. Cette hypothèse est appelée $\boldsymbol{H}_1$.
- $\tilde{\Gamma}_2$ représente la meilleure des hypothèses à deux fréquences d'échantillonnage parasitées $H_{m_0,m_1}$. Cette hypothèse est appelée $\boldsymbol{H}_2$.

Le traitement proposé se généralise à différents choix matériels et différentes situations de réception, au moyen des équations suivantes :

$$\tilde{\Gamma}_0 = \frac{1}{2\sigma^2}\left(c_{var}\gamma^{var} + c_{mod}R\gamma^{mod} + c_{col}R\gamma^{col}\right)$$

$$\tilde{\Gamma}_{m_0} = \frac{1}{2\sigma^2}\left(c_{var}\gamma^{var}_{m_0} + c_{mod}(R - R_{m_0})\gamma^{mod}_{m_0} + c_{col}(R - R_{m_0})\gamma^{col}_{m_0}\right)$$

$$\tilde{\Gamma}_{m_0,m_1} = \frac{1}{2\sigma^2}\left(c_{var}\gamma^{var}_{m_0,m_1} + c_{mod}\left(R - R_{m_0,m_1}\right)\gamma^{mod}_{m_0,m_1} + c_{col}\left(R - R_{m_0,m_1}\right)\gamma^{col}_{m_0,m_1}\right)$$

où $c_{var}$, $c_{mod}$ et $c_{col}$ sont des coefficients binaires (de valeur 0 ou 1) utilisés pour limiter et adapter les calculs à certains choix matériels et à certaines situations de réception.

Ainsi, on pourra choisir par exemple :

- $(c_{var}, c_{mod}, c_{col})$ = (0,1,1) s'il n'y a qu'une fréquence d'échantillonnage par chaîne de réception ;
- $(c_{var}, c_{mod}, c_{col})$ = (1,0,1) si l'on considère que le module des mesures peut varier d'une antenne à l'autre sans que cela soit la conséquence d'un parasitage. Ce cas peut se produire, par exemple, en raison de couplages entre antennes, ou dans le cas de la réception d'un signal suivant différents trajets (direct et réfléchi sur les structures du porteur ou autres structures externes) ou si le réseau utilisé n'est pas normalisé en gain (cas d'un réseau à goniométrie d'amplitude) ;
- $(c_{var}, c_{mod}, c_{col})$ = (1,1,0) si $L = 1$ ;
- $(c_{var}, c_{mod}, c_{col})$ = (0,0,1) s'il n'y a qu'une fréquence d'échantillonnage par chaîne de réception et si le module des mesures est amené à varier d'une antenne à l'autre (pour les raisons précitées) ;
- $(c_{var}, c_{mod}, c_{col})$ = (0,1,0) s'il n'y a qu'une fréquence d'échantillonnage par chaîne de réception et si $L = 1$
- $(c_{var}, c_{mod}, c_{col})$ = (1,0,0) si le module des mesures est amené à varier d'une antenne à l'autre (pour les raisons précitées) et si $L = 1$.

Le traitement élimine ensuite de l'ensemble des $R$ vecteurs $Y_{p,m}$, ceux dont l'indice de fréquence d'échantillonnage m correspond à une fréquence d'échantillonnage parasitée. Sur l'ensemble des vecteurs $Y_{p,m}$ ainsi obtenu, on procède à une détection conventionnelle du signal en présence de bruit thermique.

Ce traitement est répété pour tous les domaines temps/fréquence, ou, dans la variante avec prédétection, sur tous les domaines temps/fréquence sélectionnés par la prédétection.

CAS BIPOLARISATION

Avant de décrire plus précisément plusieurs modes de réalisation de manière détaillée, il est expliqué rapidement la démarche inventive suivie par le demandeur en partant d'abord du besoin.

Un besoin est de disposer d'une fonction de détection enrichie, permettant de déterminer non seulement s'il y a présence ou absence de signal utile à une fréquence donnée, mais aussi dans quelle situation de parasitage on se trouve (absence de parasites, ou présence de parasites, et quelles sont les fréquences d'échantillonnages parasités), avec le moins d'erreur possible. Dans le cas où le nombre de fréquences d'échantillonnages est égal à $M$, et le nombre de fréquences d'échantillonnage parasitées est strictement supérieur à $M$ - 2, on cherchera seulement à savoir qu'on se trouve dans cette situation (sans chercher à savoir quelles sont les voies parasitées), également avec le moins d'erreur possible.

Cela permettra d'améliorer les performances de la détection elle-même, mais aussi des autres fonctions de la chaîne de traitement (estimation de la direction d'arrivée, caractérisation du signal). Un autre avantage est que cela permettra d'utiliser des composants de conversion analogique-numérique fonctionnant à des fréquences plus faibles que la fréquence de Nyquist, tout en minimisant les effets du repliement spectral.

La littérature qui traite de la détection suppose en général que le signal reçu est seul dans son environnement, et n'aborde pas la problématique du parasitage, c'est-à-dire des interférences entre signaux dues au repliement spectral.

Il est proposé d'utiliser l'architecture du récepteur présenté à la figure 8, dans le cas particulier d'une fréquence d'échantillonnage par antenne.

Cette architecture est celle d'un interféromètre bipolarisation à large bande instantanée, à réception numérique à sous-échantillonnage. L'interféromètre est constitué de deux sous-réseaux comportant chacun le même nombre $P$ d'antennes très large bande. Chaque sous-réseau possède sa polarisation propre. Chacune des $P$ antennes est connectée à l'entrée d'une chaîne de réception large bande instantanée, réalisée de manière analogique. Chaque chaîne de réception analogique délivre en sortie son signal à au moins un module de réception numérique, constitué d'un module de conversion analogique-numérique suivi d'un module de traitement numérique du signal apte à effectuer une analyse spectrale. L'ensemble des modules de conversion analogique-numérique utilise un ensemble de *M* fréquences d'échantillonnage différentes et inférieures à la fréquence de Nyquist. Une même fréquence d'échantillonnage peut être utilisée plusieurs fois, mais nécessairement en association avec des modules de conversion analogique-numérique correspondant à des antennes différentes.

Il est appelé voie de réception l'ensemble formé par un module de réception conversion numérique et la chaîne de réception analogique à laquelle il est associé, notée $CR_{1p}$ pour le sous-réseau 1 et $CR_{2q}$ pour le sous-réseau 2.

Comme expliqué précédemment, le problème technique rencontré avec le sous-échantillonnage est que deux signaux superposés temporellement peuvent également, par repliement spectral, se superposer fréquentiellement dans la zone de Nyquist de travail, bien que cette superposition n'existe pas dans la bande de réception. S'intéressant à l'un des deux signaux, on parle alors de parasitage dudit signal dû au repliement spectral. On peut noter que le problème touche évidemment les deux signaux par réciprocité.

Il n'est pas proposé de traiter le cas des signaux de fréquences suffisamment voisines à l'origine dans la bande de réception, qui y sont donc non résolus en fréquence (*cf.* vrais mélanges). Ce cas est toutefois de probabilité bien plus faible que celle des cas traités.

Le procédé proposé a pour but de déterminer, en fonction des mesures, la situation de parasitage dû au repliement spectral (absence ou présence de parasités, et, en cas de présence de parasites, quelles sont les fréquences d'échantillonnage parasitées).

Dans la mesure où l'on admet qu'il n'y a pas plus de deux fréquences d'échantillonnage parmi M affectées par un parasitage du signal, le nombre de situations de parasitage possibles vaut $\frac{M^2+M+2}{2}$ (1 pour aucune fréquence parasitée, *M* pour une seule fréquence parasitée et $\frac{M(M-1)}{2}$ pour deux fréquences parasitées).

Le demandeur propose d'exploiter le fait que les signaux d'intérêt sont généralement étalés dans plusieurs canaux d'analyse spectrale adjacents et présents dans plusieurs analyses spectrales successives, et modélise les mesures extraites sur plusieurs canaux adjacents et plusieurs analyses successives sous forme vectorielle.

Une idée du demandeur est notamment d'approximer, pour chaque situation de parasitage possible, la vraisemblance des mesures par un majorant calculable uniquement au moyen de modules carrés, de produits scalaires et de filtrage des vecteurs de mesures prélevées sur l'ensemble des voies de réception, et interprétable comme la somme de critères respectivement leur variabilité, l'égalité de leur module et leur colinéarité, calculés sur les deux réseaux conjointement.

Le procédé proposé détermine la situation de parasitage (absence ou présence de parasites, et, en cas de parasitage, les fréquences d'échantillonnage affectées), en maximisant, sur toutes les situations de parasitage possible, l'approximation préalablement obtenue, ou en maximisant son adéquation à sa loi supposée gaussienne.

La situation de parasitage étant connue, le procédé élimine ensuite les voies parasitées et exploite uniquement les voies non parasitées pour décider s'il y a présence ou absence de signal utile en mettant en œuvre une méthode de détection conventionnelle sur bruit thermique.

De manière synthétique, il est possible d'exprimer ce qui vient d'être exposé comme un procédé de détermination des situations de parasitage dues aux repliement spectral et procédé de détection de signaux électromagnétiques mis en œuvre au moyen d'un réseau interférométrique, composé de deux sous-réseaux monopolarisation à *P* antennes à bande large, *P* étant un entier supérieur ou égal à 1, chaque antenne étant suivie d'un ou plusieurs modules de réception numérique, le nombre de modules de réception numérique étant *R* sur chaque sous-réseau, répartis de manière identique sur les deux sous-réseaux, le dit procédé comprenant :

- Une étape d'échantillonnage des signaux délivrés par l'ensemble des chaînes de réception, à l'aide de *M* fréquences d'échantillonnage $fe_m$ différentes, inférieures à la fréquence de Nyquist-Shannon, *m* allant de 1 à *M,* et *M* étant un entier supérieur ou égal à 4, le nombre de modules de réception numérique fonctionnant avec une fréquence d'échantillonnage $fe_m$ étant identique sur chaque réseau et étant égal à $R_m$ , le nombre de modules de réception numérique pour une antenne p du sous-réseau 1 étant $Q_p$, et le nombre de modules de réception numérique pour une antenne du sous-réseau 2 étant $Q_q$, avec $R = \sum_{m=1}^{M} R_m = \sum_{p=1}^{P} Q_p$

- Sur chaque module de réception, une étape d'analyse spectrale par des transformées de Fourier discrètes successives, et synchrones sur tous les 2*R* modules de réception, des $N_m$ échantillons procurés par l'échantillonnage à la fréquence $fe_m$ pendant des intervalles de temps de durée $\Delta T$ éventuellement recouvrants, permettant d'obtenir, sur chacun des 2R modules de réception, une représentation temps/fréquence appelée grille, de résolution tempo-

relle $\Delta T$ commune à tous les modules de réception numérique, et de résolution fréquentielle $\Delta F$ commune à tous les modules de réception numérique, chaque élément de la grille étant appelé case temps/fréquence et contenant une grandeur complexe appelée mesure.

- Une étape, réalisable hors ligne, de mise en correspondance des fréquences dans la bande de réception à la résolution $\Delta F$ avec les fréquences de la bande de Nyquist de chacun des $2R$ modules de réception numérique.
- Une étape de découpage de l'espace temps/fréquence (dans la bande de réception) par un ensemble de domaines temps/fréquence éventuellement recouvrants, perçus dans les $R$ modules de réception du sous-réseau 1 et dans les $R$ modules de réception du sous-réseau 2 comme $2R$ fenêtres superposables, chacune des fenêtres étant composée de $L$ cases temps/fréquence.
- Eventuellement, une étape de sélection des domaines temps/fréquence présumés ne pas contenir que du bruit, par application d'un algorithme de pré-détection consistant à comparer la somme quadratique des modules des $2R$ vecteurs de mesures de chaque domaine temps/fréquence, à un seuil prédéfini, réglé pour une probabilité de fausse alarme assez forte.
- Pour chaque domaine temps/fréquence, ou pour les domaines sélectionnés, une étape de transformation des mesures prélevées dans chacune des $2R$ fenêtres sous forme de $R$ vecteurs de dimension $L \times 1$ pour le sous-réseau 1, notés $Y_{1pm}$, où $p$ est l'indice du capteur et $m$ l'indice de l'échantillonnage, et sous forme de $R$ vecteurs de dimension $L \times 1$ pour le sous-réseau 2, notés $Y_{2pm}$, où $q$ est l'indice du capteur et $m$ l'indice de l'échantillonnage.
- Pour chaque domaine temps/fréquence, ou pour les domaines sélectionnés, une étape de détermination de la présence de parasites éventuels consistant à choisir, parmi les hypothèses suivantes:

  • $H_0$ : absence de parasite,
  • $H_{m_0}$ : présence de un parasite (ou plus) sur l'échantillonnage $m_0$, avec $m_0 \in [1, M]$ (soit $M$ hypothèses),
  • $H_{m_0,m_1}$ : présence de un parasite (ou plus) sur l'échantillonnage $m_0$ et de un parasite (ou plus) sur l'échantillon-nage $m_1$ , avec $m_1 \in [1, M]$, $m_0 = m_1$) $m_0 \in [1, M]$ (soit $M(M - 1)/2$ hypothèses),

  celle maximisant une approximation calculable de la densité de probabilité des $R$ mesures $Y_{1pm}$ et des $R$ mesures $Y_{2qm}$, cette approximation résultant :

  • d'une modélisation des mesures $Y_{1pm}$ et $Y_{2qm}$ supposées non parasitées par des échantillons indépendants d'une variable aléatoire vectorielle complexe de dimension $L$, de densité de probabilité gaussienne de moyenne $Ae^{i\varphi}$ et de covariance $2\sigma^2 I_L$, où $A$ est le vecteur complexe de dimension $L$ représentant le signal utile, $\varphi_p$ le déphasage interférométrique, $2\sigma^2$ la puissance du bruit dans une case temps/fréquence, et $I_L$ la matrice identité de dimension $L \times L$.

  • d'une modélisation des mesures $Y_{1pm}$ et $Y_{2qm}$ supposées parasitées par des vecteurs complexes de dimension $L$, où les composantes de ces vecteurs sont des échantillons indépendants d'une variable aléatoire complexe centrée à composantes réelle et imaginaire indépendantes et uniformément distribuées sur un intervalle de largeur $\sqrt{C}$ de telle sorte que la densité de probabilité des mesures sera $(1/C)^L$.

  • puis d'une majoration de la densité de probabilité des $2R$ vecteurs de mesures $Y_{1pm}$ et $Y_{2qm}$,

  l'approximation ainsi obtenue étant égale à une combinaison linéaire de :

  • un critère monopolarisation appliqué au premier sous-réseau (selon le procédé décrit dans le cas monopolarisation),

  • un critère monopolarisation appliqué au deuxième sous-réseau (selon le procédé décrit dans le cas monopolarisation),

  • un critère bipolarisation d'égalité des modules et de colinéarité.

- Sur chaque domaine temps/fréquence, ou sur les domaines sélectionnés, une étape de détection de la présence de signal utile, les mesures contenant des parasites ayant été éliminées.

Suivant des modes de réalisation spécifique, le procédé comporte l'une des caractéristiques suivantes prises isolément ou en combinaison :

- A l'étape de détermination de la situation de parasitage, les approximations à calculer sont les suivantes, pour les différentes hypothèses :

• Pour l'hypothèse $H_0$ (aucun parasite présent), la grandeur $\hat{\Gamma}_0$ , noté aussi $\tilde{\Gamma}_0$:

$\hat{\Gamma}_0 = \lambda_0$, où $\lambda_0$ est la valeur propre maximum de l'expression quadratique en $c_1$, $c_2$ :

$$FQ_0 = \frac{1}{2\sigma^2}\left(\gamma_{1,0}^{var} + \gamma_{2,0}^{var}\right) + \frac{R}{2\sigma^2}\left(c_1^2\left(\gamma_{1,0}^{col} + \gamma_{2,0}^{mod}\right) + c_2^2\left(\gamma_{2,0}^{col} + \gamma_{2,0}^{mod}\right) + fq_0\right)$$

Où $fq_0$ est l'expression quadratique :

$$fq_0 = -c_1^2 \sum_q \alpha_q \left\|Z_{2q}\right\|^2 - c_2^2 \sum_p \alpha_p \left\|Z_{1p}\right\|^2 + 2c_1c_2 \sum_{p,q} \alpha_p\alpha_q \left|Z_{1p}^* Z_{2q}\right|$$

qui peut être interprétée comme un critère bipolarisation d'égalité des modules et de colinéarité,
où $\gamma_{10}^{var}$ , $\gamma_{10}^{mod}$ ,$\gamma_{10}^{col}$ , $\gamma_{20}^{var}$ , $\gamma_{20}^{mod}$ ,$\gamma_{20}^{col}$ sont les critères monopolarisation de non-variabilité, d'égalité des modules et de colinéarité respectivement pour les sous-réseaux 1 et 2 pour l'hypothèse « aucun parasite présent » , définis dans le procédé décrit dans le cas monopolarisation,
où $\alpha_p$ est la proportion des modules de réception numérique fonctionnant avec l'antenne d'indice $p$ sur le sous-réseau 1, $\alpha_q$ est la proportion des modules de réception numérique fonctionnant avec l'antenne d'indice q sur le sous-réseau 2,
où $Z_{1p}$ est la moyenne des vecteurs $Y_{1pm}$ sur tous les échantillonnages de l'antenne $p$ du sous-réseau 1:
$Z_{1p} = \frac{1}{Q_p}\sum_m Y_{1pm}$ et où $Z_{2q}$ est la moyenne des vecteurs $Y_{2qm}$ sur tous les échantillonnages de l'antenne $q$ du sous-réseau 1: $Z_{2q} = \frac{1}{Q_q}\sum_m Y_{2qm}$ ,
où $Q_p$ est le nombre de modules de réception numérique fonctionnant avec l'antenne d'indice $p$ sur le sous-réseau 1, et $Q_p$ le nombre de modules de réception numérique fonctionnant avec l'antenne d'indice $p$ sur le sous-réseau 2,
où $c_1$ (resp $c_2$) représente le gain du sous-réseau 1 (resp 2) dans la polarisation du signal incident.

Le vecteur $\begin{pmatrix} c_1 \\ c_2 \end{pmatrix}$ est alors estimé par le vecteur propre associé à $\lambda_0$.

• Pour les hypothèses $H_{m_0}$ (un parasite ou plus présent sur la fréquence d'échantillonnage $m_0$) , les grandeurs

$\hat{\Gamma}_{m_0} = 2R_{m_0}L\,ln\left(\frac{2\pi\sigma^2}{C}\right) + \lambda_{m_0}$ , où $R_{m_0}$ est le nombre de modules de réception numérique fonctionnant avec la fréquence $f_{m_0}$ dans chacun des deux sous-réseaux, et où $\lambda_{m_0}$ est la valeur propre maximum de l'expression quadratique en $c_1$, $c_2$ : $FQ_{m_0} = \frac{1}{2\sigma^2}\left(\gamma_{1,m_0}^{var} + \gamma_{2,m_0}^{var}\right) +$

$\frac{R-R_{m_0}}{2\sigma^2}\left(c_1^2\left(\gamma_{1,m_0}^{col} + \gamma_{1,m_0}^{mod}\right) + c_2^2\left(\gamma_{2,m_0}^{col} + \gamma_{2,m_0}^{mod}\right) + fq_{m_0}\right)$

Où $fq_{m_0}$ est l'expression quadratique :

$$fq_{m_0} = -c_1^2 \sum_q \alpha_{qm_0} \left\| Z_{2qm_0} \right\|^2 - c_2^2 \sum_p \alpha_{pm_0} \left\| Z_{1pm_0} \right\|^2$$
$$+ 2c_1 c_2 \sum_{p,q} \alpha_{pm_0} \alpha_{qm_0} \left| Z_{1pm_0}^* Z_{2qm_0} \right|$$

qui peut être interprétée comme un critère bipolarisation d'égalité des modules et de colinéarité,

où $\gamma_{1m_0}^{var}$, $\gamma_{1m_0}^{mod}$, $\gamma_{1m_0}^{col}$, $\gamma_{2m_0}^{var}$, $\gamma_{2m_0}^{mod}$, $\gamma_{2m_0}^{col}$ sont les critères monopolarisation de non variabilité, d'égalité des modules et de colinéarité, pour le sous-réseau 1 et le sous-réseau 2 respectivement, pour l'hypothèse « une fréquence d'échantillonnage parasitée », définis dans le procédé décrit dans le cas monopolarisation,

où $\alpha_{pm_0}$ est la proportion des modules de réception numérique rattachés à l'antenne d'indice $p$ sur le sous-réseau 1, qui ne fonctionnent pas avec la fréquence $fe_{m_0}$ et $\alpha_{qm_0}$ est la proportion des modules de réception numérique rattachés à l'antenne d'indice $q$ sur le sous-réseau 2, qui ne fonctionnent pas avec la fréquence $fe_{m_0}$,

où

$$Z_{1pm_0} = \frac{1}{Q_{pm_0}} \sum_{m \neq m_0} Y_{1pm} \text{ et } Z_{2qm_0} = \frac{1}{Q_{qm_0}} \sum_{m \neq m_0} Y_{2qm},$$

où $Q_{p,m_0}$ est le nombre de modules de réception numérique rattachés à l'antenne d'indice $p$ sur le sous-réseau 1, qui ne fonctionnent pas avec la fréquence $fe_{m_0}$ et $Q_{q,m_0}$ est le nombre de modules de réception numérique rattachés à l'antenne d'indice $q$ sur le sous-réseau 2, qui ne fonctionnent pas avec la fréquence $fe_{m_0}$,

où $R_{m_0}$ est le nombre de modules de réception numérique fonctionnant avec la fréquence d'échantillonnage $fe_{m_0}$ sur chaque sous-réseau,

où $c_1$ (resp $c_2$) représente le gain du sous-réseau 1 (resp 2) dans la polarisation du signal incident.

Le vecteur $\begin{pmatrix} c_1 \\ c_2 \end{pmatrix}$ est alors estimé par le vecteur propre associé à $\lambda_{m_0}$.

- Pour les hypothèses $H_{m_0,m_1}$ (un parasite ou plus présent sur la fréquence d'échantillonnage $m_0$ et un parasite (ou plus) présent sur la fréquence d'échantillonnage $m_1$), les grandeurs :

$$\hat{\Gamma}_{m_0 m_1} = \ln \tilde{p}_{m_0 m_1} = 2R_{m_0 m_1} L \ln\left( \frac{2\pi\sigma^2}{C} \right) + \lambda_{m_0 m_1}$$

où $R_{m_0 m_1}$ est le nombre de modules de réception numérique fonctionnant avec la fréquence $fe_{m_0}$ ou avec la fréquence $fe_{m_1}$ dans chacun des deux sous-réseaux, et où $\lambda_{m_0 m_1}$ est la valeur propre maximum de l'expression quadratique :

$$FQ_{m_0 m_1} = \frac{1}{2\sigma^2}\left( \gamma_{1,m_0 m_1}^{var} + \gamma_{2,m_0 m_1}^{var} \right)$$
$$+ \frac{R - R_{m_0 m_1}}{2\sigma^2}\left( c_1^2\left( \gamma_{1,m_0 m_1}^{col} + \gamma_{1,m_0 m_1}^{mod} \right) + c_2^2\left( \gamma_{2,m_0 m_1}^{col} + \gamma_{2,m_0 m_1}^{mod} \right) + fq_{m_0 m_1} \right)$$

Où $fq_{m_0 m_1}$ est l'expression quadratique :

$$fq_{m_0 m_1} = -c_1^2 \sum_q \alpha_{qm_0 m_1} \left\| Z_{2qm_0 m_1} \right\|^2 - c_2^2 \sum_p \alpha_{pm_0 m_1} \left\| Z_{1pm_0 m_1} \right\|^2$$
$$+ 2c_1 c_2 \sum_{p,q} \alpha_{pm_0 m_1} \alpha_{qm_0 m_1} \left| Z_{1pm_0 m_1}^* Z_{2qm_0 m_1} \right|$$

qui peut être interprétée comme un critère bipolarisation d'égalité des modules et de colinéarité,

où $\gamma_{1m_0m_1}^{var}$ , $\gamma_{1m_0m_1}^{mod}$, $\gamma_{1m_0m_1}^{col}$ , $\gamma_{2m_0m_1}^{var}$ , $\gamma_{2m_0m_1}^{mod}$, $\gamma_{2m_0m_1}^{col}$ sont les critères monopolarisation de non-variabilité, d'égalité des modules et de colinéarité respectivement pour les sous-réseaux 1 et 2 pour les hypothèses à deux fréquences d'échantillonnage parasitées, définis dans le procédé décrit dans le cas monopolarisation,

où $\alpha_{pm_0m_1}$ est la proportion de de modules de réception numérique rattachés à l'antenne d'indice $p$ du sous-réseau 1 qui ne fonctionnent ni avec la fréquence d'échantillonnage $fe_{m_0}$ , ni avec la fréquence d'échantillonnage $fe_{m_0}$, et où $\alpha_{qm0m_1}$ est la proportion de modules de réception numérique rattachés à l'antenne d'indice $q$ du sous-réseau 2 qui ne fonctionnent ni avec la fréquence d'échantillonnage $fe_{m_0}$, ni avec la fréquence d'échantillonnage $fe_{m_1}$, où

$$Z_{1pm_0m_1} = \frac{1}{Q_{pm_0m_1}}\sum_{m\neq m_0,m_1} Y_{1pm} \text{ et } Z_{2pm_0pm_1} = \frac{1}{Q_{qm_0,m_1}}\sum_{m\neq m_0,m_1} Y_{2qm}.$$

où $Q_{p,m_0,m_1}$ est le nombre de modules de réception numérique rattachés à l'antenne d'indice $p$ qui ne fonctionnent ni avec la fréquence d'échantillonnage $fe_{m_1}$, ni avec la fréquence d'échantillonnage $fe_{m_1}$ sur le sous-réseau 1, et $Q_{q,m_0,m_1}$ est le nombre de modules de réception numérique rattachés à l'antenne d'indice $q$ qui ne fonctionnent ni avec la fréquence d'échantillonnage $fe_{m_0}$, ni avec la fréquence d'échantillonnage $fe_{m_1}$ sur le sous-réseau 2,

où $R_{m_0m_1}$ est le nombre de modules de réception numérique fonctionnant avec la fréquence d'échantillonnage $fe_{m_0}$ ou $fe_{m_1}$ sur chaque sous-réseau,

où $c_1$ (resp $c_2$) représente le gain du sous-réseau 1 (resp 2) dans la polarisation du signal incident.

Le vecteur $\begin{pmatrix} c_1 \\ c_2 \end{pmatrix}$ est alors estimé par le vecteur propre associé à $\lambda_0$.

Dans un premier mode de réalisation, le procédé comporte les déductions suivantes :

si $\hat{\Gamma}_0$ = max ($\hat{\Gamma}_0$, $\hat{\Gamma}_{m0}$, $\hat{\Gamma}_{m0,m1}$), alors il y a absence de parasite (hypothèse $H_0$ ).
s'il existe $\hat{m}_0$ tel que $\hat{\Gamma}_0$ = max ($\hat{\Gamma}_0$, $\hat{\Gamma}_{m0}$, $\hat{\Gamma}_{m0,m1}$), alors il y a une seule fréquence d'échantillonnage parasitée, et cette fréquence d'échantillonnage est $\hat{m}_0$ (hypothèse $H_{\hat{m}_0}$).
s'il existe un couple $\hat{m}_0$, $\hat{m}_1$ tel que $\hat{\Gamma}_{\hat{m}_0,\hat{m}_1}$ = max ($\hat{\Gamma}_0$, $\hat{\Gamma}_{m0}$, $\hat{\Gamma}_{m0,m1}$), alors il y a deux fréquences d'échantillonnage parasitées, et ces fréquences sont $\hat{m}_0$ et $\hat{m}_1$ (hypothèse $H_{\hat{m}_0\hat{m}_1}$).

Dans un deuxième mode de réalisation, le procédé comporte une étape de calcul de :

$$\widetilde{\Gamma}_0 = \tilde{\Gamma}_0$$

$$\widetilde{\Gamma}_1 = \max_{m_0=1,...,M}\left(\tilde{\Gamma}_{m_0}\right)$$

$$\widetilde{\Gamma}_2 = \max_{\substack{m_0=1,...,M \\ m_1=1,...,M \\ m_0\neq m_1}}\left(\tilde{\Gamma}_{m_0m_1}\right)$$

où :

- $\tilde{\Gamma}_0$ représente l'hypothèse « absence de parasite ». Cette hypothèse est appelée $\boldsymbol{H}_0$ ;
- $\tilde{\Gamma}_1$ représente la meilleure des hypothèses à une fréquence d'échantillonnage parasitée $H_{m_0}$, appelée $\boldsymbol{H}_1$, et
- $\tilde{\Gamma}_2$ représente la meilleure des hypothèses à deux fréquences d'échantillonnage parasitées $H_{m_0,m_1}$, appelée $\boldsymbol{H}_2$.

dans ce deuxième mode de réalisation, le procédé comporte aussi la détermination de la meilleure hypothèse parmi

$H_0, H_1, H_2$, celle choisie étant:

$H_0$ , si sa log-densité approchée $\tilde{\Gamma}_0$ satisfait le test d'adéquation à sa loi supposée gaussienne (voir cas monopolarisation),
Sinon, $H_1$, si sa log-densité approchée restreinte aux voies non parasitées $\tilde{\Gamma}_1$ satisfait le test d'adéquation à sa loi supposée gaussienne (voir cas monopolarisation),
Sinon, $H_2$, si la log-densité approchée restreinte aux voies non parasitées $\tilde{\Gamma}_2$ satisfait le test d'adéquation à sa loi supposé gaussienne (voir cas monopolorisation),
Sinon, il y a plus que deux fréquences d'échantillonnage qui sont parasitées.

- Le nombre de fréquences d'échantillonnages total $M$ est supérieur ou égal à 3, et le procédé détermine la situation de parasitage parmi toutes les hypothèses : aucune fréquence d'échantillonnage parasitée, une fréquence d'échantillonnage parasitées, etc, jusqu'à $M$ - 2 fréquences d'échantillonnage parasitées.
- Les signaux traités sont réels ou complexes.
- Le procédé fonctionne en mode dégradé si la résolution $\Delta F$ n'est pas identique pour toutes les grilles.

Il est maintenant décrit un exemple de mise en œuvre plus détaillée.
La figure 8 illustre l'architecture d'un interféromètre 10 dans le cas particulier d'une fréquence d'échantillonnage par antenne.
Le sous-réseau 1 comprend $P$ antennes $A_{1,1,...,}$ $A_{1,P}$, très large bande, suivies chacune d'une chaîne de réception $CR_{1,1,...,}$ $CR_{1,P}$ . Le sous-réseau 2 comprend $P$ antennes $A_{2,1,...,}$ $A_{2,P}$, très large bande, suivies chacune d'une chaîne de réception $CR_{2,1,...,}$ $CR_{2,P}$. Dans le cas général $P$ est un nombre entier supérieur ou égal à 2.
Le procédé proposé s'applique aussi au cas $P = 1$.
On suppose que les antennes des deux sous-réseaux ont des diagrammes identiques deux à deux, à la polarisation près. Les deux sous-réseaux peuvent être ou non colocalisés.
Pour la suite, l'indice $p$ (respectivement l'indice $q$) de chaque antenne du sous-réseau 1 (respectivement du sous-réseau 2) est un nombre entier compris entre 1 et $P$, servant également de référence à tous les éléments qui lui sont rattachés, moyens matériels, mesures et grandeurs diverses calculées.
Les centres de phase des antennes peuvent être répartis dans l'espace. La répartition spatiale des antennes $A_{1,1,...,}$ $A_{1,P}$ et $A_{2,1,...,}$ $A_{2,P}$, est définie pour assurer une précision et un taux d'ambiguïtés angulaire spécifiés.
Derrière chaque antenne, un filtre analogique sélectionne une très large bande [$f_{min}$, $f_{max}$].
Pour un signal bande étroite émis par une source à l'infini, le signal délivré par l'antenne d'indice $p$ du sous-réseau 1 possède l'expression suivante :

$$s_{1p}(t) = c_{1p}a(t)\cos\left(2\pi ft + \Phi(t) + \varphi_{1p}(\theta,\lambda)\right) + b_{1p}(t)$$

- $c_{1,p}$ est un réel représentant le gain de l'antenne $p$ dans la polarisation et la direction d'arrivée du signal incident.
- $f$ est la fréquence porteuse du signal incident comprise dans la bande de réception ; f=c/$\lambda$ où $c$ est la vitesse de la lumière et $\lambda$ la longueur d'onde.
- $a(t)$ et $\Phi(t)$ sont les modulations du signal incident ;
- $\varphi_{1p}(\theta,\lambda)$ est la somme du déphasage interférométrique du signal incident au centre de phase $M_p$ de l'antenne considérée relativement à un point de référence $0$, $\varphi_{1p}(\theta,\lambda) = \frac{2\pi}{\lambda}\overrightarrow{OM_p} \cdot \vec{u}(\theta)$ où $\vec{u}(\theta)$ est le vecteur unitaire dirigé dans la direction d'arrivée du signal incident $\theta$, objet principal de l'interféromètre, et de la phase du gain complexe de l'antenne dans la direction du signal incident ;
- $b_{1p}(t)$ est le bruit thermique des chaînes de réception, supposé gaussien et indépendant entre chaînes de réception, et de densité spectrale uniforme et identique pour toutes les chaînes de réception ;

De même sur le sous-réseau 2 :

$$s_{2q}(t) = c_{2q}a(t)\cos\left(2\pi ft + \Phi(t) + \varphi_{2q}(\theta,\lambda)\right) + b_{2q}(t)$$

- $c_{2,q}$ est un réel représentant le gain de l'antenne $q$ dans la polarisation et la direction d'arrivée du signal incident.
- $\varphi_{2q}(\theta,\lambda)$ est la phase interférométrique du signal incident au centre de phase $M_q$ de l'antenne considérée relativement à un point de référence 0, $\varphi_{2q}(\theta, \lambda) = \frac{2\pi}{\lambda} \overrightarrow{OM_q} \cdot \vec{u}(\theta)$ où $\vec{u}(\theta)$ est le vecteur unitaire dirigé dans la direction d'arrivée du signal incident $\theta$, objet principal de l'interféromètre ;

- $b_{2q}(t)$ est le bruit thermique des chaînes de réception, supposé gaussien et indépendant entre chaînes de réception, et de densité spectrale uniforme et identique pour toutes les chaînes de réception ;

Chaque chaîne de réception $CR_{1,1,...}$, $CR_{1,P}$ (respectivement $CR_{2,1,...}$, $CR_{2,P}$) est constituée d'une partie strictement analogique qui est suivie d'au moins un module de réception numérique 20 comprenant un module de conversion analogique-numérique 22 associé à une fréquence d'échantillonnage 24 suivi d'un module de traitement numérique du signal 26.

Le module de conversion analogique-numérique 22 est propre à effectuer un échantillonnage du signal à la fréquence d'échantillonnage 24.

La fréquence d'échantillonnage 24 est telle que la bande de réception du signal analogique n'est pas contenue dans une seule zone de Nyquist. La fréquence d'échantillonnage 24 est inférieure voire très inférieure à la fréquence de Nyquist, mais elle reste bien supérieure à l'étalement spectral des signaux d'intérêt. Ainsi le spectre des signaux d'intérêt est préservé, mais il est translaté d'une éventuelle quantité qui dépend de la fréquence d'échantillonnage.

Un module de traitement numérique du signal 26 est propre à effectuer une analyse spectrale du signal converti en numérique, avec une transformée de Fourier discrète (TFD) pondérée.

L'interféromètre 10 comporte également un calculateur 28 récoltant les mesures obtenues en sortie de chaque module de traitement numérique du signal 26, et propre à obtenir la direction d'arrivée du signal incident sur l'ensemble des antennes $A_{1,1,...}$, $A_{1,P}$ et $A_{2,1,...}$, $A_{2,P}$. Ce calculateur 28 est également propre à mettre en œuvre un procédé de détermination de situations de parasitage du signal dans la zone de Nyquist analysée par TFD.

L'interféromètre 10 dispose au total de $M$ valeurs de fréquences d'échantillonnage 24 différentes de façon à lever les ambiguïtés en fréquence quand on passe de la fréquence mesurée dans la zone de Nyquist utilisée (a priori la première) par la TFD, à la fréquence dans la bande de réception, $M$ étant un nombre entier supérieur ou égal à 3.

Une des caractéristiques du procédé est de minimiser les effets de parasitage dus au repliement spectral sur les performances de la détection, et d'améliorer les performances des autres fonctions de la chaîne de traitement (estimation de la direction d'arrivée, caractérisation du signal) lorsque :

- 1 fréquence d'échantillonnage est parasitée, si $M$ vaut 3
- 1 *ou* 2 fréquences d'échantillonnage sont parasitées, si $M$ vaut 4
- 1,2, ... $M$ - 2 fréquences d'échantillonnage sont parasitées, si $M$ > 4.

Ces M valeurs de fréquences d'échantillonnage 24 sont affectées aux modules de conversion analogique-numérique 22 échantillonnant le signal fourni par les chaînes de réception respectivement en amont, à la fréquence d'échantillonnage $fe_m$, $m$ étant un nombre entier compris entre 1 et $M$. Les fréquences d'échantillonnage sont distribuées de façon identique sur les deux sous-réseaux.

Si une fréquence d'échantillonnage donnée est affectée à un module de conversion analogique-numérique associé à une antenne donnée d'un sous-réseau, elle ne l'est qu'une seule fois.

Sur chaque sous-réseau, le nombre de modules de réception numérique est identique et prend une valeur $R$ est au plus égale à $P \cdot M$. En pratique, pour des raisons matérielles, on cherche à minimiser $R$ tout en conservant les performances de goniométrie de l'interféromètre.

$R_m$ est le nombre de modules de réception numérique fonctionnant avec la fréquence d'échantillonnage $fe_m$ sur chaque sous-réseau. C'est aussi le nombre d'antennes associées à cette fréquence d'échantillonnage. On note que $R = \sum_{m=1}^{M} R_m$ , que toutes les valeurs de $R_m$ ne sont pas nécessairement identiques et que $R_m \leq P$.

$Q_p$ est le nombre de modules de réception numérique fonctionnant avec l'antenne d'indice $p$ sur le sous-réseau 1, $\alpha_p = \frac{Q_p}{R}$ est la proportion de ces modules de réception numérique. On note que $Q_p \leq M$, que $R = \sum_{p=1}^{P} Q_p$ et que toutes les valeurs de $Q_p$ ne sont pas nécessairement identiques.

$Q_{p,m_0}$ est le nombre de modules de réception numérique rattachés à l'antenne d'indice $p$ sur le sous-réseau 1, qui ne fonctionnent pas avec la fréquence $fe_{m_0}$ , $\alpha_{p,m_0} = \frac{Q_{p,m_0}}{R-R_{m_0}}$ est la proportion de ces modules de réception numérique.

$Q_{p,m_0,m_1}$ est le nombre de modules de réception numérique rattachés à l'antenne d'indice $p$ qui ne fonctionnent ni avec la fréquence d'échantillonnage $fe_{m_0}$, ni avec la fréquence d'échantillonnage $fe_{m_1}$ sur le sous-réseau 1,

$$\alpha_{p,m_0,m_1} = \frac{Q_{p,m_0,m_1}}{R - R_{m_0} - R_{m_1}}$$ est la proportion de ces modules de réception numérique.

On introduit de même pour le sous-réseau 2 : $Q_q$, $\alpha_q$, $Q_{qm_0}$, $\alpha_{qm_0}$, $Q_{qm_0m_1}$, $\alpha_{qm_0m_1}$.

Les modules de traitement numérique du signal 26 effectuent tous une analyse spectrale par TFD glissante du signal qui leur est présenté, afin d'en obtenir une représentation temps/fréquence réalisant une adaptation moyenne à la bande des signaux d'intérêt.

La TFD d'un module de réception numérique travaillant avec la fréquence d'échantillonnage $f_{e,m}$ s'effectue sur une durée de signal $\Delta T_m$ avec un nombre d'échantillons $N_m = \Delta T_m . fe_m$.

Afin d'obtenir des informations synchrones et de même résolution spectrale sur toutes les voies de réception, on impose un début et une fin d'acquisition communes aux TFD de chaque voie de réception. Ainsi pour toutes les valeurs de $m$ :

$$\frac{N_m}{fe_m} = \Delta T_m = \Delta T = \frac{1}{\Delta F}$$

Les intervalles de temps successivement analysés par TFD peuvent être contigus ou à recouvrement. Si $r$ est le taux de recouvrement, les intervalles de temps sont $[i(1 - r)\Delta T, i(2 - r)\Delta T[$ où $i$ est l'indice courant du temps de l'intervalle.

Par exemple avec un recouvrement de 50%, ces intervalles de temps sont $\left[ i\frac{\Delta T}{2}, i\frac{\Delta T}{2} + \Delta T \right[$.

Si le signal d'entrée d'une TFD est réel sur $N_m$ points, la sortie est en conséquence un spectre utile complexe, discret sur $N_m$ points indicés par $j$ allant de 0 à $N_m$ - 1, au pas de $\Delta F$. Si le signal d'entrée est un signal complexe obtenu après double démodulation en quadrature, alors on obtient directement le spectre du signal analytique par une transformée de Fourier à $N_m$ points.

Chaque TFD délivre ainsi dans le temps une grille temps/fréquence.

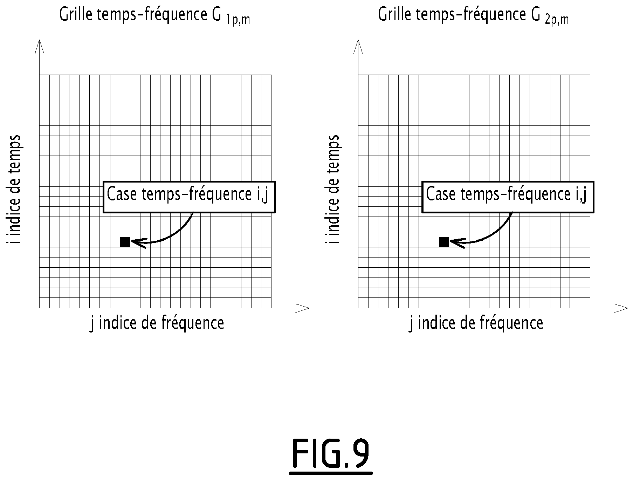

Chaque TFD délivre ainsi dans le temps une grille temps/fréquence. Chaque case d'une grille contient un complexe $y_{1,p,m,i,j}$ (respectivement $y_{2,p,m,i,j}$) indicé par le numéro du sous réseau (1 ou 2), par $j$ en fréquence avec un pas $\Delta F$, par $i$ en temps avec un pas $(1 - r)\Delta T$, par $p$ (respectivement $q$), indice du capteur, et par $m$, indice de fréquence d'échantillonnage. La figure 9 en donne une illustration.

Finalement l'ensemble des $R$ TFD des $R$ modules de réception numérique associés au sous-réseau 1 (respectivement au sous-réseau 2) délivrent $R$ grilles temps/fréquence de même résolution temporelle et fréquentielle. Chacune des grilles temps/fréquence associées au sous-réseau 1 (respectivement sous-réseau 2) est indicée par $p$, et par $m$ (respectivement par $q$, et par $m$) et notée $G_{1,p,m}$ (respectivement $G_{2,p,m}$ ). On dispose ainsi de $2R$ grilles, de même résolution temporelle et fréquentielle.

La bande de réception est supposée découpée en $K$ intervalles de largeur la résolution commune des TFD, $\Delta F$. Chaque intervalle est identifié par un indice $k$. Le traitement élabore, hors ligne, une table de correspondance qui fournit l'indice $j$ de la fréquence dans la bande de Nyquist en fonction de l'indice $k$ de la fréquence dans la bande de réception et de l'indice $m$ de la fréquence d'échantillonnage, $j = j(k, m)$.

La durée de la tranche de temps $\Delta T$ est en général plus courte que celle des signaux d'intérêt, et donc un signal utile apparaît sur plusieurs analyses spectrales successives dans le temps.

Il apparaît aussi dans plusieurs canaux fréquentiels adjacents car son spectre n'est pas nécessairement centré dans un des canaux de la TFD, sa largeur spectrale peut être supérieure à $\Delta F$.

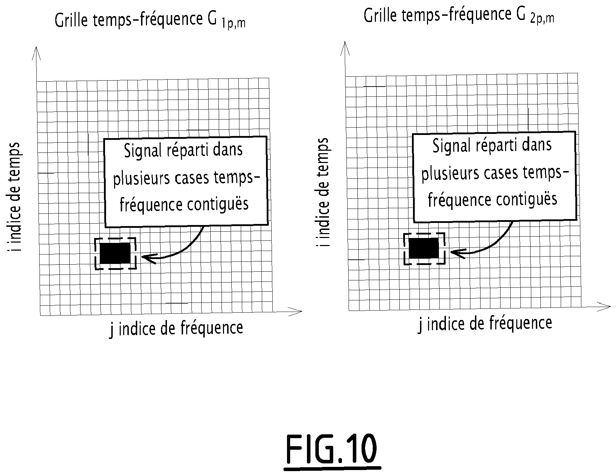

Le résultat est qu'un signal utile est généralement perçu, par les analyses spectrales successives dans le temps, sous la forme d'un ensemble connexe de plusieurs cases temps/fréquences. La figure 10 en donne une illustration.

Il est proposé de modéliser et de traiter le signal reçu sur des domaines temps/fréquence correspondant chacun à un intervalle limité en temps (typiquement la durée de quelques TFD) et en fréquence (typiquement quelques canaux).

La bande $[f_{min}, f_{max}[$ est découpée en intervalles fréquentiels, recouvrants ou non, de largeur $L_2\Delta F$, $L_2$ étant un entier naturel. De même, l'axe temporel est découpé en intervalles, recouvrants ou non, de durée $L_1(1 - r)\Delta T$, $L_1$ étant un entier naturel. Pour chaque domaine temps/fréquence ainsi obtenu, la table de correspondance permet de prélever un ensemble de $L = L_1 \times L_2$ cases temps/fréquences connexes, appelé fenêtre, pour chacune des $R$ voies de réception du sous-réseau 1 et pour chacune des $R$ voies de réception du sous-réseau 2.

Le traitement analyse ensuite tous les domaines temps/fréquence indépendamment les uns des autres.

Un ordre de lecture des cases est choisi arbitrairement et identiquement pour toutes les fenêtres, par exemple, d'abord dans l'axe des fréquences, puis dans l'axe du temps. L'ensemble des $L$ mesures de chaque fenêtre forme un vecteur, appelé vecteur de mesures, qui peut être indicé par l'indice de sous-réseau (1 ou 2), par $p$, le numéro de capteur, $m$, le numéro de la fréquence d'échantillonnage, $i'$ et $j'$ où $i'$ et $j'$ sont choisis parmi les indices $i$ et $j$ des cases de la fenêtre, de manière arbitraire mais identique pour toutes les fenêtres. Par exemple, $i'$ et $j'$ peuvent être choisis égaux à l'indice $i$ et à l'indice $j$ de la case supérieure gauche. Ce vecteur est noté $Y_{1,pmi'j'}$ pour le sous-réseau 1, et $Y_{2,qmi'j'}$ pour le sous-réseau 2.

Avec les conventions prises en exemple, et avec, par exemple, $L_1 = 2$ et $L_2 = 3$ le vecteur $Y_{1,pmi'j'}$ est égal à :

$$Y_{1,p,m,i',j'} = \begin{pmatrix} y_{1,p,m,i',j'} & y_{1,p,m,i',j'+1} & y_{1,p,m,i',j'+2} & y_{1,p,m,i'+1,j'} & y_{1,p,m,i'+1,j'+1} & y_{1,p,m,i'+1,j'+2} \end{pmatrix}^T$$

Où $T$ est l'opérateur de transposition.

Pour simplifier les écritures, un vecteur $Y_{1pmi'j'}$ (respectivement $Y_{2qmi'j'}$) sera par la suite simplement noté $Y_{1pm}$ (respectivement $Y_{2qm}$), étant entendu que les fenêtres intervenant dans le traitement correspondent toutes à un même domaine temps/fréquence, et que tous les domaines temps/fréquence sont traités de manière identique et indépendamment les uns des autres.

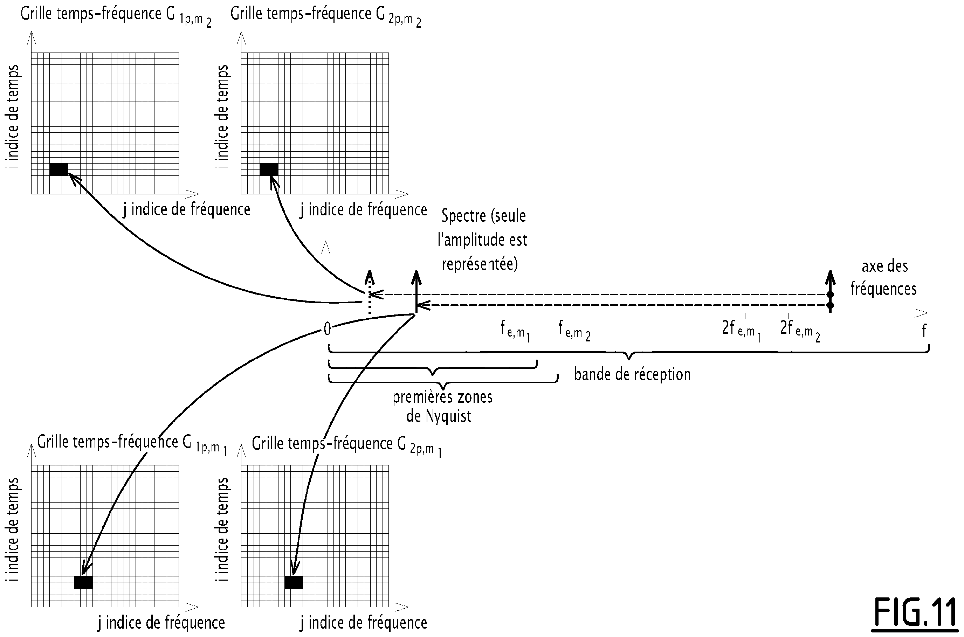

Pour deux fréquences d'échantillonnage différentes, les valeurs de $i'$ sont différentes, et les positions en fréquence des fenêtres sont donc différentes. La figure 11 en donne l'illustration.

Dans une variante du traitement, une étape de prédétection permet de diminuer la quantité de calculs, en éliminant les domaines temps/fréquence ne contenant pas de signal utile. Ce traitement de prédétection consiste, par exemple, à calculer pour chaque domaine temps/fréquence, la somme quadratique des modules des $2R$ vecteurs correspondant à ce domaine temps/fréquence, $\Sigma_{p,m}(\|y_{1pm}\|^2 + \|Y_{2pm}\|^2)$, puis à comparer la valeur obtenue à un seuil prédéfini. Le seuil en question est réglé pour un taux de fausse alarme assez élevé, de façon à garantir qu'aucun domaine temps/fréquence contenant du signal utile soit éliminé à tort, la probabilité de fausse alarme finale étant assurée par l'étape de détection proprement dite.

Dans le cadre du dispositif de réception radioélectrique précédemment décrit, il est à noter le rôle joué par une fonction de détermination, pour deux vecteurs de mesures donnés sur les deux sous-réseaux $(Y_{1pm}, Y_{2qm})$, de la situation de parasitage (absence de parasites, ou présence de parasites, et quelles sont les fréquences d'échantillonnage parasitées). Cette fonction de détermination considère les cas de parasitage suivants :

- Aucune fréquence d'échantillonnage n'est parasitée, hypothèse désignée par $H_0$ ;
- Présence d'un parasite (ou plus) sur une des fréquences d'échantillonnage $m_0$ ($m_0 \in [1,M]$), soit $M$ hypothèses désignées par $H_{m_0}$ ($m_0 \in [1,M]$);
- Présence d'un parasite (ou plus) sur une deuxième fréquence d'échantillonnage $m_1$, différente de $m_0$, soit $M(M-1)/2$ hypothèses désignées par $H_{m_0 m_1}$ ($m_0 \in [1,M], m_1 \in [1,M]$, $m_0 \neq m_1$).

Il est proposé de modéliser les mesures de la façon suivante dans $H_0$ :

$$\begin{cases} Y_{1pm} = c_1 A e^{i\varphi_{1p}} + V_{1pm} \\ Y_{2qm} = c_2 A e^{i\varphi_{2q}} + V_{2qm} \end{cases}$$

Où les deux sous-réseaux sont désignés respectivement par l'indice 1 et 2.

Où $\varphi_{1p}$ est le déphasage interférométrique du signal reçu par l'antenne p, par rapport à une référence, sur le sous-réseau 1, et $\varphi_{2q}$ est le déphasage interférométrique du signal reçu par l' antenne q, par rapport à une référence, sur le sous-réseau 2.

Où $c_1$ (resp $c_2$) est un coefficient sans dimension appelé gain du sous-réseau 1 (resp 2) dans la polarisation du signal incident. On peut supposer que $c_1$ et $c_2$ sont réels positifs, ce qui revient à intégrer leur phase dans les phases interférométriques $\varphi_p$ et $\varphi_q$.

Où $A$ un vecteur complexe représentant le signal utile.

Où $V_{1pm}$ (resp $V_{2pm}$) est le vecteur du bruit thermique sur le sous-réseau 1 (resp 2). Les $V_{1pm}$ (resp $V_{2pm}$) sont des échantillons d'une variable aléatoire vectorielle gaussienne complexe centrée. Ces échantillons sont indépendants d'un p (resp q) à l'autre et ont pour covariance supposée commune et environ égale à $2\sigma^2 I_L$ où $I_L$ est la matrice identité de taille $L \times L$. Pour un même $p$ (resp $q$) et pour deux m différents on peut aussi supposer qu'il y a indépendance des $V_{1pm}$ (resp $V_{2pm}$), car seul le bruit prélevé dans la largeur du filtre de la TFD au voisinage de la vraie fréquence du signal est commun.

Ce modèle est valable pour une onde plane (source supposée à l'infini) et pour un signal utile à bande étroite.

Sur chaque sous-réseau, les mesures sont donc considérées, sous l'hypothèse $H_0$, comme des variables

aléatoires complexes indépendantes vectorielles gaussiennes de moyenne $c_1 A e^{i\varphi_p}$ ou $c_2 A e^{i\Psi_q}$ et de covariance $2\sigma^2 I_L$. Ce modèle est indépendant de la forme d'onde des signaux.

Sur certains échantillonnages, il se peut qu'on mesure, en plus du signal utile, un ou plusieurs signaux parasites présents pendant la même tranche de temps d'analyse spectrale, mais dont la somme ou la différence des fréquences dans la bande de réception ont des valeurs multiples de la fréquence d'échantillonnage.

Lorsqu'il y a présence d'un parasite à une fréquence d'échantillonnage indicée par $m_0$ (ie, quand on est dans l'hypothèse $H_{m_0}$), le vecteur de mesures $Y_{1pm_0}$ mesuré sur la voie $p$ du sous-réseau 1 à la fréquence d'échantillonnage $m_0$ et le vecteur de mesures $Y_{2qm_0}$ mesuré sur la voie $q$ du sous-réseau 2 et à la fréquence d'échantillonnage $m_0$ s'écrivent alors, en généralisant le modèle précédent :

$$\begin{cases} Y_{1pm_0} & = & c_1 A e^{i\varphi_{1p}} + c_{11} B e^{i\Psi_{1p}} + V_{1pm_0} \\ Y_{2qm_0} & = & c_2 A e^{i\varphi_{2q}} + c_{21} B e^{i\Psi_{2q}} + V_{2qm_0} \end{cases}$$

où $B$ est un vecteur complexe de dimension $L$ représentant le parasite, et $\Psi_{1p}$ (resp $\Psi_{1q}$) le déphasage interférométrique de ce parasite pour le capteur p (resp $q$) du sous-réseau 1 (resp 2).

Si deux parasites sont présents à deux fréquences d'échantillonnage $m_0$ et $m_1$ différentes (i.e. quand on est dans une des hypothèses $H_{m_0 m_1}$), on généralise encore :

$$\begin{cases} Y_{1pm_1} & = & c_1 A e^{i\varphi_{1p}} + c_{12} B' e^{i\Psi'_{1p}} + V_{1pm_1} \\ Y_{2qm_1} & = & c_2 A e^{i\varphi_{2q}} + c_{22} B' e^{i\Psi'_{2q}} + V_{2qm_1} \end{cases}$$

Selon la théorie de la décision, il faut calculer la valeur prise par les densités de probabilité représentant chacune des hypothèses pour les mesures observées, puis choisir l'hypothèse qui maximise cette valeur. Cette stratégie minimise la probabilité d'erreur dans l'hypothèse où toutes les situations sont équiprobables.

Les difficultés sont le nombre de paramètres inconnus (les paramètres du réseau $c_1$, $c_2$, les paramètres du signal utile $A$, $(\varphi_{1p}, \varphi_{2q})$, les paramètres du premier parasite $c_{11}, c_{21}, B, \Psi_{1p}, \Psi_{2q}$ et éventuellement les paramètres du deuxième parasite), et la complexité des calculs qui en découle si on veut appliquer la méthode classique, qui consiste à remplacer les paramètres inconnus par leur estimée au sens du maximum de vraisemblance (Maximum de Vraisemblance Généralisé).

Pour diminuer le nombre de paramètres inconnus du modèle physique ci-dessus, il est proposé d'utiliser, pour décrire les mesures parasitées, un modèle statistique simplifié. Dans ce modèle, les mesures parasitées sont représentées par des vecteurs complexes de dimension $L$, où les composantes de ces vecteurs sont des échantillons indépendants d'une variable aléatoire complexe centrée à composantes réelle et imaginaire indépendantes et uniformément distribuées sur un intervalle de largeur $\sqrt{C}$ de telle sorte que la densité de probabilité des mesures sera $(1/C)^L$. Ce modèle s'applique pour un nombre quelconque de parasites par fréquence d'échantillonnage.

A l'issue de cette simplification, dans l'hypothèse où un seul échantillonnage est parasité (on appellera $m_0$ cet échantillonnage et $H_{m_0}$ cette hypothèse), on peut écrire la densité de probabilité comme le produit des densités de probabilité des mesures sur l'ensemble des capteurs et des échantillonnages :

$$p_{m_0}\left(Z_{1P}, Z_{2q}, A, les\ \varphi_{1p}, les\varphi_{2q}\right) = \frac{1}{(2\pi\sigma^2)^{2PL}}\left(\frac{2\pi\sigma^2}{C}\right)^{2R_{m_0}L}$$
$$\times exp\left[\frac{-1}{2\sigma^2}\sum_{p,m\neq m_0}\|Y_{1pm_0} - c_1 A e^{i\varphi_{1p}}\|^2\right] \times exp\left[\frac{-1}{2\sigma^2}\sum_{q,m\neq m_0}\|Y_{2qm_0} - c_2 A e^{i\varphi_{2q}}\|^2\right]$$

La technique habituelle consiste à remplacer les paramètres inconnus ($A$ et les $\varphi_{1p}$, les $\varphi_{2q}$) par leur estimée au sens du maximum de vraisemblance dans chaque hypothèse. Les calculs étant trop compliqués en ce qui concerne les $\varphi_{1p}$ et les $\varphi_{2q}$, le demandeur propose de remplacer la densité de probabilité par un majorant et de sélectionner l'hypothèse dont le majorant de la densité de probabilité est maximum.

Le procédé propose ainsi de sélectionner l'hypothèse dont le majorant de la densité de probabilité est maximum. Après application de la fonction logarithme, puis suppression du terme $2RLln(2\pi\sigma^2)$ qui est commun à toutes les hypothèses, on obtient le critère à maximiser :

$$\hat{\Gamma}_{m_0} = 2R_{m_0}L\,ln\left(\frac{2\pi\sigma^2}{C}\right) + \lambda_{m_0}$$

$A_{m_0}$ est la valeur propre maximum de la matrice associée à la forme quadratique en sous la contrainte $c_1^2 + c_2^2 = 1$ :

$$FQ_{m_0} = \frac{1}{2\sigma^2}K_{0,m_0} + \frac{R - R_{m_0}}{2\sigma^2}\left(K_{1,m_0}c_1^2 + K_{2,m_0}c_2^2 + K_{12,m_0}c_1c_2\right)$$

dont les coefficients $K_{0,m_0}$, $K_{1,m_0}$, $K_{2,m_0}$, $K_{12,m_0}$ sont donnés par :

$$K_{0,m_0} = \gamma_{1,m_0}^{var} + \gamma_{2,m_0}^{var}$$

$$K_{1,m_0} = \gamma_{1,m_0}^{mod} + \gamma_{1,m_0}^{col} - \sum_q \alpha_{qm_0}\left\|Z_{2qm_0}\right\|^2$$

$$K_{2,m_0} = \gamma_{2,m_0}^{mod} + \gamma_{2,m_0}^{col} - \sum_p \alpha_{pm_0}\left\|Z_{1pm_0}\right\|^2$$

$$K_{12,m_0} = \gamma_{12m_0} = 2\sum_{p,q} \alpha_{pm_0}\alpha_{qm_0}\left|Z_{1pm_0}^*Z_{2qm_0}\right|$$

Où $\gamma_{1m_0}^{var}, \gamma_{1m_0}^{mod}, \gamma_{1m_0}^{col}$  $\gamma_{2m_0}^{var}, \gamma_{2,m_0}^{mod}, \gamma_{2m_0}^{col}$ sont les critères monopolarisation de non variabilité, d'égalité des modules et de colinéarité, pour le sous-réseau 1 et le sous-réseau 2 respectivement.

Et où $Z_{1pm_0}$ représente la moyenne des $Y_{1pm_0}$, sur tous les échantillonnages de l'antenne p, sauf sur l'échantillonnage supposé parasité $m_0$ :

$$Z_{1pm_0} = \frac{1}{Q_{pm_0}}\sum_{m \neq m_0} Y_{1pm} \quad ,$$

$$Z_{2qm_0} = \frac{1}{Q_{qm_0}}\sum_{m \neq m_0} Y_{2qm} \quad .$$

De même pour le sous-réseau 2 :

Le vecteur $\begin{pmatrix} c_1 \\ c_2 \end{pmatrix}$ est alors estimé par le vecteur propre associé à $\lambda_{m_0}$.

$FQ_{m_0}$ peut être réécrite sous la forme :

$$FQ_{m_0} = \frac{1}{2\sigma^2}\left(\gamma_{1,m_0}^{var} + \gamma_{2,m_0}^{var}\right) + \frac{R - R_{m_0}}{2\sigma^2}\left(c_1^2\left(\gamma_{1,m_0}^{col} + \gamma_{1,m_0}^{mod}\right) + c_2^2\left(\gamma_{2,m_0}^{col} + \gamma_{2,m_0}^{mod}\right) + fq_{m_0}\right)$$

Où $fq_{m_0}$ est l'expression quadratique :

$$fq_{m_0} = -c_1^2\sum_q \alpha_{qm_0}\left\|Z_{2qm_0}\right\|^2 - c_2^2\sum_p \alpha_{pm_0}\left\|Z_{1pm_0}\right\|^2 + 2c_1c_2\sum_{p,q}\alpha_{pm_0}\alpha_{qm_0}\left|Z_{1pm_0}^*Z_{2qm_0}\right|$$

Le terme $fq_{m_0}$ peut être interprété comme un critère bipolarisation d'égalité des modules et de colinéarité.

Le terme $\lambda_{m_0}$ qui provient des voies supposées non parasitées, qui est croissant en fonction de $R_{m_0}$ favorise l'élimination d'un maximum de voies de réception. C'est le majorant recherché pour la log-densité de probabilité des mesures provenant des voies non parasitées. Le terme $R_{m_0} L \, ln\left(\frac{2\pi\sigma^2}{C}\right)$, qui provient des voies parasitées, et qui est négatif ou nul dès que $2\pi\sigma^2 < C$, est nécessaire pour choisir la bonne hypothèse. Ce terme joue le rôle d'une pénalité pour les hypothèses où l'on élimine des voies de réception. La détermination du coefficient C est expliquée précédemment.

Dans le cas des hypothèses de type $H_{m_0,m_1}$ (un parasite ou plus présent sur la fréquence d'échantillonnage $m_0$ et un parasite ou plus présent sur la fréquence d'échantillonnage $m_1$), le critère devient :

$$\hat{\Gamma}_{m_0 m_1} = 2R_{m_0 m_1} L \, ln\left(\frac{2\pi\sigma^2}{C}\right) + \lambda_{m_0 m_1}$$

où $R_{m_0 m_1}$ est le nombre de modules de réception fonctionnant avec la fréquence $fe_{m_0}$ ou avec la fréquence $fe_{m_1}$ ($R_{m_0,m_1}=R_{m_0} + R_{m_1}$)

où $\lambda_{m_0 m_1}$ est la valeur propre maximum de la forme quadratique en $(c_1,c_2)$ sous la contrainte $c_1^2 + c_2^2 = 1$ :

$$FQ_{m_0 m_1} = \frac{1}{2\sigma^2} K_{0,m_0 m_1} + \frac{R - R_{m_0 m_1}}{2\sigma^2}\left(K_{1,m_0 m_1} c_1^2 + K_{2,m_0 m_1} c_2^2 + K_{12,m_0 m_1} c_1 c_2\right)$$

Dont les coefficients sont définis par :

$$K_{0,m_0 m_1} = \gamma_{1,m_0 m_1}^{var} + \gamma_{2,m_0 m_1}^{var}$$

$$K_{1 m_0 m_1} = \gamma_{1 m_0 m_1}^{mod} + \gamma_{1 m_0 m_1}^{col} - \sum_q \alpha_{q m_0 m_1} \left\| Z_{2 q m_0 m_1} \right\|^2$$

$$K_{2 m_0 m_1} = \gamma_{2 m_0 m_1}^{mod} + \gamma_{2 m_0 m_1}^{col} - \sum_p \alpha_{p m_0 m_1} \left\| Z_{1 p m_0 m_1} \right\|^2$$

$$K_{12 m_0 m_1} = \gamma_{12 m_0 m_1} = 2\sum_{p,q} \alpha_{p m_0 m_1} \alpha_{q m_0 m_1} \left| Z_{1 p m_0 m_1}^* Z_{2 q m_0 m_1} \right|$$

où $\gamma_{1 m_0 m_1}^{var}$, $\gamma_{1 m_0 m_1}^{mod}$, $\gamma_{1 m_0 m_1}^{col}$ $\quad$ $\gamma_{2 m_0 m_1}^{var}$, $\gamma_{2,m_0 m_1}^{mod}$, $\gamma_{2 m_0 m_1}^{col}$ sont les critères monopolarisation de non-variabilité, d'égalité des modules et de colinéarité respectivement pour les sous-réseaux 1 et 2 pour les hypothèses à deux fréquences d'échantillonnage parasitées (voir section précédente).

Où $Z_{1 p m_0 m_1}$ est la moyenne des $Y_{1pm}$ sur tous les échantillonnages de l'antenne $p$ du sous-réseau 1, sauf sur les échantillonnages supposés parasités : $Z_{1 p m_0} = \frac{1}{Q_{p m_0}}\sum_{m \neq m_0} Y_{1pm}$, et $Z_{2 q m_0 m_1}$ est la moyenne des $Y_{2qm}$ sur tous les échantillonnages de l'antenne p du sous-réseau 2, sauf sur les échantillonnages supposés parasités :

$$Z_{2 q m_0 p m_1} = \frac{1}{Q_{q m_0,m_1}}\sum_{m \neq m_0,m_1} Y_{2qm}$$

Le vecteur $\begin{pmatrix} c_1 \\ c_2 \end{pmatrix}$ est alors estimé par le vecteur propre associé à $\lambda_{m0m1}$.

$FQ_{m_0 m_1}$ peut être réécrite sous la forme :

$$FQ_{m_0 m_1} = \frac{1}{2\sigma^2}\left(\gamma_{1,m_0 m_1}^{var} + \gamma_{2,m_0 m_1}^{var}\right)$$

$$+ \frac{R - R_{m_0 m_1}}{2\sigma^2}\left(c_1^2\left(\gamma_{1,m_0 m_1}^{col} + \gamma_{1,m_0 m_1}^{mod}\right) + c_2^2\left(\gamma_{2,m_0 m_1}^{col} + \gamma_{2,m_0 m_1}^{mod}\right) + fq_{m_0 m_1}\right)$$

Où $fq_{m_0 m_1}$ est l'expression quadratique :

$$fq_{m_0 m_1} = -c_1^2 \sum_q \alpha_{q m_0 m_1} \left\| Z_{2 q m_0 m_1} \right\|^2 - c_2^2 \sum_p \alpha_{p m_0 m_1} \left\| Z_{1 p m_0 m_1} \right\|^2$$

$$+ 2 c_1 c_2 \sum_{p,q} \alpha_{p m_0 m_1} \alpha_{q m_0 m_1} \left| Z_{1 p m_0 m_1}^* Z_{2 q m_0 m_1} \right|$$

Le terme $fq_{m_0 m_1}$ peut être interprété comme un critère bipolarisation d'égalité des modules et de colinéarité.

Le terme $\lambda_{m_0 m_1}$ qui provient des voies supposées non parasitées, qui est croissant en fonction de $R_{m_0 m_1}$ favorise l'élimination d'un maximum de voies de réception. C'est le majorant recherché pour la log-densité de probabilité des mesures provenant des voies non parasitées. Le terme $2 R_{m_0 m_1} L \; ln\left(\frac{2\pi\sigma^2}{C}\right)$ , qui provient des voies parasitées, et qui est négatif ou nul dès que $2\pi\sigma^2 < C$, est nécessaire pour choisir la bonne hypothèse. Ce terme joue le rôle d'une pénalité pour les hypothèses où l'on élimine des voies de réception. La détermination du coefficient C est expliquée précédemment.

Dans le cas de l'hypothèse $H_0$ (aucun parasite présent), le critère devient : $\hat{\Gamma}_0 = \lambda_0$ où $\lambda_0$ est la valeur propre maximum de la forme quadratique en $(c_1, c_2)$ sous la contrainte $c_1^2 + c_2^2 = 1$ :

$$FQ_0 = \frac{1}{2\sigma^2} K_{0,0} + \frac{R}{2\sigma^2}\left(K_{1,0} c_1^2 + K_{2,0} c_2^2 + K_{12,0} c_1 c_2\right)$$

Dont les coefficients sont définis par :

$$K_{0,m_0 m_1} = \gamma_{1,m_0 m_1}^{var} + \gamma_{2,m_0 m_1}^{var}$$

$$K_{1,m_0 m_1} = \gamma_{1,m_0 m_1}^{mod} + \gamma_{1,m_0 m_1}^{col} - \sum_q \alpha_{q m_0 m_1} \left\| Z_{2 q m_0 m_1} \right\|^2$$

$$K_{2,m_0 m_1} = \gamma_{2,m_0 m_1}^{mod} + \gamma_{2,m_0 m_1}^{col} - \sum_p \alpha_{p m_0 m_1} \left\| Z_{1 p m_0 m_1} \right\|^2$$

$$K_{12,m_0 m_1} = \gamma_{12 m_0 m_1} = 2 \sum_{p,q} \alpha_{p m_0 m_1} \alpha_{q m_0 m_1} \left| Z_{1 p m_0 m_1}^* Z_{2 q m_0 m_1} \right|$$

Où $\gamma_{10}^{var}$, $\gamma_{10}^{mod}$, $\gamma_{10}^{col}$, $\gamma_{20}^{var}$, $\gamma_{20}^{mod}$, $\gamma_{20}^{col}$ sont les critères monopolarisation de nonvariabilité, d'égalité des modules et de colinéarité respectivement pour les sous-réseaux 1 et 2 pour l'hypothèse « aucun parasite présent » (voir cas monopolarisation).

Et où $Z_{1p}$ est la moyenne des vecteurs $Y_{1pm}$ sur tous les échantillonnages de l'antenne p du sous-réseau 1 :

$$Z_{1p} = \frac{1}{Q_p} \sum_{m \neq m_0} Y_{1,pm}$$

, et où $Z_{2q}$ est la moyenne des vecteurs $Y_{2qm}$ sur tous les échantillonnages de l'antenne q du sous-réseau 2: $\quad Z_{2q} = \frac{1}{Q_q} \sum_{m \neq m_0} Y_{2qm}$ ,

Le vecteur $\begin{pmatrix} c_1 \\ c_2 \end{pmatrix}$ est alors estimé par le vecteur propre associé à $\lambda_0$.

$FQ_0$ peut être réécrite sous la forme :

$$FQ_0 = \frac{1}{2\sigma^2} \left( \gamma_{1,0}^{var} + \gamma_{2,0}^{var} \right) + \frac{R}{2\sigma^2} \left( c_1^2 \left( \gamma_{1,0}^{col} + \gamma_{2,0}^{mod} \right) + c_2^2 \left( \gamma_{2,0}^{col} + \gamma_{2,0}^{mod} \right) + fq_0 \right)$$

Où $fq_0$ est l'expression quadratique :

$$fq_0 = -c_1^2 \sum_q \alpha_q \left\| Z_{2q} \right\|^2 - c_2^2 \sum_p \alpha_p \left\| Z_{1p} \right\|^2 + 2c_1 c_2 \sum_{p,q} \alpha_p \alpha_q |Z_{1p}^* Z_{2q}|$$

Le terme $fq_0$ peut être interprété comme un critère bipolarisation d'égalité des modules et de colinéarité.
Dans un premier mode de réalisation, on recherche le maximum de $\hat{\Gamma}_0$, $\hat{\Gamma}_{m_0, m_0 \in [1,M]}$, $\hat{\Gamma}_{m_0,m_1, m_0 \in [1,M] m_1 \in [1,M], m_0 \neq m_1}$, puis on détermine les fréquences d'échantillonnage parasitées comme décrit dans le cas monopolarisation.

si $\hat{\Gamma}_0 = \max(\hat{\Gamma}_0, \hat{\Gamma}_{m_0}, \hat{\Gamma}_{m_0,m_{11}})$, alors il y a absence de parasite (hypothèse $H_0$).
s'il existe $\hat{m}_0$ tel que $\hat{\Gamma}_{\hat{m}_0} = \max(\hat{\Gamma}_0, \hat{\Gamma}_{m_0}, \hat{\Gamma}_{m_0,m_1})$, alors il y a une seule fréquence d'échantillonnage parasitée, et cette fréquence d'échantillonnage est $\hat{m}_0$ (hypothèse $H_{\hat{m}_0}$).
s'il existe un couple $\hat{m}_0$, $\hat{m}_1$ tel que $\hat{\Gamma}_{\hat{m}_0,\hat{m}_1} = \max(\hat{\Gamma}_0, \hat{\Gamma}_{m_0}, \hat{\Gamma}_{m_0,m_1})$, alors il y a deux fréquences d'échantillonnage parasitées, et ces fréquences sont $\hat{m}_0$ et $\hat{m}_1$ (hypothèse $H_{\hat{m}_0 \hat{m}_1}$).

Dans un deuxième mode de réalisation, comme décrit dans le cas monopolarisation, on calcule les trois grandeurs suivantes :

$$\tilde{\Gamma}_0 = \tilde{\Gamma}_0, \tilde{\Gamma}_1 = \max_{m_0 = 1,\dots,M} (\tilde{\Gamma}_{m_0}), \tilde{\Gamma}_2 = \max_{\substack{m_0 = 1,\dots,M \\ m_1 = 1,\dots,M \\ m_0 \neq m_1}} (\tilde{\Gamma}_{m_0 m_1})$$

$\tilde{\Gamma}_0$ représente l'hypothèse « absence de parasite » (hypothèse $H_0$).
$\tilde{\Gamma}_1$ représente la meilleure des hypothèses à une fréquence d'échantillonnage parasitée $H_{m_0}$. Cette hypothèse est appelée $H_1$.
$\tilde{\Gamma}_2$ représente la meilleure des hypothèses à deux fréquences d'échantillonnage parasitées $H_{m_0,m_1}$. Cette hypothèse est appelée $H_2$.

Puis, dans ce mode de réalisation, comme dans le cas monopolarisation, on examine successivement les $\tilde{\Gamma}_{k,k=0,1,2}$ et on sélectionne le premier $\tilde{\Gamma}_k$ dont l'adéquation à sa loi supposée gaussienne est supérieure à un seuil choisi. L'hypothèse recherchée est l'hypothèse $H_k$ correspondante. Si aucun n'est en adéquation avec sa loi, cela signifie que le nombre de fréquences d'échantillonnage parasitées est supérieur à deux.
Pour les hypothèses $H_1$ et $H_2$, les fréquences d'échantillonnage occasionnant le parasitage sont déterminées respectivement par :

$$\hat{m}_0 = \operatorname*{Argmax}_{m_0 = 1,\dots,M} \left( \lambda_{m_0} + R_{m_0} L \cdot \ln\left( \frac{2\pi\sigma^2}{C} \right) \right)$$

et

$$(\widehat{m}_0, \widehat{m}_1) = \underset{\substack{m_0 = 1, \ldots, M \\ m_1 = 1, \ldots, M \\ m_0 \neq m_1}}{\mathrm{Argmax}} \left( \lambda_{m_0, m_1} + R_{m_0, m_1} L \cdot \ln\left(\frac{2\pi\sigma^2}{C}\right) \right)$$

Le traitement élimine ensuite de l'ensemble des R vecteurs $Y_{1p,m}$ et $Y_{2q,m}$ ceux dont l'indice de fréquence d'échantillonnage m correspond à une fréquence déchantillonnage parasitée. Sur l'ensemble des vecteurs $Y_{1p,m}$ et $Y_{2q,m}$ ainsi obtenu, on procède à une détection conventionnelle du signal en présence de bruit thermique.

Ce traitement est répété pour tous les domaines temps/fréquence, ou, dans la variante avec prédétection, sur tous les domaines temps/fréquence sélectionnées par la prédétection.

Une variante du traitement consiste, pour chaque domaine temps/fréquence sélectionné, à :

- Calculer l'énergie recueillie par le sous-réseau 1, c'est-à-dire la somme quadratique des modules des R vecteurs constitutifs du domaine temps/fréquence, $\Sigma_{p,m}\|Y_{1p,m}\|^2$
- Calculer l'énergie recueillie par le sous-réseau 2, c'est-à-dire la somme quadratique des modules des R vecteurs constitutifs du domaine temps/fréquence, $\Sigma_{p,m}\|Y_{2q,m}\|^2$
- Sélectionner le sous-réseau d'énergie maximum ;
- Appliquer l'algorithme monopolarisation décrit dans le cas monopolarisation aux mesures de ce seul sous-réseau.

## Revendications

1. Procédé d'identification des situations de parasitage dû au repliement spectral dans un récepteur numérique large bande, le procédé étant mis en œuvre au moyen d'un réseau interférométrique, composé d'un premier sous-réseau monopolarisation à P antennes $(A_{1,1},\ldots, A_{1,P})$ à bande large et d'un deuxième sous-réseau monopolarisation à P antennes $(A_{2,1},\ldots, A_{2,P})$ à bande large, P étant un entier supérieur ou égal à 1, chaque antenne $(A_{1,1},\ldots, A_{1,P}, A_{2,1},\ldots, A_{2,P})$ étant suivie d'une chaîne de réception analogique $(CR_{1,1},\ldots, CR_{1,P}, CR_{2,1},\ldots, CR_{2,P})$ et d'un ou plusieurs modules de réception numérique (20), le nombre de modules de réception numérique (20) étant R sur chaque sous-réseau, répartis de manière identique sur les deux sous-réseaux, le dit procédé comprenant :

    - une étape d'échantillonnage des signaux délivrés par l'ensemble des chaînes de réception $(CR_{1,1},\ldots, CR_{1,P}, CR_{2,1},\ldots, CR_{2,P})$, à l'aide de M fréquences d'échantillonnage $fe_m$ différentes, inférieures à la fréquence de Nyquist-Shannon, m allant de 1 à M, et M étant un entier supérieur ou égal à 4, le nombre de modules de réception numérique (20) fonctionnant avec une fréquence d'échantillonnage $fe_m$ étant identique sur chaque sous-réseau et étant égal à $R_m$, le nombre de modules de réception numérique (20) pour une antenne $p$ $(A_{1,p})$ du premier sous-réseau étant $Q_p$, et le nombre de modules de réception numérique (20) pour une antenne q $(A_{1,q})$ du deuxième sous-réseau étant $Q_q$, avec $R = \sum_{m=1}^{M} R_m = \sum_{p=1}^{P} Q_p$, lesdites fréquences d'échantillonnage $fe_m$ procurant des nombres entiers d'échantillons $N_m$ sur une durée donnée $\Delta T$,

    - une étape d'analyse spectrale par des transformées de Fourier discrètes successives, et synchrones permettant, sur chacun des 2R modules de réception numérique (20), une représentation temps/fréquence appelée grille, de résolution temporelle $\Delta T$, et de résolution fréquentielle $\Delta F$, chaque élément de la grille étant appelé case temps/fréquence et contenant une grandeur complexe appelée mesure,

    - une étape de sélection d'un ensemble de domaines temps/fréquence, chaque domaine temps/fréquence étant perçu dans les R modules de réception numérique du premier sous-réseau et dans les R modules de réception numérique (20) du deuxième sous-réseau comme 2R fenêtres superposables, chacune des fenêtres étant composée de L cases temps/fréquence connexes,

    - pour chaque domaine temps/fréquence, une étape de concaténation des mesures prélevées dans chacune des 2R fenêtres sous forme de R vecteurs de dimension $L \times 1$ pour le premier sous-réseau, notés $Y_{1pm}$, où p est l'indice du capteur et m l'indice de l'échantillonnage, et sous forme de R vecteurs de dimension $L \times 1$ pour le deuxième sous-réseau, notés $Y_{2pm}$, où p est l'indice du capteur et m l'indice de l'échantillonnage,

    - pour chaque domaine temps/fréquence, une étape de détermination de la présence de parasites éventuels consistant à choisir, parmi les hypothèses suivantes, à partir des vecteurs de mesures obtenus, celle maximisant une approximation de la log-densité de probabilité des R vecteurs $Y_{1pm}$ et des R vecteurs $Y_{2pm}$ :

• $H_0$ : absence de parasite,
• $H_{m_0}$ : présence d'au moins un parasite sur l'échantillonnage $m_0$, avec $m_0 \in [1, M]$, et
• $H_{m_0,m_1}$ : présence d'au moins un parasite sur l'échantillonnage $m_0$ et de un parasite sur l'échantillonnage $m_1$, avec $m_1 \in [1, M], m_0 \neq m_1)$ et $m_0$ e $[1, M]$.

2. Procédé selon la revendication 1, dans lequel,

l'hypothèse choisie est :

• $H_0$ , si sa log-densité de probabilité approchée est celle dont l'adéquation à sa loi supposée gaussienne est maximale,
• sinon, $H_{m_0}$, si sa log-densité de probabilité approchée restreinte aux voies non parasitées est celle dont l'adéquation à sa loi supposée gaussienne est maximale,
• sinon, $H_{m_0,m_1}$, si sa log-densité de probabilité approchée restreinte aux voies non parasitées est celle dont l'adéquation à sa loi supposée gaussienne est maximale,

sinon, il est déterminé qu'il y a plus que deux fréquences d'échantillonnage qui sont parasitées.

3. Procédé selon la revendication 1 ou 2, dans lequel le procédé comporte :

- le calcul de l'énergie recueillie par le premier sous-réseau,
- le calcul de l'énergie recueillie par le deuxième sous-réseau,
l'étape de détermination étant mise en œuvre pour le sous-réseau recueillant le maximum d'énergie selon l'algorithme monopolarisation.

4. Procédé selon la revendication 1 ou 2, dans lequel les critères suivants sont calculés :

- pour chaque sous-réseau, le critère monopolarisation, et
- pour les deux sous-réseaux pris conjointement, le critère bipolarisation

5. Procédé selon la revendication 4, dans lequel le ou les critères calculés sont utilisés pour obtenir une approximation de la log-densité de probabilité des mesures.

6. Procédé selon la revendication 5, dans lequel la log-densité de probabilité approchée se calcule selon les approximations suivantes :

- Pour l'hypothèse $H_0$, la grandeur $\hat{\Gamma}_0$ , notée aussi $\tilde{\Gamma}_0$:

$\hat{\Gamma}_0 = \lambda_0$, où $\lambda_0$ est la valeur propre maximum de l'expression quadratique en $c_1, c_2$ :

$$FQ_0 = \frac{1}{2\sigma^2}\left(\gamma_{1,0}^{var} + \gamma_{2,0}^{var}\right) + \frac{R}{2\sigma^2}\left(c_1^2\left(\gamma_{1,0}^{col} + \gamma_{2,0}^{mod}\right) + c_2^2\left(\gamma_{2,0}^{col} + \gamma_{2,0}^{mod}\right) + fq_0\right)$$

Où $fq_0$ est l'expression quadratique :

$$fq_0 = -c_1^2 \sum_q \alpha_q \left\|Z_{2q}\right\|^2 - c_2^2 \sum_p \alpha_p \left\|Z_{1p}\right\|^2 + 2c_1 c_2 \sum_{p,q} \alpha_p \alpha_q \left|Z_{1p}^* Z_{2q}\right|$$

qui peut être interprétée comme un critère bipolarisation d'égalité des modules et de colinéarité,
où $\gamma_{10}^{var}$, $\gamma_{10}^{mod}$, $\gamma_{10}^{col}$, $\gamma_{20}^{var}$, $\gamma_{20}^{mod}$, $\gamma_{20}^{col}$ sont les critères monopolarisation de non-variabilité, d'égalité des modules et de colinéarité respectivement pour les sous-réseaux pour l'hypothèse « aucun parasite présent »;
où $\alpha_p$ est la proportion des modules de réception numérique (20) fonctionnant avec l'antenne d'indice $p$ sur le premier sous-réseau,
$\alpha_q$ est la proportion des modules de réception numérique (20) fonctionnant avec l'antenne d'indice q $(A_{2,q})$

sur le deuxième sous-réseau,

où $Z_{1p}$ est la moyenne des vecteurs $Y_{1pm}$ sur tous les échantillonnages de l'antenne p $(A_{1,p})$ du premier sous-réseau 1: $Z_p = \frac{1}{Q_p}\sum_m Y_{1pm}$ et où $Z_{2q}$ est la moyenne des vecteurs $Y_{2qm}$ sur tous les échantillonnages de l'antenne q du deuxième sous-réseau: $Z_q = \frac{1}{Q_q}\sum_m Y_{2qm}$ ,

où $Q_p$ est le nombre de modules de réception numérique (20) fonctionnant avec l'antenne d'indice p $(A_{1,p})$ sur le premier sous-réseau, et $Q_p$ le nombre de modules de réception numérique (20) fonctionnant avec l'antenne d'indice p $(A_{1,p})$ sur le premier sous-réseau,

où $c_1$ représente le gain du premier sous-réseau dans la polarisation du signal incident,

où $c_2$ représente le gain du deuxième sous-réseau dans la polarisation du signal incident,

- pour les hypothèses $H_{m_0}$ , les grandeurs $\hat{\Gamma}_{m_0} = 2R_{m_0}L\,ln\left(\frac{2\pi\sigma^2}{C}\right) + \lambda_{m_0}$ , où $R_{m_0}$ est le nombre de modules de réception numérique (20) fonctionnant avec la fréquence $f_{m_0}$ dans chacun des deux sous-réseaux, et où $\lambda_{m_0}$ représente la log-densité approchée restreinte aux voies non parasitées ; elle est égale à la valeur propre maximum de l'expression quadratique en $c_1,c_2$ :

$$FQ_{m_0} = \frac{1}{2\sigma^2}\left(\gamma_{1,m_0}^{var} + \gamma_{2,m_0}^{var}\right) + \frac{R-R_{m_0}}{2\sigma^2}\left(c_1^2\left(\gamma_{1,m_0}^{col} + \gamma_{1,m_0}^{mod}\right) + c_2^2\left(\gamma_{2,m_0}^{col} + \gamma_{2,m_0}^{mod}\right) + fq_{m_0}\right)$$

Où $fq_{m0}$ est l'expression quadratique :

$$fq_{m_0} = -c_1^2\sum_q \alpha_{qm_0}\left\|Z_{2qm_0}\right\|^2 - c_2^2\sum_p \alpha_{pm_0}\left\|Z_{1pm_0}\right\|^2 + 2c_1 c_2\sum_{p,q}\alpha_{pm_0}\alpha_{qm_0}\left|Z_{1pm_0}^* Z_{2qm_0}\right|$$

qui peut être interprétée comme un critère bipolarisation d'égalité des modules et de colinéarité,

Où $\gamma_{1m_0}^{var}, \gamma_{1m_0}^{mod}, \gamma_{1m_0}^{col}, \gamma_{2m_0}^{var}, \gamma_{2m_0}^{mod}, \gamma_{2m_0}^{col}$ sont les critères monopolarisation de non variabilité, d'égalité des modules et de colinéarité, pour le premier sous-réseau et le deuxième sous-réseau respectivement, pour l'hypothèse « une fréquence d'échantillonnage parasitée »,

Où $\alpha_{pm_0}$ est la proportion des modules de réception numérique (20) rattachés à l'antenne d'indice p $(A_{1,p})$ sur le premier sous-réseau, qui ne fonctionnent pas avec la fréquence $fe_{m_0}$ et $\alpha_{qm_0}$ est la proportion des modules de réception numérique (20) rattachés à l'antenne d'indice q $(A_{2,q})$ sur le deuxième sous-réseau, qui ne fonctionnent pas avec la fréquence $fe_{m0}$ ,

Où

$$Z_{1pm_0} = \frac{1}{Q_{pm_0}}\sum_{m\neq m_0} Y_{1pm} \text{ et } Z_{2pm_0} = \frac{1}{Q_{pm_0}}\sum_{m\neq m_0} Y_{2pm},$$

Où $Q_{p,m_0}$ est le nombre de modules de réception numérique (20) rattachés à l'antenne d'indice p $(A_{1,p})$ sur le premier sous-réseau, qui ne fonctionnent pas avec la fréquence $fe_{m0}$ et $Q_{q,m_0}$ est le nombre de modules de réception numérique (20) rattachés à l'antenne d'indice q $(A_{1,p})$ sur le deuxième sous-réseau, qui ne fonctionnent pas avec la fréquence $fe_{m0}$,

Où $R_{m_0}$ est le nombre de modules de réception numérique (20) fonctionnant avec la fréquence d'échantillonnage $fe_{m0}$ sur chaque sous-réseau,

où $c_1$ représente le gain du premier sous-réseau dans la polarisation du signal incident,

où $c_2$ représente le gain du deuxième sous-réseau dans la polarisation du signal incident.

- pour les hypothèses $H_{m_0,m_1}$, les grandeurs

$$\hat{\Gamma}_{m_0 m_1} = \ln \tilde{p}_{m_0 m_1} = 2R_{m_0 m_1} L \ln\left(\frac{2\pi\sigma^2}{C}\right) + \lambda_{m_0 m_1}$$

où $R_{m_0 m_1}$ est le nombre de modules de réception numérique fonctionnant avec la fréquence $fe_{m_0}$ ou avec la fréquence $fe_{m_1}$ dans chacun des deux sous-réseaux, et où $\lambda_{m_0 m_1}$ représente la log-densité approchée restreinte aux voies non parasitées ; elle est égale à la valeur propre maximum de l'expression quadratique :

$$\begin{aligned} FQ_{m_0 m_1} = &\frac{1}{2\sigma^2}\left(\gamma_{1,m_0 m_1}^{var} + \gamma_{2,m_0 m_1}^{var}\right) \\ &+ \frac{R - R_{m_0 m_1}}{2\sigma^2}\left(c_1^2\left(\gamma_{1,m_0 m_1}^{col} + \gamma_{1,m_0 m_1}^{mod}\right) + c_2^2\left(\gamma_{2,m_0 m_1}^{col} + \gamma_{2,m_0 m_1}^{mod}\right)\right. \\ &+ \left. fq_{m_0 m_1}\right) \end{aligned}$$

Où $fq_{m0m1}$ est l'expression quadratique :

$$\begin{aligned} fq_{m_0 m_1} = &-c_1^2 \sum_q \alpha_{qm_0 m_1}\left\|Z_{2qm_0 m_1}\right\|^2 - c_2^2 \sum_p \alpha_{pm_0 m_1}\left\|Z_{1pm_0 m_1}\right\|^2 \\ &+ 2c_1 c_2 \sum_{p,q} \alpha_{pm_0 m_1}\alpha_{qm_0 m_1}\left|Z_{1pm_0 m_1}^* Z_{2qm_0 m_1}\right| \end{aligned}$$

qui peut être interprétée comme un critère bipolarisation d'égalité des modules et de colinéarité, où $\gamma_{1m_0 m_1}^{var}$, $\gamma_{1m_0 m_1}^{mod}$, $\gamma_{1m_0 m_1}^{col}$, $\gamma_{2m_0 m_1}^{var}$, $\gamma_{2m_0 m_1}^{mod}$, $\gamma_{2m_0 m_1}^{col}$ sont les critères monopolarisation de non-variabilité, d'égalité des modules et de colinéarité respectivement pour les sous-réseaux pour les hypothèses à deux fréquences d'échantillonnage parasitées,

où $a_{pm0m1}$ *est* la proportion de de modules de réception numérique (20) rattachés à l'antenne d'indice p du premier sous-réseau qui ne fonctionnent ni avec la fréquence d'échantillonnage $fe_{m0}$, ni avec la fréquence d'échantillonnage $fe_{m1}$, et

où $\alpha_{qm0m1}$ est la proportion de modules de réception numérique (20) rattachés à l'antenne d'indice q du deuxième sous-réseau qui ne fonctionnent ni avec la fréquence d'échantillonnage $fe_{m0}$, ni avec la fréquence d'échantillonnage $fe_{m1}$,

où

$$Z_{1pm_0 m_1} = \frac{1}{Q_{pm_0,m_1}}\sum_{m\neq m_0,m_1} Y_{1pm} \text{ et } Z_{2pm_0 pm_1} = \frac{1}{Q_{qm_0,m_1}}\sum_{m\neq m_0,m_1} Y_{2qm},$$

où $Q_{p,m_0,m_1}$ est le nombre de modules de réception numérique (20) rattachés à l'antenne d'indice $p$ $(A_{1,p})$ qui ne fonctionnent ni avec la fréquence d'échantillonnage $fe_{m0}$, ni avec la fréquence d'échantillonnage $fe_{m1}$ sur le premier sous-réseau, et $Q_{q,m_0,m_1}$ est le nombre de modules de réception numérique (20) rattachés à l'antenne d'indice $q$ $(A_{2,q})$ qui ne fonctionnent ni avec la fréquence d'échantillonnage $fe_{m0}$, ni avec la fréquence d'échantillonnage $fe_{m1}$ sur le deuxième sous-réseau,

où $R_{m0m1}$ est le nombre de modules de réception numérique (20) fonctionnant avec la fréquence d'échantillonnage $fe_{m0}$ ou $fe_{m1}$ *sur* chaque sous-réseau,

où $c_1$ représente le gain du premier sous-réseau dans la polarisation du signal incident,

où $c_2$ représente le gain du deuxième sous-réseau dans la polarisation du signal incident,

7. Produit programme d'ordinateur comprenant programme d'ordinateur comprenant des instructions de programme mémorisé sur un support lisible par ordinateur comportant une unité de traitement de données, le programme d'ordinateur étant adapté pour mettre en œuvre un procédé selon l'une quelconque des revendications 1 à 6 lorsque le programme d'ordinateur est mis en œuvre sur l'unité de traitement de données.

8. Support lisible d'informations sur lequel est mémorisé un programme d'ordinateur comprenant des instructions de programme, le programme d'ordinateur étant chargeable sur une unité de traitement de données et adapté pour entraîner la mise en œuvre d'un procédé selon l'une quelconque des revendications 1 à 6 lorsque le programme d'ordinateur est mis en œuvre sur l'unité de traitement de données.

9. Réseau interférométrique à deux sous-réseaux monopolarisation à $P$ antennes $(A_{1,1,...}, A_{1,P}, A_{2,1,...}, A_{2,P})$, P étant un nombre entier supérieur ou égal à 2, chaque antenne $(A_{1,1,...}, A_{1,P}, A_{2,1,...}, A_{2,P})$ étant suivie d'une chaîne de réception analogique $(CR_{1,1,...}, CR_{1,p}, CR_{2,1,...}, CR_{2,P})$ et d'un ou plusieurs modules de réception numérique (20), chaque module de réception numérique (20) comportant un module de conversion analogique-numérique (22) et un module de traitement numérique (26), chaque module de conversion analogique-numérique (22) étant associé à une fréquence d'échantillonnage respective, un module de conversion analogique-numérique (22) étant associé à une fréquence d'échantillonnage lorsque le module de conversion analogique-numérique (22) est propre à effectuer un échantillonnage à la fréquence d'échantillonnage, chaque fréquence étant telle que l'échantillonnage effectué par le module de conversion analogique-numérique (22) est un échantillonnage ne respecte pas le critère de Shannon et le réseau interférométrique comportant également un calculateur (28), les module de conversion analogique-numérique (22) étant propres à mettre en œuvre l'étape d'échantillonnage d'un procédé selon l'une quelconque des revendications 1 à 6 et le calculateur (28) étant propre à mettre en œuvre les étapes d'analyse spectrale, de sélection, de concaténation et de détermination dudit procédé.

**Patentansprüche**

1. Verfahren zur Identifizierung von Störsituationen aufgrund von Abtaststörung in einem digitalen Breitbandempfänger, wobei das Verfahren mittels eines interferometrischen Netzwerks durchgeführt wird, das aus einem ersten Monopolisierungs-Unternetzwerk mit $P$ Antennen $(A_{1,1}...,A_{1,P})$ für Breitband und einem zweiten Monopolisierungs-Unternetzwerk mit P Antennen $(A_{2,1}...,A_{2,P})$ für Breitband besteht, wobei $P$ eine ganze Zahl größer als oder gleich wie 1 ist, wobei jeder Antenne $(A_{1,1}...,A_{1,P},A_{2,1}...,A_{2,P})$ eine analoge Empfangskette $(CR_{1,1}...,CR_{1,P},CR_{2,1}...,CR_{2,P})$ und ein oder mehrere digitale Empfangsmodule (20) folgen, wobei die Anzahl von digitalen Empfangsmodulen (20) in jedem Unternetzwerk R ist, die identisch über die zwei Unternetzwerk verteilt sind, das Verfahren umfassend:

- einen Schritt eines Abtastens der Signale, die von allen Empfangskanälen $(CR_{1,1}...,CR_{1,P},CR_{2,1}...,CR_{2,P})$ geliefert werden, mittels M verschiedenen Abtastfrequenzen $fe_m$, die niedriger sind als die Nyquist-Shannon-Frequenz sind, wobei m von 1 bis M reicht und M eine ganze Zahl größer als oder gleich wie 4 ist, wobei die Anzahl an digitalen Empfangsmodulen (20), die mit einer Abtastfrequenz $fe_m$ arbeiten, in jedem Unternetzwerk gleich ist und gleich $R_m$ ist, wobei die Anzahl an digitalen Empfangsmodulen (20) für eine Antenne p $(A_{1,p})$ des ersten Unternetzwerks $Q_p$ ist und die Anzahl an digitalen Empfangsmodulen (20) für eine Antenne q $(A_{1,q})$ des zweiten Unternetzwerks $Q_q$ ist, wobei $R = \sum_{m=1}^{M} R_m = \sum_{p=1}^{P} Q_p$ , wobei die Abtastfrequenzen $fe_m$ ganze Zahlen von Abtastwerten $N_m$ über eine gegebene Dauer $\Delta T$ bereitstellen,

- einen Schritt einer Spektralanalyse durch aufeinanderfolgende, separate und synchrone Fourier-Transformationen, der für jedes der $2R$ digitalen Empfangsmodule (20) eine Zeit-/Frequenzdarstellung, genannt Raster, mit einer zeitlichen Auflösung $\Delta T$, und einer Frequenzauflösung $\Delta F$ ermöglicht, wobei jedes Element des Rasters als Zeit-/Frequenzfeld bezeichnet wird und eine komplexe Größe, genannt Messung, enthält,

- einen Schritt eines Auswählens eines Satzes von Zeit-/Frequenzdomänen, wobei jede Zeit-/Frequenzdomäne in den $R$ digitalen Empfangsmodulen des ersten Unternetzwerks und in den $R$ digitalen Empfangsmodulen (20) des zweiten Unternetzwerks als $2R$ überlagerbare Fenster wahrgenommen wird, wobei jedes der Fenster aus $L$ zusammenhängenden Zeit-/Frequenzfeldern besteht,

- für jeden Zeit-/Frequenzbereich einen Schritt einer Verkettung der in jedem der $2R$ Fenster vorgenommenen Messungen in Form von $R$ Vektoren der Dimension $L \times 1$ für das erste Unternetzwerk, bezeichnet mit $Y_{1pm}$, wobei $p$ der Index des Sensors und m der Index der Abtastung ist, und in Form von $R$ Vektoren der Dimension $L \times 1$ für das zweite Unternetzwerk, bezeichnet mit $Y_{2pm}$, wobei p der Index des Sensors und m der Index der Abtastung ist,

- für jeden Zeit-/Frequenzbereich einen Schritt eines Bestimmens des Vorhandenseins von möglichen Störfrequenzen, der darin besteht, aus den folgenden Hypothesen ausgehend von den erlangten Messvektoren jene auszuwählen, die eine Annäherung der Log-Dichte der Wahrscheinlichkeit der R Vektoren $Y_{1pm}$ und der R Vektoren $Y_{2pm}$ maximiert:

• $H_0$: keine Störfrequenz,

• $H_{m0}$: Vorhandensein von mindestens einer Störfrequenz bei der Abtastung $m_0$, wobei $m_0$ e [1, *M]*, und
• $H_{m0,m1}$: Vorhandensein von mindestens einer Störfrequenz bei der Abtastung $m_0$ und einer Störfrequenz bei der Abtastung $m_1$, wobei $m_1 \in$ [1, *M]*, $m_0 \neq m_1$) et $m_0 \in$ [1, *M]*.

2. Verfahren nach Anspruch 1, wobei

die gewählte Hypothese wie folgt ist:

• **$H_0$,** wenn seine angenäherte Log-Wahrscheinlichkeitsdichte jene ist, deren Übereinstimmung mit seiner angenommenen Gaußschen Gesetzmäßigkeit maximal ist,
• sonst $H_{m0}$, wenn seine auf ungestörte Kanäle beschränkte angenäherte Log-Wahrscheinlichkeitsdichte jene ist, deren Übereinstimmung mit seiner angenommenen Gaußschen Gesetzmäßigkeit maximal ist,
• sonst $H_{m0,m1}$, wenn seine auf ungestörte Kanäle beschränkte angenäherte Log-Wahrscheinlichkeitsdichte jene ist, deren Übereinstimmung mit seiner angenommenen Gaußschen Gesetzmäßigkeit maximal ist,

sonst wird bestimmt, dass mehr als zwei Abtastfrequenzen gestört sind.

3. Verfahren nach Anspruch 1 oder 2, wobei das Verfahren ferner Folgendes umfasst:

- Berechnen der von dem ersten Unternetzwerk aufgenommenen Energie,
- Berechnen der von dem zweiten Unternetzwerk aufgenommenen Energie, wobei der Bestimmungsschritt für das Unternetzwerk, das die maximale Energie aufnimmt, gemäß dem Monopolisierungsalgorithmus durchgeführt wird.

4. Verfahren nach Anspruch 1 oder 2, wobei die folgenden Kriterien berechnet werden:

- für jedes Unternetzwerk das Monopolisierungskriterium, und
- für die zwei Unternetzwerke zusammengenommen das Bipolarisierungskriterium.

5. Verfahren nach Anspruch 4, wobei das berechnete Kriterium bzw. die berechneten Kriterien verwendet werden, um eine Annäherung an die Log-Dichte der Wahrscheinlichkeit der Messungen zu erlangen.

6. Verfahren nach Anspruch 5, wobei die angenäherte Log-Wahrscheinlichkeitsdichte gemäß den folgenden Annäherungen berechnet wird:

- für die Hypothese $H_0$ ist die Größe $\hat{\Gamma}_0$, auch bezeichnet als $\tilde{\Gamma}_0$:

$\hat{\Gamma}_0 = \lambda_0$, wobei $\lambda_0$ der maximale Eigenwert des quadratischen Ausdrucks in $C_1, C_2$ ist:

$$FQ_0 = \frac{1}{2\sigma^2}\left(\gamma_{1,0}^{var} + \gamma_{2,0}^{var}\right) + \frac{R}{2\sigma^2}\left(c_1^2\left(\gamma_{1,0}^{col} + \gamma_{2,0}^{mod}\right) + c_2^2\left(\gamma_{2,0}^{col} + \gamma_{2,0}^{mod}\right) + fq_0\right)$$

wobei $fq_0$ der folgende quadratische Ausdruck ist:

$$fq_0 = -c_1^2\sum_q \alpha_q \left\|Z_{2q}\right\|^2 - c_2^2\sum_p \alpha_p \left\|Z_{1p}\right\|^2 + 2c_1c_2\sum_{p,q} \alpha_p\alpha_q\left|Z_{1p}^*Z_{2q}\right|$$

der als Bipolarisierungskriterium für die Gleichheit der Module und für Kollinearität interpretiert werden kann, wobei

$$\gamma_{10}^{var}, \gamma_{10}^{mod}, \gamma_{10}^{col}, \gamma_{20}^{var}, \gamma_{20}^{mod}, \gamma_{20}^{col}$$

die Monopolisierungskriterien Nichtveränderlichkeit, Modulgleichheit bzw. Kollinearität für die Unternetzwerke für die Hypothese "keine Störfrequenz vorhanden" sind;

wobei $\alpha_p$ der Anteil der digitalen Empfangsmodule (20) ist, die mit der Antenne mit dem Index p auf dem ersten Unternetzwerk arbeiten,

$a_q$ der Anteil der digitalen Empfangsmodule (20) ist, die mit der Antenne mit Index q $(A_{2,q})$ auf dem zweiten Unternetzwerk arbeiten,

wobei $Z_{1p}$ der Mittelwert der Vektoren $Y_{1pm}$ über alle Abtastungen der Antenne p $(A_{1,p})$ des ersten Unternetzwerks 1 ist:

$$Z_p = \frac{1}{Q_p} \sum_m Y_{1pm}$$

und wobei $Z_{2q}$ der Mittelwert der Vektoren $Y_{2qm}$ über alle Abtastungen der Antenne q des zweiten Unternetzwerks ist:

$$Z_q = \frac{1}{Q_q} \sum_m Y_{2qm}$$

,

wobei $Q_p$ die Anzahl an digitalen Empfangsmodulen (20) ist, die mit der Antenne mit Index $p$ $(A_{1,p})$ auf dem ersten Unternetzwerk arbeiten, und $Q_p$ *die* Anzahl an digitalen Empfangsmodulen (20) ist, die mit der Antenne mit Index $p$ $(A_{1,p})$ auf dem ersten Unternetzwerk arbeiten,

wobei $c_1$ die Verstärkung des ersten Unternetzwerks in der Polarisation des einfallenden Signals darstellt,

wobei $c_2$ die Verstärkung des zweiten Unternetzwerks in der Polarisation des einfallenden Signals darstellt,

- für die Hypothesen $H_{m0}$ die Größen

$$\hat{f}_{m_0} = 2 R_{m_0} L \, ln\left(\frac{2\pi\sigma^2}{c}\right) + \lambda_{m_0},$$

, wobei $R_{m0}$ die Anzahl an digitalen Empfangsmodulen (20) ist, die mit der Frequenz $f_{m0}$ in jedem der zwei Unternetzwerke arbeiten, und wobei $\lambda_{m0}$ die angenäherte Log-Dichte darstellt, die auf ungestörte Kanäle beschränkt ist; sie ist gleich wie der maximale Eigenwert des quadratischen Ausdrucks in $c_1, c_2$:

$$FQ_{m_0} = \frac{1}{2\sigma^2}\left(\gamma_{1,m_0}^{var} + \gamma_{2,m_0}^{var}\right) + \frac{R - R_{m_0}}{2\sigma^2}\left(c_1^2\left(\gamma_{1,m_0}^{col} + \gamma_{1,m_0}^{mod}\right) + c_2^2\left(\gamma_{2,m_0}^{col} + \gamma_{2,m_0}^{mod}\right) + fq_{m_0}\right)$$

wobei $fq_{m0}$ der folgende quadratische Ausdruck ist:

$$fq_{m_0} = -c_1^2 \sum_q \alpha_{qm_0} \|Z_{2qm_0}\|^2 - c_2^2 \sum_p \alpha_{pm_0} \|Z_{1pm_0}\|^2 + 2c_1 c_2 \sum_{p,q} \alpha_{pm_0} \alpha_{qm_0} |Z_{1pm_0}^* Z_{2qm_0}|$$

der als Bipolarisierungskriterium für die Gleichheit der Module und für Kollinearität interpretiert werden kann, wobei

$$\gamma_{1m_0}^{var}, \gamma_{1m_0}^{mod}, \gamma_{1m_0}^{col}, \gamma_{2m_0}^{var}, \gamma_{2m_0}^{mod}, \gamma_{2m_0}^{col}$$

die Monopolisierungskriterien Nichtveränderlichkeit, Modulgleichheit und Kollinearität für das erste Unternetzwerk bzw. das zweite Unternetzwerk für die Hypothese "eine gestörte Abtastfrequenz" sind,

wobei $\alpha_{pm0}$ der Anteil der digitalen Empfangsmodule (20) ist, die an die Antenne mit Index $p$ $(A_{1,p})$ auf dem ersten Unternetzwerk angeschlossen sind, die nicht mit der Frequenz $fe_{m0}$ arbeiten, und $\alpha_{qm0}$ der Anteil der digitalen Empfangsmodule (20) ist, die an die Antenne mit Index $q$ $(A_{2,q})$ auf dem zweiten Unternetzwerk angeschlossen sind, die nicht mit der Frequenz $fe_{m0}$ arbeiten,

wobei

$$Z_{1pm_0} = \frac{1}{Q_{pm_0}} \sum_{m \neq m_0} Y_{1pm}$$

und

$$Z_{2pm_0} = \frac{1}{Q_{pm_0}} \sum_{m \neq m_0} Y_{2pm},$$

,

wobei $Q_{p,m0}$ die Anzahl an digitalen Empfangsmodulen (20) ist, die an die Antenne mit Index p $(A_{1,p})$ auf dem ersten Unternetzwerk angeschlossen sind, die nicht mit der Frequenz $fe_{m0}$ arbeiten, und $Q_{q,m0}$ die Anzahl an digitalen Empfangsmodulen (20) ist, die an die Antenne mit Index q $(A_{1,p})$ auf dem zweiten Unternetzwerk angeschlossen sind, die nicht mit der Frequenz $fe_{m0}$ arbeiten,

wobei $R_{m0}$ die Anzahl an digitalen Empfangsmodulen (20) ist, die mit der Abtastfrequenz $fe_{m0}$ in jedem Unternetzwerk arbeiten,

wobei $c_1$ die Verstärkung des ersten Unternetzwerks in der Polarisation des einfallenden Signals darstellt,

wobei $c_2$ die Verstärkung des zweiten Unternetzwerks in der Polarisation des einfallenden Signals darstellt.

- für die Hypothesen $H_{m0,\,m1}$ die Größen

$$\hat{f}_{m_0 m_1} = \ln \tilde{p}_{m_0 m_1} = 2R_{m_0 m_1} L \ln\left(\frac{2\pi\sigma^2}{C}\right) + \lambda_{m_0 m_1}$$

wobei $R_{m0m1}$ die Anzahl an digitalen Empfangsmodulen ist, die mit der Frequenz $fe_{m0}$ oder mit der Frequenz $fe_{m1}$ in jedem der zwei Unternetzwerke arbeiten, und wobei $\lambda_{m0m1}$ die angenäherte Log-Dichte darstellt, die auf ungestörte Kanäle beschränkt ist; sie ist gleich wie der maximale Eigenwert des folgenden quadratischen Ausdrucks:

$$\begin{aligned}
FQ_{m_0 m_1} = &\frac{1}{2\sigma^2}\left(\gamma_{1,m_0 m_1}^{var} + \gamma_{2,m_0 m_1}^{var}\right) \\
&+ \frac{R - R_{m_0 m_1}}{2\sigma^2}\left(c_1^2\left(\gamma_{1,m_0 m_1}^{col} + \gamma_{1,m_0 m_1}^{mod}\right) + c_2^2\left(\gamma_{2,m_0 m_1}^{col} + \gamma_{2,m_0 m_1}^{mod}\right)\right) \\
&+ fq_{m_0 m_1}\right)
\end{aligned}$$

wobei $fq_{m0m1}$ der folgende quadratische Ausdruck ist:

$$f q_{m_0 m_1} = -c_1^2 \sum_q \alpha_{q m_0 m_1} \left\| Z_{2 q m_0 m_1} \right\|^2 - c_2^2 \sum_p \alpha_{p m_0 m_1} \left\| Z_{1 p m_0 m_1} \right\|^2$$
$$+ 2 c_1 c_2 \sum_{p,q} \alpha_{p m_0 m_1} \alpha_{q m_0 m_1} \left| Z_{1 p m_0 m_1}^* Z_{2 q m_0 m_1} \right|$$

der als Bipolarisierungskriterium für die Gleichheit der Module und für Kollinearität interpretiert werden kann,

wobei

$$\gamma_{1 m_0 m_1}^{var}, \quad \gamma_{1 m_0 m_1}^{mod}, \quad \gamma_{1 m_0 m_1}^{col}, \quad \gamma_{2 m_0 m_1}^{var}, \quad \gamma_{2 m_0 m_1}^{mod}, \quad \gamma_{2 m_0 m_1}^{col}$$

die Monopolisierungskriterien Nichtveränderlichkeit, Modulgleichheit und Kollinearität jeweils für die Unternetzwerke für die Hypothesen mit zwei gestörten Abtastfrequenzen sind,

wobei $\alpha_{pm0m1}$ der Anteil der digitalen Empfangsmodule (20) ist, die an die Antenne mit dem Index *pdes* ersten Unternetzwerks angeschlossen sind, die weder mit der Abtastfrequenz *fe*$_{m0}$ noch mit der Abtastfrequenz *fe*$_{m1}$ arbeiten, und

wobei $\alpha_{qm0m1}$ der Anteil der digitalen Empfangsmodule (20) ist, die an die Antenne mit Index *q* des zweiten Unternetzwerks angeschlossen sind, die weder mit der Abtastfrequenz *fe*$_{m0}$ noch mit der Abtastfrequenz *fe*$_{m1}$ arbeiten,

wobei

$$Z_{1 p m_0 m_1} = \frac{1}{Q_{p m_0, m_1}} \sum_{m \neq m_0, m_1} Y_{1 p m}$$

und

$$Z_{2 p m_0 p m_1} = \frac{1}{Q_{q m_0, m_1}} \sum_{m \neq m_0, m_1} Y_{2 q m}$$

, wobei $Q_{p,m0,m1}$ die Anzahl an digitalen Empfangsmodulen (20) ist, die an die Antenne mit Index *p (A$_{1,p}$)* angeschlossen sind, die weder mit der Abtastfrequenz *fe*$_{m0}$ noch mit der Abtastfrequenz *fe*$_{m1}$ auf dem ersten Unternetzwerk arbeiten, und $Q_{q,m0,m1}$ die Anzahl an digitalen Empfangsmodulen (20) ist, die an die Antenne mit Index *q (A$_{2,q}$)* angeschlossen sind, die weder mit der Abtastfrequenz *fe*$_{m0}$ noch mit der Abtastfrequenz *fe*$_{m1}$ auf dem zweiten Unternetzwerk arbeiten,

wobei $R_{m0m1}$ die Anzahl an digitalen Empfangsmodulen (20) ist, die mit der Abtastfrequenz *fe*$_{m0}$ oder *fe*$_{m1}$ in jedem Unternetzwerk arbeiten,

wobei *c$_1$* die Verstärkung des ersten Unternetzwerks in der Polarisation des einfallenden Signals darstellt,

wobei *c$_2$* die Verstärkung des zweiten Unternetzwerks in der Polarisation des einfallenden Signals darstellt,

**7.** Computerprogrammprodukt, umfassend ein Computerprogramm, umfassend Programmanweisungen, die auf einem computerlesbaren Medium mit einer Datenverarbeitungseinheit gespeichert sind, wobei das Computerprogramm angepasst ist, um ein Verfahren nach einem der Ansprüche 1 bis 6 durchzuführen, wenn das Computerprogramm auf der Datenverarbeitungseinheit durchgeführt wird.

**8.** Lesbarer Informationsträger, auf dem ein Computerprogramm umfassend Programmanweisungen gespeichert ist, wobei das Computerprogramm auf eine Datenverarbeitungseinheit geladen werden kann und angepasst ist, um die Durchführung eines Verfahrens nach einem der Ansprüche 1 bis 6 zu bewirken, wenn das Computerprogramm auf der Datenverarbeitungseinheit durchgeführt wird.

**9.** Interferometrisches Netzwerk mit Monopolarisation von zwei Unternetzwerken mit PAntennen

$(A_{1,1},...,A_{1,P},A_{2,1}...,A_{2,P})$, wobei P eine ganze Zahl größer als oder gleich wie 2 ist, wobei jeder Antenne $(A_{1,1}...,A_{1,P},A_{2,1}...,A_{2,P})$ eine analoge Empfangskette $(CR_{1,1}...,CR_{1,P},CR_{2,P})$ und ein oder mehrere digitale Empfangsmodule (20), wobei jedes digitale Empfangsmodul (20) ein Analog-Digital-Wandlermodul (22) und ein digitales Verarbeitungsmodul (26) umfasst, wobei jedes Analog-Digital-Wandlermodul (22) mit einer jeweiligen Abtastfrequenz assoziiert ist, wobei ein Analog-Digital-Wandlermodul (22) mit einer Abtastfrequenz assoziiert ist, wenn das Analog-Digital-Wandlermodul (22) geeignet ist, um eine Abtastung mit der Abtastfrequenz auszuführen, wobei jede Frequenz derart ist, dass die durch das Analog-Digital-Wandlermodul (22) ausgeführte Abtastung eine Abtastung ist, die das Shannon-Kriterium nicht erfüllt, und das interferometrische Netzwerk auch umfassend einen Rechner (28), wobei die Analog-Digital-Wandlermodule (22) geeignet sind, um den Schritt eines Abtastens eines Verfahrens nach einem der Ansprüche 1 bis 6 durchzuführen, und der Rechner (28) geeignet ist, um die Schritte Spektralanalyse, Auswahl, Verkettung und Bestimmung des Verfahrens durchzuführen.

## Claims

1. A method for identifying spurious signals due to aliasing in a wideband digital receiver, the method being implemented by means of an interferometric lattice formed of a first monopolarisation subnetwork with $P$ wideband antennas $(A_{1,1}...,A_{1,P})$ and a second monopolarisation subnetwork with P wideband antennas $(A_{2,1}...,A_{2,P})$, $P$ being an integer greater than or equal to 1, each antenna $(A_{1,1}...,A_{1,P},A_{2,1}...,A_{2,P})$ being followed by an analogue reception chain $(CR_{1,1}...,CR_{1,P},CR_{2,1}...,CR_{2,P})$ and one or more digital reception modules (20), the number of digital reception modules (20) being R on each subnetwork, distributed identically over the two subnetworks, said method comprising:

   - a step of sampling the signals delivered by the set of receiving chains $(CR_{1,1}...,CR_{1,P},CR_{2,1}...,CR_{2,P})$, using M different sampling frequencies $fe_m$, lower than the Nyquist-Shannon frequency, m ranging from 1 to $M$, and $M$ being an integer greater than or equal to 4, the number of digital reception modules (20) operating with a sampling frequency $fe_m$ being identical on each subnetwork and being equal to $R_m$, the number of digital reception modules (20) for an antenna $p$ $(A_{1,p})$ of the first subnetwork being $Q_p$, and the number of digital reception modules (20) for an antenna q $(A_{1,q})$ of the second subnetwork being $Q_q$, where

   $$R = \sum_{m=1}^{M} R_m = \sum_{p=1}^{P} Q_p$$, said sampling frequencies $N_m$ providing integer numbers of samples $Nm$ over a given duration $\Delta T$,

   - a step of spectral analysis by successive, synchronous discrete Fourier transforms allowing, on each of the $2R$ digital reception modules (20), a time/frequency representation called a grid, of temporal resolution $\Delta T$, and of frequency resolution $\Delta F$, each element of the grid being called a time/frequency cell and containing a complex quantity called a measurement,

   - a step of selecting a set of time/frequency domains, each time/frequency domain being perceived in the $R$ digital reception modules of the first subnetwork and in the $R$ digital reception modules (20) of the second subnetwork as $2R$ superimposable windows, each of the windows being composed of $L$ related time/frequency bins,

   - for each time/frequency domain, a step of concatenating the measurements taken in each of the $2R$ windows in the form of $R$ vectors of dimension $L \times 1$ for the first subnetwork, denoted $Y_{1pm}$, where p is the sensor index and m the sampling index, and in the form of $R$ vectors of dimension $L \times 1$ for the second subnetwork, denoted $Y_{2pm}$, where p is the sensor index and m the sampling index

   - for each time/frequency domain, a step of determining the presence of possible spurs consisting in choosing, among the following hypotheses, from the vectors of measurements obtained, the one maximising an approximation of the log-probability density of the R vectors $Y_{1pm}$ and the R vectors $Y_{2pm}$:

      • $H_0$: no spurious signal,
      • $H_{m0}$: presence of at least one spurious signal on sample $m_0$, where $m_0 \in [1, M]$, and
      • $H_{m0,m1}$: presence of at least one spurious signal on sample $m_0$ and one spurious signal on sample $m_1$, where $m_1 \in [1, M], m_0 \neq m_1)$ and $m_0 \in [1, M]$.

2. The method according to claim 1, wherein:

   the chosen hypothesis is:

      • $H_0$, if its approximate log-probability density is the one whose fit to its assumed Gaussian distribution is maximum,

• otherwise, $H_{m0}$, if its approximate log-probability density restricted to the channels without spurious signals is the one whose fit to its assumed Gaussian distribution is maximum,

• otherwise, $H_{m0,m1}$, if its approximate log-probability density restricted to the channels without spurious signals is the one whose fit to its assumed Gaussian distribution is maximum,

Otherwise, it is determined that more than two sampling frequencies have spurious signals.

3. The method according to claim 1 or 2, wherein the method comprises:

- the calculation of the energy collected by the first sub-network,
- the calculation of the energy collected by the second sub-network,
the determination step being implemented for the subnetwork collecting the maximum energy according to the monopolarisation algorithm.

4. The method according to claim 1 or 2, wherein the following criteria are calculated:

- for each sub-network, the monopolarisation criterion, and
- for the two sub-networks taken together, the bipolarisation criterion

5. The method according to claim 4, wherein the one or more calculated criteria are used to approximate the log-probability density of the measurements.

6. The method according to claim 5, wherein the approximate log-probability density is calculated according to the following approximations:

- For the hypothesis $H_0$, the quantity $\hat{\Gamma}_0$, also denoted $\tilde{\Gamma}_0$:

$\hat{\Gamma}_0 = \lambda_0$, where $\lambda_0$ is the maximum eigenvalue of the quadratic expression in $C_1, C_2$:

$$FQ_0 = \frac{1}{2\sigma^2}\left(\gamma_{1,0}^{var} + \gamma_{2,0}^{var}\right) + \frac{R}{2\sigma^2}\left(c_1^2\left(\gamma_{1,0}^{col} + \gamma_{2,0}^{mod}\right) + c_2^2\left(\gamma_{2,0}^{col} + \gamma_{2,0}^{mod}\right) + fq_0\right)$$

Where $fq_0$ is the quadratic expression:

$$fq_0 = -c_1^2 \sum_q \alpha_q \left\|Z_{2q}\right\|^2 - c_2^2 \sum_p \alpha_p \left\|Z_{1p}\right\|^2 + 2c_1 c_2 \sum_{p,q} \alpha_p \alpha_q \left|Z_{1p}^* Z_{2q}\right|$$

which can be interpreted as a bipolarisation criterion of modulus equality and collinearity, where

$$\gamma_{10}^{var}, \; \gamma_{10}^{mod}, \gamma_{10}^{col}, \;\; \gamma_{20}^{var}, \; \gamma_{20}^{mod}, \gamma_{20}^{col}$$

are the monopolarisation criteria of non-variability, modulus equality and collinearity respectively for the subnetworks for the "no spurious signal present" hypothesis;
where $\alpha_p$ is the proportion of digital receiver modules (20) operating with the p-index antenna on the first subnetwork,
$\alpha_q$ is the proportion of digital receiver modules (20) operating with the q-index antenna $(A_{2,q})$ on the second subnetwork,
where $Z_{1p}$ is the average of the vectors $Y_{1pm}$ over all the p-antenna samples
$(A_{1,p})$ of the first subnetwork 1:

$$Z_p = \frac{1}{Q_p} \sum_m Y_{1pm}$$

and where $Z_{2q}$ is the average of the vectors $Y_{2qm}$ over all the samplings of antenna q in the second subnetwork:

$$Z_q = \frac{1}{Q_q} \sum_m Y_{2qm},$$

,

where $Q_p$ is the number of digital reception modules (20) operating with the p-index antenna $p$ $(A_{1,p})$ on the first subnetwork, and $Q_p$ is the number of digital reception modules (20) operating with the p-index antenna $(A_{1,p})$ on the first subnetwork,
where $c_1$ is the gain of the first subnetwork in the incident signal polarisation,
where $c_2$ is the gain of the second subnetwork in the incident signal polarisation,

- for the assumptions $H_{m0}$, the quantities

$$\hat{f}_{m_0} = 2R_{m_0}L \, ln\left(\frac{2\pi\sigma^2}{c}\right) + \lambda_{m_0},$$

, where $R_{m0}$ is the number of digital receiver modules (20) operating with the frequency $f_{m0}$ in each of the two subnetworks, and where $\lambda_{m0}$ represents the approximate log-density restricted to channels without spurious signals; it is equal to the maximum eigenvalue of the quadratic expression in $c_1, c_2$:

$$FQ_{m_0} = \frac{1}{2\sigma^2}\left(\gamma_{1,m_0}^{var} + \gamma_{2,m_0}^{var}\right)$$
$$+ \frac{R - R_{m_0}}{2\sigma^2}\left(c_1^2\left(\gamma_{1,m_0}^{col} + \gamma_{1,m_0}^{mod}\right) + c_2^2\left(\gamma_{2,m_0}^{col} + \gamma_{2,m_0}^{mod}\right) + fq_{m_0}\right)$$

Where $fq_{m0}$ is the quadratic expression:

$$fq_{m_0} = -c_1^2 \sum_q \alpha_{qm_0} \left\|Z_{2qm_0}\right\|^2 - c_2^2 \sum_p \alpha_{pm_0} \left\|Z_{1pm_0}\right\|^2$$
$$+ 2c_1c_2 \sum_{p,q} \alpha_{pm_0}\alpha_{qm_0} \left|Z_{1pm_0}^* Z_{2qm_0}\right|$$

which can be interpreted as a bipolarisation criterion of modulus equality and collinearity,
Where

$$\gamma_{1m_0}^{var}, \gamma_{1m_0}^{mod}, \gamma_{1m_0}^{col}, \gamma_{2m_0}^{var}, \gamma_{2m_0}^{mod}, \gamma_{2m_0}^{col}$$

are the monopolarisation criteria of non-variability, modulus equality and collinearity, for the first and second subnetwork respectively, for the "one spurious sample frequency" hypothesis,
Where $\alpha_{pm0}$ is the proportion of digital reception modules (20) attached to the p-index antenna $(A_{1,p})$ on the first subnetwork, which do not operate with the frequency $fe_{m0}$ and $\alpha_{qm0}$ is the proportion of digital reception modules (20) attached to the q-index antenna $(A_{2,q})$ on the second subnetwork, which do not operate with the frequency $fe_{m0}$,
Where

$$Z_{1pm_0} = \frac{1}{Q_{pm_0}} \sum_{m \neq m_0} Y_{1pm} \quad \text{and} \quad Z_{2pm_0} = \frac{1}{Q_{pm_0}} \sum_{m \neq m_0} Y_{2pm}$$

,

Where $Q_{p,m0}$ is the proportion of digital reception modules (20) attached to the p-index antenna $(A_{1,p})$ on the first subnetwork, which do not operate with the frequency $fe_{m0}$ and $Q_{q,m0}$ is the proportion of digital reception modules (20) attached to the q-index antenna $(A_{1,p})$ on the second subnetwork, which do not operate with the frequency $fe_{m0}$,

Where $R_{m0}$ is the number of digital receiver modules (20) operating with the sampling frequency $fe_{m0}$ on each subnetwork,

where $c_1$ is the gain of the first subnetwork in the incident signal polarisation, where $c_2$ is the gain of the second subnetwork in the incident signal polarisation,

- for the hypotheses $H_{m0,m1}$, the quantities

$$\hat{r}_{m_0 m_1} = \ln \tilde{p}_{m_0 m_1} = 2R_{m_0 m_1} L \ln\left(\frac{2\pi\sigma^2}{C}\right) + \lambda_{m_0 m_1}$$

where $R_{m0m1}$ is the number of digital receiver modules operating with the frequency $fe_{m0}$ or with the frequency $fe_{m1}$ in each of the two subnetworks, and where $fe_{m1}$ is the approximate log-density restricted to the channels without spurious signals and is equal to the maximum eigenvalue of the quadratic expression:

$$FQ_{m_0 m_1} = \frac{1}{2\sigma^2}\left(\gamma^{var}_{1,m_0 m_1} + \gamma^{var}_{2,m_0 m_1}\right)$$
$$+ \frac{R - R_{m_0 m_1}}{2\sigma^2}\left(c_1^2\left(\gamma^{col}_{1,m_0 m_1} + \gamma^{mod}_{1,m_0 m_1}\right) + c_2^2\left(\gamma^{col}_{2,m_0 m_1} + \gamma^{mod}_{2,m_0 m_1}\right)\right)$$
$$+ fq_{m_0 m_1})$$

Where $fq_{m0m1}$ is the quadratic expression:

$$fq_{m_0 m_1} = -c_1^2 \sum_q \alpha_{q m_0 m_1} \left\|Z_{2q m_0 m_1}\right\|^2 - c_2^2 \sum_p \alpha_{p m_0 m_1} \left\|Z_{1p m_0 m_1}\right\|^2$$
$$+ 2c_1 c_2 \sum_{p,q} \alpha_{p m_0 m_1} \alpha_{q m_0 m_1} \left|Z^*_{1p m_0 m_1} Z_{2q m_0 m_1}\right|$$

which can be interpreted as a bipolarisation criterion of modulus equality and collinearity,

where

$$\gamma^{var}_{1 m_0 m_1}, \quad \gamma^{mod}_{1 m_0 m_1}, \quad \gamma^{col}_{1 m_0 m_1}, \quad \gamma^{var}_{2 m_0 m_1}, \quad \gamma^{mod}_{2 m_0 m_1}, \quad \gamma^{col}_{2 m_0 m_1}$$

are the monopolarisation criteria of non-variability, modulus equality and collinearity respectively for the sub-networks for the hypotheses with two spurious sampling frequencies,

where $\alpha_{pm0m1}$ is the proportion of digital receiver modules (20) attached to the p-index antenna of the first subnetwork that operate at neither the $fe_{m0}$, nor the $fe_{m1}$ sampling frequency, and

where $\alpha_{qm0m1}$ is the proportion of digital receiver modules (20) attached to the q-index antenna of the second subnetwork that operate at neither the $fe_{m0}$, nor the $fe_{m1}$ sampling frequency,

where $Z_{1pm_0m_1} = \frac{1}{Q_{pm_0,m_1}} \sum_{m \neq m_0,m_1} Y_{1pm}$ and

$$Z_{2pm_0pm_1} = \frac{1}{Q_{qm_0,m_1}} \sum_{m \neq m_0,m_1} Y_{2qm},$$

where $Q_{p,m0,m1}$ is the number of digital receiver modules (20) attached to the p-index antenna $(A_{1,p})$ which operate at neither the $fe_{m0}$ nor the $fe_{m1}$ sampling frequency on the first subnetwork, and $Q_{q,m0,m1}$ s the number of digital receiver modules (20) attached to the q-index antenna $(A_{2,q})$ which operate at neither the $fe_{m0}$ nor the $fe_{m1}$ sampling frequency on the second subnetwork,

Where $R_{m0m1}$ is the number of digital receiver modules (20) operating with the sampling frequency $fe_{m0}$ or $fe_{m1}$ on each subnetwork,

where $c_1$ is the gain of the first subnetwork in the incident signal polarisation, where $c_2$ is the gain of the second subnetwork in the incident signal polarisation,

7. - A computer program product comprising a computer program comprising program instructions saved on a medium readable by a computer comprising a data processing unit, the computer program being adapted to implement a method according to any of claims 1 to 6 when the computer program is implemented on the data processing unit.

8. - A readable information medium having stored thereon a computer program comprising program instructions, the computer program being loadable onto a data processing unit and adapted to cause a method according to any of claims 1 to 6 to be implemented when the computer program is implemented on the data processing unit.

9. An interferometric network with two monopolarisation subnetworks with P antennas $(A_{1,1}...,A_{1,P},A_{2,1}...,A_{2,P})$, P being an integer greater than or equal to 2, each antenna $(A_{1,1},...,A_{1,P},A_{2,1}...,A_{2,P})$ being followed by an analogue reception chain $(CR_{1,1}...,CR_{1,P},CR_{2,1}...,CR_{2,P})$ and one or more digital reception modules (20), each digital reception module comprising an analogue-to-digital conversion module (22) and a digital processing module (26), each analogue-to-digital conversion module (22) being associated with a respective sampling frequency, an analogue-to-digital conversion module (22) being associated with a sampling frequency when the analog-to-digital conversion module (22) is suitable for sampling at the sampling frequency, each frequency being such that the sampling performed by the analogue-to-digital conversion module (22) is a sampling that does not meet the Shannon criterion, and the interferometric network further comprising a computer (28), the analog-to-digital conversion module (22) being suitable for implementing the sampling step of a method according to any one of claims 1 to 6, and the computer (28) being suitable for implementing the spectral analysis, selection, concatenation and determination steps of said method.

Spectre (seule
l'amplitude est
représentée)

axe des fréquences

0          $f_e$          $2f_e$          $3f_e$   $f_1$          $4f_e$   $f_2$

première zone
de Nyquist

bande de réception

## FIG.1

EP 3 672 088 B1

FIG.2

Grille temps-fréquence G $_{p,m}$

i indice de temps

Case temps-fréquence i,j

j indice de fréquence

# FIG.3

Grille temps-fréquence G $_{p,m}$

i indice de temps

Signal réparti dans plusieurs cases temps-fréquence contiguës

j indice de fréquence

# FIG.4

EP 3 672 088 B1

Grille temps-fréquence $G_{p,m_2}$

i indice de temps

j indice de fréquence

$\vdots \quad \vdots$

Grille temps-fréquence $G_{p,m_1}$

i indice de temps

j indice de fréquence

Spectre (seule
l'amplitude est
représentée)

axe des
fréquences

$0$      $f_{e,m_1}$   $f_{e,m_2}$      $2f_{e,m_1}$   $2f_{e,m_2}$     $f$

bande de réception

premières zones
de Nyquist

<u>FIG.5</u>

FIG.6

EP 3 672 088 B1

Antenne  Antenne  Antenne  Antenne

CAN  CAN  CAN  CAN

Analyse spectrale  Analyse spectrale  Analyse spectrale  Analyse spectrale

Extraction des fenêtres
Vectorisation  Extraction des fenêtres
Vectorisation  Extraction des fenêtres
Vectorisation  Extraction des fenêtres
Vectorisation

Sur chaque
zone d'analyse

Calcul des critères partiels de variabilité par rapport à la moyenne,
d'égalité des modules, de colinéarité

Pondération des critères partiels

Décision

Elimination des fréquences d'échantillonnage parasitées

Détection sur les fréquences d'échantillonnage non parasitées

FIG.7

## FIG.8

Grille temps–fréquence G $_{1p,m}$

Grille temps–fréquence G $_{2p,m}$

i indice de temps

Case temps–fréquence i,j

j indice de fréquence

i indice de temps

Case temps–fréquence i,j

j indice de fréquence

# FIG.9

Grille temps-fréquence G $_{1p,m}$    Grille temps-fréquence G $_{2p,m}$

i indice de temps

Signal réparti dans plusieurs cases temps-fréquence contiguës

j indice de fréquence

i indice de temps

Signal réparti dans plusieurs cases temps-fréquence contiguës

j indice de fréquence

# FIG.10

Grille temps-fréquence $G_{1p,m_2}$

Grille temps-fréquence $G_{2p,m_2}$

i indice de temps

i indice de temps

j indice de fréquence

j indice de fréquence

Spectre (seule l'amplitude est représentée)

axe des fréquences

$f_{e,m_1}$   $f_{e,m_2}$   $2f_{e,m_1}$   $2f_{e,m_2}$   $f$

0

bande de réception

premières zones de Nyquist

Grille temps-fréquence $G_{1p,m_1}$

Grille temps-fréquence $G_{2p,m_1}$

i indice de temps

i indice de temps

j indice de fréquence

j indice de fréquence

FIG.11

FIG.12

**EP 3 672 088 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2280497 A2